(19) Europäisches Patentamt
European Patent Office
Office européen des brevets

(11) EP 4 793 878 A1

(12) **EUROPEAN PATENT APPLICATION**
published in accordance with Art. 153(4) EPC

(43) Date of publication:
**19.08.2026 Bulletin 2026/34**

(21) Application number: **24879991.8**

(22) Date of filing: **26.09.2024**

(51) International Patent Classification (IPC):
***G06T 3/4053** (2024.01)* ***H04N 21/45** (2011.01)*
***G06N 3/08** (2023.01)*

(52) Cooperative Patent Classification (CPC):
**G06V 10/82; G06N 3/08; G06T 3/40; G06T 3/4053; G06T 5/50; G06T 5/60; G06T 5/70; G06T 7/0002; G06V 20/41; H04N 21/45;** G06T 2207/10016; G06T 2207/20081; G06T 2207/20084; G06T 2207/30168

(86) International application number:
**PCT/KR2024/014610**

(87) International publication number:
**WO 2025/084652 (24.04.2025 Gazette 2025/17)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **18.10.2023 KR 20230139892**

(71) Applicant: **Samsung Electronics Co., Ltd.**
**Suwon-si, Gyeonggi-do 16677 (KR)**

(72) Inventors:
- **LEE, Hyunseung**
**Suwon-si, Gyeonggi-do 16677 (KR)**
- **KIM, Donghyun**
**Suwon-si, Gyeonggi-do 16677 (KR)**
- **CHOI, Kyuha**
**Suwon-si, Gyeonggi-do 16677 (KR)**
- **MOON, Youngsu**
**Suwon-si, Gyeonggi-do 16677 (KR)**
- **JEONG, Younghoon**
**Suwon-si, Gyeonggi-do 16677 (KR)**

(74) Representative: **Gulde & Partner**
**Patent- und Rechtsanwaltskanzlei mbB**
**Berliner Freiheit 2**
**10785 Berlin (DE)**

# (54) IMAGE PROCESSING DEVICE AND OPERATION METHOD THEREFOR

(57) Provided are an image processing device and an operating method of the same. The image processing device includes a memory storing one or more instructions, and at least one processor including processing circuitry, and memory storing one or more instructions that, when executed by the at least one processor individually or collectively, cause the image processing device to obtain a neural network model corresponding to a quality of an input image and viewing information related to the input image. The at least one processor is configured to generate training data, based on the quality of the input image and the viewing information. The at least one processor is configured to train the neural network model by using the training data. The at least one processor is configured to obtain an image quality processed output image from the input image, based on the trained neural network model.

FIG. 1

INPUT IMAGE
100
OUTPUT IMAGE
110
120

EP 4 793 878 A1

## Description

### **Technical** Field

The disclosure relates to an image processing device and an operating method of the same, and more particularly, to an image processing device for outputting a high-quality image by performing image quality processing on a low-quality image.

### Background Art

With the advancement of deep learning technology, various types of learning-based upscaling methods have been developed. The learning-based upscaling method exhibits excellent performance when quality characteristics of a training image and quality characteristics of an input image actually processed are similar. However, when characteristics of an image to be processed are different from image quality assumed during training, image quality performance significantly deteriorates.

In order to resolve such a problem, on-device learning research has been undertaken to process and adapt an artificial intelligence (AI) model to input data. In the field of on-device learning research, a paper (ZSSR, CVPR 2018, Zero-Shot Super-Resolution using Deep Internal Learning, hereinafter referred to as "Paper 1") on image processing and image quality improvement was recently published.

Paper 1, which is titled Zero-Shot Super Resolution (ZSSR), describes a method which includes constructing a database (DB) by using self-input images according to deterioration characteristics of input images and enlarging the images by using a model trained by using the DB. As ZSSR generates a new DB from the beginning according to an input image each time and uses the DB to train a model, learning complexity is high and it is difficult to apply the ZSSR to videos with severe changes in image quality.

In order to improve these drawbacks, another paper (MetaSR, ECCV 2021, Fast Adaptation to Super-Resolution Networks via Meta-Learning, hereinafter referred to as "Paper 2") was published. Paper 2 describes a method which includes learning an initial meta model from an external DB and finding a model that matches characteristics of an input image through transfer training to reduce training computation complexity of the ZSSR. However, as the method in Paper 2 uses only one meta model, there are performance limitations in including all the characteristics of various input images in one metal model, and in an environment in which low-capacity networks such as edge devices are used, this limitation of the meta model becomes a factor limiting performance of on-device learning.

In Paper 1 and Paper 2, the methods include training by constructing a training DB by referring to an input image, and as such, image quality improvement performance may be obtained when a still image includes a building with repetitive outline characteristics or a periodic gesture. However, in reality, in addition to images assumed in a related art method, there are many images that have deteriorated during shooting, transmission, and compression processes, and these images have lost highfrequency components that are hints for image quality restoration, and it is difficult to find repeated components within the images. Therefore, there are limitations in constructing a training DB by only using images thereof, which results in poor performance.

In addition, as the related art method has been developed to improve image quality of still images, it is difficult to apply the related art method to videos. Models trained independently for each image may have differences in restoration performance due to differences in a degree of convergence of training and characteristics of a training DB. As such, when an independent model is applied to each frame, clarity of the image also changes each time, which may cause flicker distortion, which is a phenomenon of temporal image quality unevenness.

## DISCLOSURE OF INVENTION

### Solution to Problem

According to an aspect of the disclosure, there is provided an image processing device including: at least one processor including processing circuitry, and memory storing one or more instructions.

According to an aspect of the disclosure, when executed by the at least one processor individually or collectively, cause the image processing device to obtain a neural network model corresponding to a quality of a first image and viewing information related to the first image.

According to an aspect of the disclosure, when executed by the at least one processor individually or collectively, cause the image processing device to generate training data, based on the quality of the first image and the viewing information.

According to an aspect of the disclosure, when executed by the at least one processor individually or collectively, cause the image processing device to obtain a trained neural network model by training the neural network model based on

the training data

According to an aspect of the disclosure, when executed by the at least one processor individually or collectively, cause the image processing device to obtain a second image based on the first image by performing a first image quality processing operation on the first image based on the trained neural network model.

According to an aspect of the disclosure, there is provided an operating method of an image processing device, the operating method including: obtaining a neural network model corresponding to a quality of a first image and viewing information related to the first image; generating training data, based on the quality of the first image and the viewing information; obtain a trained neural network model by training the neural network model based on the training data; and obtaining a second image based on the first image by performing a first image quality processing operation on the first image based on the trained neural network model.

## BRIEF DESCRIPTION OF DRAWINGS

FIG. 1 is a diagram illustrating an image quality processed image output by an image processing device, according to an embodiment of the disclosure.

FIG. 2 is a flowchart of a method by which an image processing device performs image quality processing on an input image, according to an embodiment of the disclosure.

FIG. 3 is an internal block diagram of an image processing device according to an embodiment of the disclosure.

FIG. 4 illustrates a structure of a first neural network according to an embodiment of the disclosure.

FIG. 5 is a graph showing quality information of various images, according to an embodiment of the disclosure.

FIG. 6 illustrates an example of a type of viewing information, according to an embodiment of the disclosure.

FIGS. 7A, 7B and 7C illustrates combination examples of viewing information, according to an embodiment of the disclosure.

FIG. 8 is a diagram for describing an operation of a model training unit, according to an embodiment of the disclosure.

FIG. 9A is a diagram for describing an example of an operation in which a training database (DB) generator obtains training images related to an input image, according to an embodiment of the disclosure.

FIG. 9B is a diagram for describing an example of an operation in which a training DB generator obtains training images related to an input image, according to an embodiment of the disclosure.

FIG. 10A is a diagram for describing an example of an operation in which a training DB generator generates training data, according to an embodiment of the disclosure.

FIG. 10B is a diagram for describing an example of an operation in which a training DB generator generates training data, according to an embodiment of the disclosure.

FIG. 11 is a diagram for describing a method of reflecting, on a training image, degradation occurring in a compression procedure according to an embodiment of the disclosure.

FIG. 12 is a graph for describing an example of an operation in which a meta model obtainer obtains a meta model by using a reference model, according to an embodiment of the disclosure.

FIG. 13 is a graph for describing an example of an operation in which a metal model obtainer obtains a meta model by using a reference model, according to an embodiment of the disclosure.

FIG. 14 is a diagram for describing an operation of a model training unit, according to an embodiment of the disclosure.

FIG. 15 is a block diagram of a configuration of an image processing device according to an embodiment of the disclosure.

FIG. 16 is a block diagram illustrating a configuration of an image processing device according to an embodiment of the disclosure.

## MODE FOR THE INVENTION

Hereinafter, an embodiment of the will now be described more fully with reference to the accompanying drawings for one of ordinary skill in the art to be able to perform the embodiment without any difficulty. The disclosure may, however, be embodied in many different forms and should not be construed as being limited to the embodiment set forth herein.

Throughout the disclosure, the expression "at least one of a, b or c" indicates only a, only b, only c, both a and b, both a and c, both b and c, all of a, b, and c, or variations thereof.

Although the terms used in embodiments of the disclosure are selected from among common terms that are currently widely used in consideration of their functions in the present disclosure, the terms may indicate various other terms according the intention of one of ordinary skill in the art, a precedent, or the advent of new technology. Therefore, the terms used in the disclosure should not be interpreted based on only their names but have to be defined based on the meaning of the terms together with the descriptions throughout the specification.

The terms used in the disclosure are just for the purpose of describing particular embodiments of the disclosure and are not intended to limit the scope of the disclosure.

Throughout the specification, it will also be understood that when an element is referred to as being "connected to" or "coupled with" another element, it can be directly connected to or coupled with the other element, or it can be electrically connected to or coupled with the other element by having an intervening element interposed therebetween.

The use of the terms "a" and "an" and "the" and similar referents in the context of describing the disclosure, especially in the context of the following claims, are to be construed to cover both the singular and the plural. Also, the steps of all methods described in the disclosure can be performed in any suitable order unless otherwise indicated herein or otherwise clearly contradicted by context. The disclosure is not limited by the steps described herein.

The expression "some embodiments" or "an embodiment" recited in the specification does not necessarily indicate the same embodiment.

Some embodiments of the disclosure may be described in terms of functional block elements and various processing operations. Some or all of such functional blocks may be implemented by any number of hardware and/or software elements configured to perform the specified functions. Some of the functional block elements may include terms such as "er (or)", "unit", "module", etc. For example, the functional blocks of the disclosure may be implemented by one or more microprocessors or may be implemented by circuit elements for predefined functions. Also, for example, the functional blocks of the disclosure may be implemented with any programming or various scripting languages. The functional blocks may be implemented in algorithms that are executed on one or more processors. Also, the disclosure may employ any number of techniques according to the related art for electronics configuration, signal processing and/or data processing, and the like. The terms "mechanism", "means" and "element" are used broadly and are not limited to mechanical or physical embodiments.

Furthermore, connecting lines or connectors between elements shown in drawings are intended to represent exemplary functional connection and/or physical or logical connection between the elements. It should be noted that many alternative or additional functional connections, physical connections or logical connections may be present in a practical device.

In addition, as used in the specification, the terms such as "er (or)", "unit", "module", etc., indicate a unit that performs at least one function or operation, which may be implemented as hardware or software or a combination of hardware and software.

In the specification, the processor may include various processing circuitry and/or multiple processors. For example, as used herein, including the claims, the term "processor" may include various processing circuitry, including at least one processor, wherein one or more of at least one processor, individually and/or collectively in a distributed manner, may be configured to perform various functions described herein. As used herein, when "a processor", "at least one processor", and "one or more processors" are described as being configured to perform numerous functions, these terms cover situations, for example and without limitation, in which one processor performs some of recited functions and another processor(s) performs other of recited functions, and also situations in which a single processor may perform all recited functions. Additionally, the at least one processor may include a combination of processors performing various of the recited /disclosed functions, e.g., in a distributed manner. At least one processor may execute program instructions to achieve or perform various functions.

Also, in the specification, the term "user" indicates a person who uses an image processing device, and may include a customer, an evaluator, a viewer, a manger, or a service engineer. Also, in the specification, the term "manufacturer" may indicate a manufacture that manufactures an image processing device and/or elements included in the image processing device.

In one or more embodiments of the disclosure, an "image" may indicate a still image, a picture, a frame, a moving picture including a plurality of sequential still images, or a video. In one or more embodiments of the disclosure, an image may indicate a patch cropped from the image and having meaningful information.

In one or more embodiments of the disclosure, a 'neural network' refers to a representative example of an artificial intelligence model simulating neurons of brain. However, the disclosure is not limited to a neural network model using a particular algorithm. The neural network may be referred to as a deep neural network.

In one or more embodiments of the disclosure, a 'parameter' refers to a value used in a calculation process of each layer of a neural network, and may be used to, for example, apply an input value to a preset formula. The parameter is a value set as a result of training, and may be refined by using separate training data when necessary.

Hereinafter, the disclosure will now be described in detail with reference to accompanying drawings.

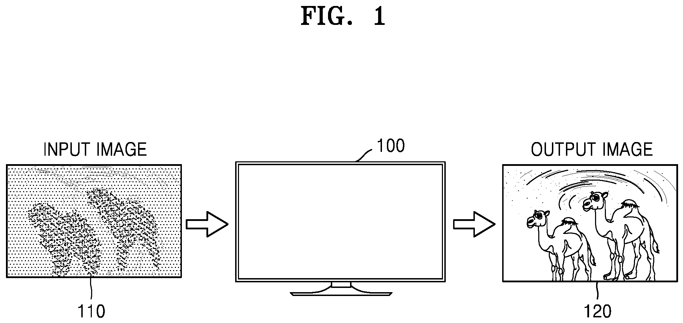

FIG. 1 is a diagram illustrating an image quality processed image output by an image processing device, according to an embodiment of the disclosure.

Referring to FIG. 1, an image processing device 100 according to an embodiment of the disclosure may be an electronic device configured to process an input image and output an output image. The image processing device 100 according to an embodiment of the disclosure may be implemented in various forms including a display. For example, the image processing device 100 may be implemented in various electronic devices such as a television (TV), a mobile phone,

a tablet personal computer (PC), a digital camera, a camcorder, a laptop computer, a desktop, an electronic-book terminal, a terminal for digital broadcasting, a personal digital assistant (PDA), a portable multimedia player (PMP), a navigation, an MP3 player, a wearable device, or the like.

The image processing device 100 may output a video. The video may include a plurality of frames. The video may include, but is not limited to, TV programs provided by content providers, or items such as various movies or dramas via video on demand (VOD) services. The content providers may include, but is not limited to, a terrestrial broadcast station, a cable broadcast station, an over the top (OTT) service provider, or an Internet protocol (IP) TV service provider, which provides various pieces of content including the video to a customer. The video is transmitted after being captured and compressed, and then is reproduced and output by the image processing device 100. Due to a limit in physical characteristics of a device used to capture the video and a limited bandwidth, information is lost, and thus, distortion may occur in an image. Due to the distortion of the image, a quality of the image may deteriorate.

The image processing device 100 according to an embodiment of the disclosure may perform image quality processing on an image. For example, the image processing device 100 may obtain an output image 120 by performing image quality processing on an input image 110. For example, the image processing device 100 may obtain a high-resolution (or high quality) output image by upscaling a low-resolution (or low quality) input image, by using an image quality processing model.

The image quality processing model according to an embodiment of the disclosure may include a neural network model configured to implement an upscaling algorithm capable of converting a low-resolution image into a high-resolution image. For example, the image quality processing model may include a neural network model trained, from a neural network model obtained based on a quality of the input image 110, by using training data corresponding to the input image 110.

The image processing device 100 according to an embodiment of the disclosure may train in real time an image quality processing model embedded in the image processing device 100, on the device itself. An image quality processing model according to an embodiment of the disclosure may be referred to as a meta model. The meta model may indicate a neural network model capable of fast learning or generalizing new data. The meta model may be pre-trained by using training data corresponding to various pieces of quality information stored in a cloud server, and then may be used by the image processing device 100 to process an image quality of an actual image. The image processing device 100 may decrease a domain gap problem by training the meta model by using an actual image as training data. As the meta model is a neural network pre-trained with respect to various image quality degradation scenarios, a training procedure for adjusting a parameter of the meta model, based on the input image 110, may be simplified. For example, the number of repetitive calculations in a gradient descent algorithm for adjusting the parameter of the meta model may be decreased. The image processing device 100 may generate, via on device learning, an adaptive meta model that is adaptive to the input image 110.

The image processing device 100 according to an embodiment of the disclosure may train a meta model, based on an image quality of the input image 110 and viewing information related to the input image 110. According to an embodiment, the viewing information may be referred to as watching information. The image quality of the input image 110 may indicate a degree of degradation of an image which is analyzed by an image quality analyzer. The viewing information related to the input image 110 may include auxiliary information related to the input image 110 other than the degree of degradation of the image which is analyzed by the image quality analyzer. For example, the auxiliary information, may include, but is not limited to, an attribute of the input image, a characteristic of the input image, or a watching environment when the input image 110 is watched. For example, the viewing information related to the input image 110 may include, but is not limited to, compression information of the input image 110, a type of content, a genre of the content, etc. Also, the viewing information related to the input image 110 may include, but is not limited to, an ambient environment of a device, a viewing distance between a user and the device, user personal information, etc. According to an embodiment, the viewing distance may be referred to as watching distance.

For example, the image processing device 100 may generate training data of the meta model, based on the image quality of the input image 110 and the viewing information related to the input image 110. For example, the image processing device 100 may generate (or obtain) the meta model, based on the image quality of the input image 110 and the viewing information related to the input image 110.

The image processing device 100 according to an embodiment of the disclosure may train the meta model, based on the image quality of the input image 110 and the viewing information related to the input image 110. Accordingly, the image processing device 100 may obtain the meta model in which a parameter is optimized according to the image quality of the input image 110 and the watching environment of the user. The image processing device 100 may generate the high-resolution output image 120, based on the meta model having the parameter optimized according to the image quality of the input image 110 and the watching environment of the user.

Hereinafter, a method by which the image processing device 100 trains a meta model by considering an image quality of the input image 110 and viewing information related to the input image 110 will now be described in detail.

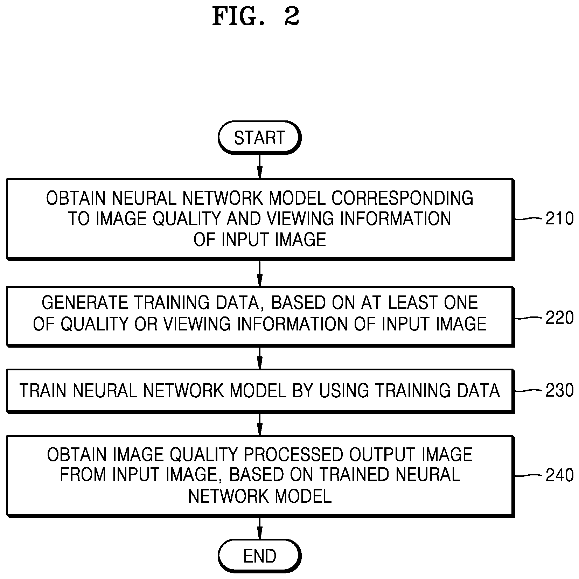

FIG. 2 is a flowchart of a method by which an image processing device performs image quality processing on an

input image, according to an embodiment of the disclosure.

Referring to FIG. 2, in operation 210, the method may include obtaining a neural network model corresponding to an image quality of an input image and viewing information related to the input image. For example, the image processing device 100 according to an embodiment of the disclosure may obtain a neural network model corresponding to an image quality of an input image and viewing information related to the input image.

The image processing device 100 according to an embodiment of the disclosure may determine an image quality or quality of the input image. An image quality or quality of an image may indicate a degree of degradation of the image. The image processing device 100 may evaluate or determine at least one of a compression degradation of an image, a blur level, a noise level, or a resolution of the image.

The image processing device 100 may analyze or evaluate the image quality of the input image by using an image quality analyzer (or a quality analysis unit). The image quality analyzer may include a first neural network trained to analyze or evaluate an image quality of an input image. For example, the first neural network may be a neural network trained to evaluate an image quality of an image or a video, by using an image quality assessment (IQA) technique, a video quality assessment (VQA) technique, etc.

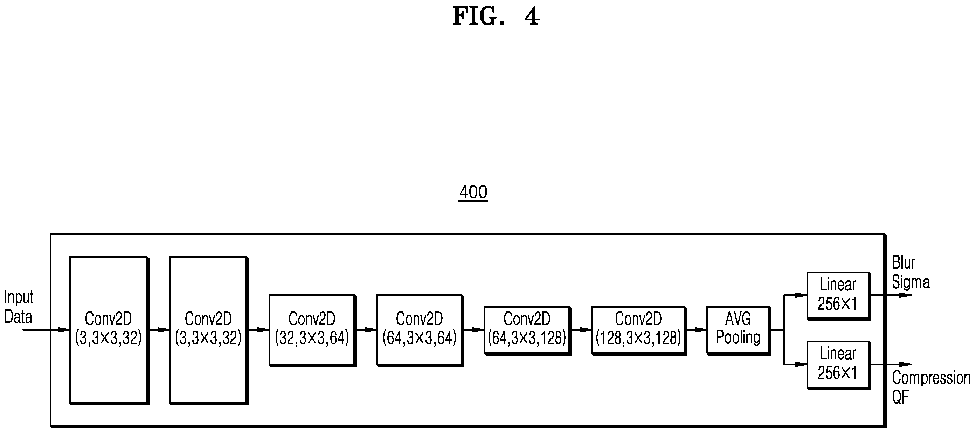

For example, the image processing device 100 may obtain, as quality information, a kernel sigma value indicating a blur quality of an image and a quality factor (QF) value indicating a compression quality of the image, by using the first neural network. However, the disclosure is not limited thereto. This will be described in detail with reference to FIG. 4.

In an example case in which the input image is any one of a plurality of frame images included in video content, the image processing device 100 according to an embodiment of the disclosure may obtain quality information of the input image, based on quality information of each of the plurality of frame images.

The image processing device 100 according to an embodiment of the disclosure may obtain the viewing information related to the input image. According to an embodiment of the disclosure, the viewing information may include auxiliary information obtained by the image processing device 100, as well as the quality information of the input image determined by using the image quality analyzer. The viewing information according to an embodiment of the disclosure may include compression information of an image, a type of content according to an image reception scheme, a genre of the content, an ambient environment of the image processing device 100, a viewing distance between the image processing device 100 and a user, user information, etc. The type of content and/or the genre of the content may be referred to as a characteristic of the content.

According to an embodiment of the disclosure, the image processing device 100 may obtain compression information of an image via compressed images having different resolutions, different bitrates, or different encoding information. The compression information of the image may include resolution information, bitrate information, and encoding information, which are of a compressed image. The image processing device 100 may determine whether the input image is a high-quality image or a low-quality image, according to the compression information of the image.

According to an embodiment of the disclosure, the image processing device 100 may determine or identify a type of content, based on an external device connected to the image processing device 100. The type of content may include streaming content, broadcasting content, a Bluray disc, a console game, or the like, according to the image reception scheme. For example, the streaming content may be received from a streaming server via a network, and the broadcasting content may be received from a broadcasting station via a set-top box or radio frequency (RF). The Bluray disc refers to media content received via a Bluray disc player, and the console game refers to graphic content received via a gaming device or a PC.

According to an embodiment of the disclosure, the image processing device 100 may identify a genre of content. For example, the image processing device 100 may identify the genre of content via metadata or text information of a program guide with respect to the content received from a broadcasting station, an OTT service provider, or the like. For example, the image processing device 100 may identify the genre of content by identifying an attribute of a currently-executed program, or a category, an attribute, or a type of a currently-executed application. The genre of content may include news, sports, a drama, a documentary, a variety show, a game, a movie, a video call, or the like.

According to an embodiment of the disclosure, the image processing device 100 may obtain ambient brightness information of the image processing device 100, via an illuminance sensor. The image processing device 100 may obtain the brightness information around the image processing device 100 via information about a viewing time and/or a viewing area. The ambient brightness information, the viewing time, and the viewing area may indicate an ambient environment. According to an embodiment of the disclosure, the image processing device 100 may obtain the viewing distance between the image processing device 100 and a user via a distance sensor. The image processing device 100 according to an embodiment of the disclosure may obtain the user information, based on an account, identification (ID), identification information, etc., which are registered by the user.

According to an embodiment of the disclosure, the image processing device 100 may obtain combination information in which one or more pieces of viewing information are combined. For example, the image processing device 100 may train the neural network model, based on the combination information in which one or more pieces of viewing information from among the compression information of the image, the type of content according to the image reception

scheme, the genre of content, the ambient environment of the image processing device 100, the viewing distance between the image processing device 100 and a user, and the user information are combined.

The image processing device 100 according to an embodiment of the disclosure may obtain a meta model by using a plurality of reference models or anchor models. The reference model may indicate an image quality processing model pre-trained by using a training image. The reference model may be stored in a memory of the image processing device 100, an external database (DB), or the like.

According to an embodiment of the disclosure, the plurality of reference models may include at least one of an image quality processing model trained based on training images having different quality values, an image quality processing model trained based on training images corresponding to different types of content, or an image quality processing model trained based on training images corresponding to different genres of content.

The image processing device 100 according to an embodiment of the disclosure may compare a quality value of training images used to train each of the plurality of reference models with a quality value of the input image, and thus, may identify a reference model trained based on training images having a similar quality of a quality of the input image.

The image processing device 100 according to an embodiment of the disclosure may compare a content characteristic of training images used to train each of the plurality of reference models with a content characteristic of the input image, and thus, may obtain a reference model trained based on training images corresponding to content matching the content characteristic of the input image. That the content characteristic matches may include that a type of content or a genre of content may be identical to or similar with each other. In an example case in which content of the input image is streaming content, the image processing device 100 may obtain a reference model trained based on training images corresponding to streaming content. In an example case in which a genre of content of the input image is a video call, the image processing device 100 may obtain a reference model trained based on person-focused training images.

In an example case in which a plurality of reference models are identified, the image processing device 100 according to an embodiment of the disclosure may interpolate the plurality of reference models so as to generate the meta model. For example, the image processing device 100 may apply a weight to each of the identified plurality of reference models, and may generate the meta model by performing weighted sum on each of the reference models to which the weight is applied. Here, the weight applied to each of the reference models may be determined based on a difference between a quality value corresponding to the reference model and a quality value of the input image. According to another embodiment, the weight applied to each of the reference models may be determined based on a difference between a type of content or a genre of the content corresponding to the reference model and a type of content or a genre of the content of the input image.

In operation 220, the method may include generating training data, based on at least one of a quality or viewing information of the input image. For example, the image processing device 100 according to an embodiment of the disclosure may generate training data, based on at least one of a quality or viewing information of the input image. The training data may include a pair of a low-resolution image and a high-resolution image. In one or more embodiments of the disclosure, a high-resolution image corresponding to a label of a neural network model is referred to as first data, and a low-resolution image is referred to as second data.

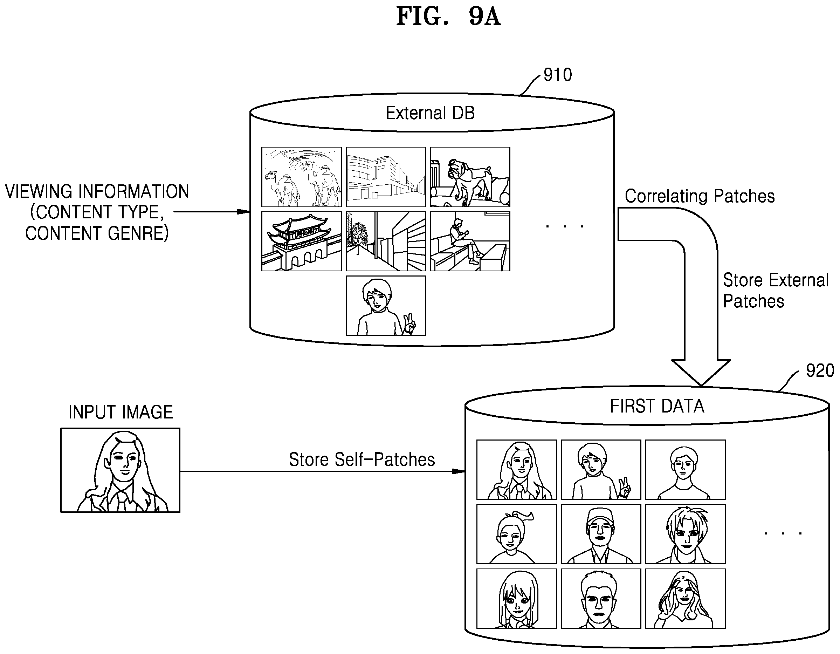

The image processing device 100 according to an embodiment of the disclosure may obtain an image corresponding to the obtained viewing information, and may use the image as a training image (first data). For example, the image processing device 100 may select an image corresponding to content having a same or similar type and genre, from training data stored in a DB. The training data may include high-resolution images. The training data may be stored in the external database, or may be stored in an internal memory of the image processing device 100. The first data may include a training image corresponding to the input image and content having a same or similar characteristic (type and genre) of the input image. This will be described in detail with reference to FIG. 9A.

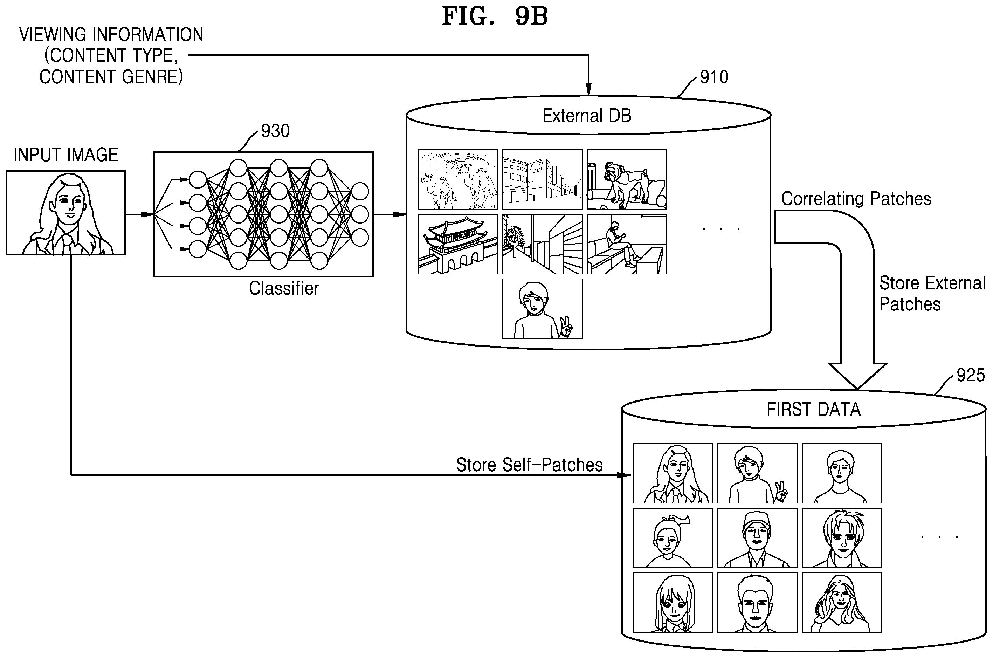

The image processing device 100 according to an embodiment of the disclosure may identify a category of the input image, and may select an image included in the identified category, from training data stored in the DB. The image processing device 100 may use the image selected from the training data, as the training image (first data). The first data may include the input image and a training image that is included in a category of the input image. This will be described in detail with reference to FIG. 9B.

The image processing device 100 according to an embodiment of the disclosure may generate an image (second data) of which quality is degraded to have an image quality corresponding to the quality value and the compression information of the input image. The image processing device 100 may degrade training images included in the first data, and thus, may generate a degraded image from the training image, according to a degree of degradation of the input image. Also, the image processing device 100 according to an embodiment of the disclosure may degrade the training images included in the first data, and thus, may generate the degraded image from the training image, according to the compression information of the input image, e.g., the compression information of at least one of bitrate information of the input image, resolution information, or encoding information. For example, the image processing device 100 may generate the image quality degraded image by performing at least one of methods including compression degradation, blurring, noise addition, and down sampling on the selected training images.

The image processing device 100 according to an embodiment of the disclosure may obtain information about an ambient environment and/or a viewing distance via one or more sensors, and may generate an image quality adjusted image corresponding to the ambient environment and/or the viewing distance. The image processing device 100 may determine a target image quality of an image, based on the ambient environment and/or the viewing distance. The target image quality of the image may include one or more image qualities from among sharpness, brightness, a contrast, and a chroma. The image processing device 100 may generate the image quality adjusted image by increasing or decreasing a ratio of one or more of sharpness, brightness, a contrast, and a chroma of the input image, based on the target image quality. The image quality adjusted image may be referred to as second data that is image quality adjusted from the first data including the input image and the selected training image.

The image processing device 100 according to an embodiment of the disclosure may use, as training data, the first data and the second data obtained by performing image quality processing on the training image included in the first data.

In operation 230, the method may include training the neural network model by using the training data. For example, the method may include obtaining a trained neural network model by training the neural network model by using the training data For example, the image processing device 100 according to an embodiment of the disclosure may train the neural network model by using the training data.

The image processing device 100 according to an embodiment of the disclosure may perform an on device training operation of training the image quality processing model to be adaptive to the input image, the image quality processing model being provided to process an image quality of the input image. The image processing device 100 may train the meta model by using the selected training images (first data) and the image quality degraded images (second data) obtained by performing image quality processing on the training images. The image processing device 100 may update a parameter of the meta model so as to allow a difference (a training error or loss) between an image output by inputting the image quality degraded image included in the training data to the meta model and a high-resolution training image included in the training data to be a minimum. For example, the image processing device 100 may train the meta model by using a gradient descent algorithm, but the disclosure is not limited thereto.

In operation 240, the method may include obtaining an output image corresponding to the input image, based on the trained neural network model. For example, the method may include obtaining the output image by performing an image quality processing operation on the first image based on the trained neural network model. For example, the image processing device 100 according to an embodiment of the disclosure may obtain an image quality processed output image from the input image, based on the trained neural network model. For example, the image processing device 100 may generate the output image by inputting the input image into the trained neural network model.

According to an embodiment of the disclosure, the trained meta model (the updated neural network model) may include a second neural network trained to process an image quality of an input image. For example, the second neural network may include an inference network configured to implement a super resolution (SR) algorithm capable of converting a low resolution (LR) to a high resolution (HR). According to an embodiment of the disclosure, the output image may be an image of a high resolution or a high image quality than that of the input image.

The image processing device 100 according to an embodiment of the disclosure may obtain the meta model having a parameter optimized according to a watching environment of a user, by training the meta model, based on the image quality of the input image and the viewing information related to the input image. The image processing device 100 may generate the high-resolution output image, based on the meta model having the parameter optimized for the image quality of the input image and the viewing information of the user.

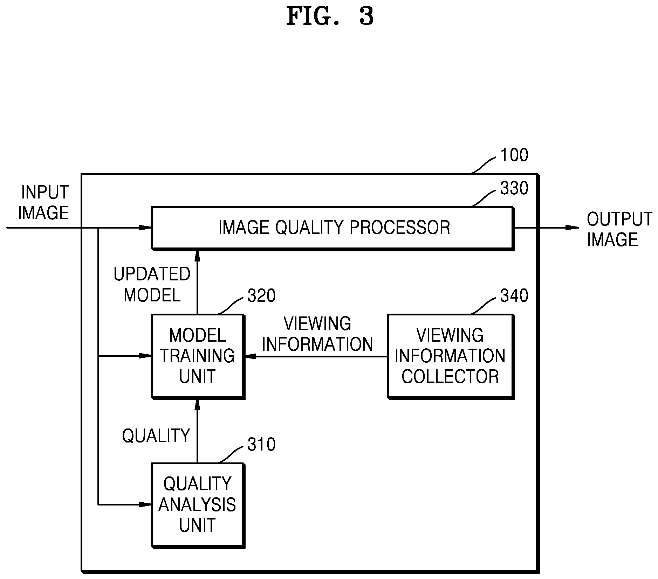

FIG. 3 is an internal block diagram of an image processing device according to an embodiment of the disclosure.

Referring to FIG. 3, the image processing device 100 may include a quality analysis unit 310, a model training unit 320, an image quality processor 330, and a viewing information collector 340. The quality analysis unit 310, the model training unit 320, the image quality processor 330, and the viewing information collector 340 may be implemented by at least one processor. The quality analysis unit 310, the model training unit 320, the image quality processor 330, and the viewing information collector 340 may operate according to at least one instruction stored in a memory. However, the disclosure is not limited thereto, and as such, according to another embodiment, one or more other components may be added or omitted from the image processing device 100 illustrated in FIG. 3.

The quality analysis unit 310 according to an embodiment of the disclosure may analyze or evaluate an image quality or quality of an input image. An image quality of an image may indicate a degree of degradation of the image. The quality analysis unit 310 may evaluate or determine at least one of a compression degradation of an input image, a compression degree of the input image, a blur level, a noise level, or a resolution of the image.

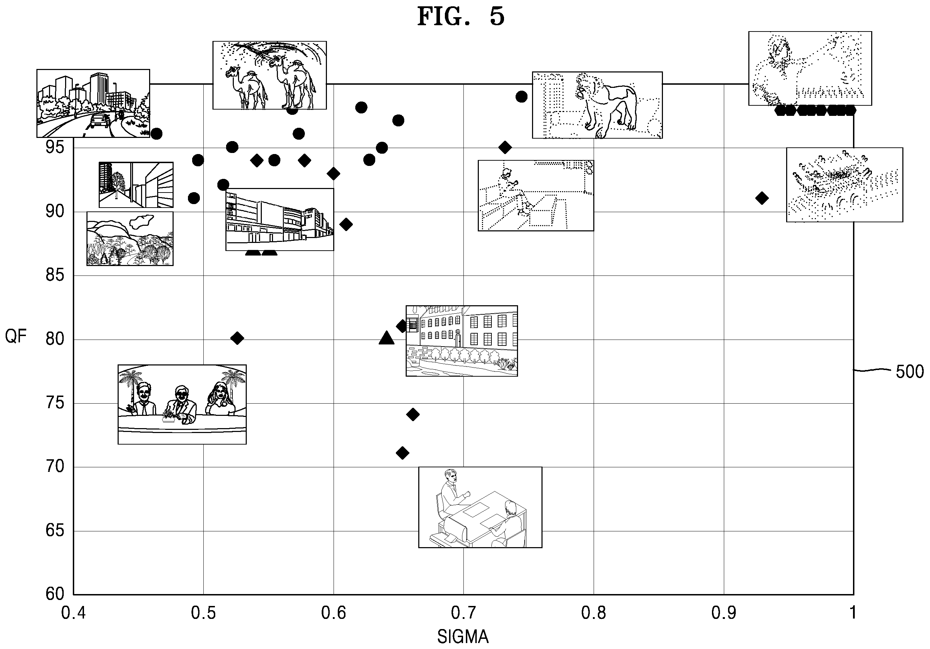

The quality analysis unit 310 may analyze or evaluate the image quality of the input image by using a neural network trained to analyze or evaluate an image quality of an input image. For example, the neural network may be a neural network trained to evaluate an image quality of an image or a video, by using an IQA technique, a VQA technique, etc. For example, a first neural network may be a neural network trained to receive an input of an input image and output a kernel sigma value indicating a blur quality of the input image and a QF indicating a compression quality of the image. A structure

of the first neural network may be equally expressed as the first neural network 400 of FIG. 4. A quality of an output input image may be represented on a quality plane graph of FIG. 5.

In an example case in which an input image is one of a plurality of frame images included in video content, the image processing device 100 according to an embodiment of the disclosure may obtain a quality value of the input image, based on a quality value of each of the plurality of frame images.

The image processing device 100 according to an embodiment of the disclosure may obtain an average quality value with respect to an input image of a first time point, based on a quality value of an input image of the first time point and a quality value of the input image of a past time point before the first time point. For example, the past time point may be referred to as a prior time point or a previous time point.

According to an embodiment of the disclosure, the quality analysis unit 310 may obtain an average image quality value with respect to an input image of a first time point, based on an image quality value of an input image of the first time point and an image quality value of the input image of a past time point before the first time point. For example, the quality analysis unit 310 may obtain the average image quality value by taking into consideration the image quality value of the input image of the first time point and the image quality value of the input image of the past time point before the first time point.

According to an embodiment of the disclosure, the quality analysis unit 310 may use a method of obtaining a simple moving average with respect to N past samples. According to an embodiment of the disclosure, the quality analysis unit 310 may determine, as an image value of an input image input at a current time point, a value obtained by summing an image quality value of a past image input at a past time point and an image quality value of the input image input at the current time point and averaging the summed value.

According to another embodiment of the disclosure, the quality analysis unit 310 may use an exponential moving average method of obtaining an average based on only a past-calculated value and a currently-input value. According to an embodiment of the disclosure, the quality analysis unit 310 may obtain a first time point exponential moving average image quality value with respect to an input image input at a first time point, based on an image quality value of the image input at the first time point and a past time exponential moving average image quality value obtained with respect to an input image input at a past time before the first time point.

The quality analysis unit 310 according to an embodiment of the disclosure may provide the quality value of the input image to the model training unit 320.

The viewing information collector 340 according to an embodiment of the disclosure may collect or obtain viewing information related to the input image. According to an embodiment of the disclosure, the viewing information may include auxiliary information obtained by the image processing device 100, as well as the quality information of the input image determined by using the quality analysis unit 310. The viewing information according to an embodiment of the disclosure may include compression information of an image, a type of content according to an image reception scheme, a genre of the content, an ambient environment of the image processing device 100, a viewing distance between the image processing device 100 and a user, user information, etc. The type of content and/or the genre of the content may be referred to as a characteristic of the content.

According to an embodiment of the disclosure, the viewing information collector 340 may obtain compression information of an image via compressed images having different resolutions, different bitrates, or different encoding information. The compression information of the image may include resolution information, bitrate information, and encoding information, which are of a compressed image. The viewing information collector 340 may determine whether the input image is a high-quality image or a low-quality image, according to the compression information of the image.

According to an embodiment of the disclosure, the viewing information collector 340 may determine or identify a type of content, based on an external device connected to the image processing device 100. The type of content may include streaming content, broadcasting content, a Bluray disc, a console game, or the like, according to the image reception scheme. For example, the streaming content may be received from a streaming server via a network, and the broadcasting content may be received from a broadcasting station via a set-top box or RF. The Bluray disc refers to media content received via a Bluray disc player, and the console game refers to graphic content received via a gaming device or a PC.

According to an embodiment of the disclosure, the viewing information collector 340 may identify a genre of content. For example, the viewing information collector 340 may identify the genre of content via metadata or text information of a program guide with respect to the content received from a broadcasting station, an OTT service provider, or the like. For example, the viewing information collector 340 may identify the genre of content by identifying an attribute of a currently-executed program, or a category, an attribute, or a type of a currently-executed application. The genre of content may include news, sports, a drama, a documentary, a variety show, a game, a movie, a video call, or the like.

According to an embodiment of the disclosure, the viewing information collector 340 may obtain ambient brightness information of the image processing device 100, via an illuminance sensor. The illuminance sensor may be provided inside or outside the image processing device 100. The viewing information collector 340 may obtain the brightness information around the image processing device 100 via information about a viewing time and/or a viewing

area. The ambient brightness information, the viewing time, and the viewing area may indicate an ambient environment. According to an embodiment of the disclosure, the viewing information collector 340 may obtain the viewing distance between the image processing device 100 and a user via a distance sensor. The distance sensor may be provided inside or outside the image processing device 100. The viewing information collector 340 according to an embodiment of the disclosure may determine a target image quality of an image by using one or more of the ambient brightness information, information about the viewing time and/or the viewing area, and the viewing distance. The target image quality may include one or more of sharpness, brightness, a contrast, and a chroma. The target image quality may be used for the model training unit 320 to generate second data of which image quality is adjusted from first data.

The viewing information collector 340 according to an embodiment of the disclosure may obtain user information, based on an account, ID, identification information, etc., which are registered by a user.

According to an embodiment of the disclosure, the viewing information collector 340 may obtain combination information in which one or more pieces of viewing information are combined. For example, the viewing information collector 340 may obtain combination information in which one or more pieces of viewing information from among the compression information of the image, the type of content according to the image reception scheme, the genre of content, the ambient environment of the image processing device 100, the viewing distance between the image processing device 100 and a user, and the user information are combined.

The viewing information collector 340 according to an embodiment of the disclosure may provide viewing information to the model training unit 320.

The model training unit 320 according to an embodiment of the disclosure may perform an on device training operation. The on device training operation may include an operation of training an image quality processing model to be adaptive to the input image, the image quality processing model being provided to process an image quality of the input image.

The model training unit 320 according to an embodiment of the disclosure may train a neural network model, according to the quality of the input image provided from the quality analysis unit 310 and the viewing information provided from the viewing information collector 340.

The model training unit 320 according to an embodiment of the disclosure may generate a metal model corresponding to the quality of the input image provided from the quality analysis unit 310 and the viewing information provided from the viewing information collector 340.

The model training unit 320 according to an embodiment of the disclosure may generate training data corresponding to the quality of the input image provided from the quality analysis unit 310 and the viewing information provided from the viewing information collector 340.

The model training unit 320 according to an embodiment of the disclosure may generate an updated model by training (transfer training) the generated meta model by using training data corresponding to a first image. The model training unit 320 according to an embodiment of the disclosure may provide the updated model to the image quality processor 330.

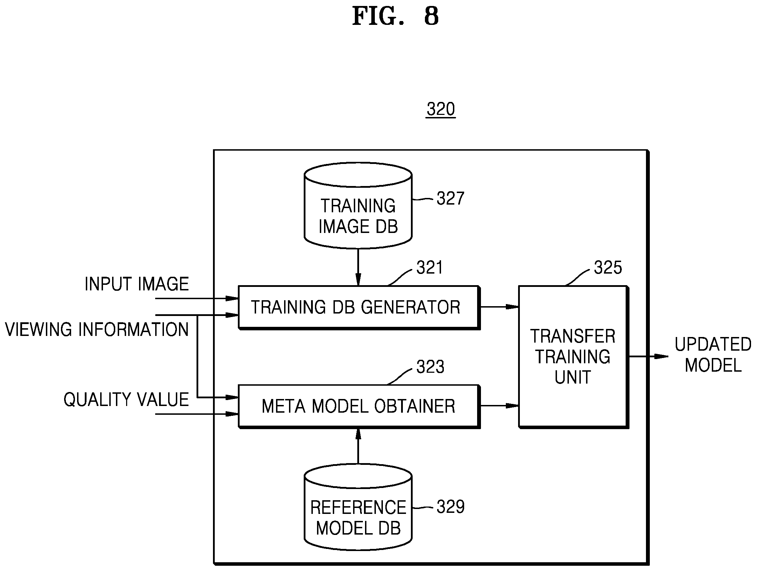

An operation of the model training unit 320 according to an embodiment of the disclosure will be described in detail with reference to FIG. 8.

The image quality processor 330 according to an embodiment of the disclosure may load the updated model from the model training unit 320, and may perform image processing on the input image by using the updated model. The image quality processor 330 may obtain an output image by performing image processing on the input image. For example, the image quality processor 330 may perform image processing on the input image by using a second neural network trained to process an image quality of an image. For example, the second neural network may include an inference network configured to implement a super resolution (SR) algorithm capable of converting a low resolution (LR) to a high resolution (HR). The image quality processor 330 may perform image processing on the input image by using the model updated via the model training unit 320. The image quality processor 330 may obtain the output image by applying the input image to the updated model. For example, the output image may be a high-resolution image.

FIG. 4 illustrates a structure of a first neural network according to an embodiment of the disclosure.

Referring to FIG. 4, a first neural network 400 may be a neural network based on a convolution neural network (CNN), a deep convolution neural network (DCNN), or a capsule network (CapsNet). However, the disclosure is not limited thereto, and as such, the first neural network 400 may include another type of neural network.

According to an embodiment, the first neural network 400 may receive various data and may be trained to learn or discover a method of analyzing the input data, a method of classifying the input data, and/or a method of extracting a feature necessary for generating result data from the input data. For example, the first neural network 400 may be trained to implement a method of analyzing the input data, a method of classifying the input data, and/or a method of extracting a feature necessary for generating result data from the input data. The first neural network 400 may be generated as an artificial intelligence model with desired characteristics by applying a training algorithm to a plurality of pieces of training data. This training may be performed in the image processing device 100 itself or may be performed via a separate server/system.

Examples of the learning algorithm may include supervised learning, unsupervised learning, semi-supervised learning, or reinforcement learning. However, the learning algorithm in the embodiment of the disclosure is not limited to the examples described above unless specified. For example, the first neural network 400 may be trained as a data inference model via supervised learning using training data as an input value.

In an embodiment of the disclosure, the first neural network 400 may include, but is not limited to, an input layer, a hidden layer, and an output layer. In an embodiment of the disclosure, the first neural network 400 may be a deep neural network (DNN) including a plurality of hidden layers as the hidden layer.

The first neural network 400 according to an embodiment of the disclosure may be trained by using a training DB, which includes each training image and quality values corresponding to the each training image as a training data set. For example, the training data set may include degraded images generated by compressing, blurring, or adding noise to high-resolution images in various ways, and quality values (answer or label) of the deteriorated images. For example, the first neural network 400 may be trained to output the quality value of the degraded image based on the degraded image is input to the first neural network 400. That is, the first neural network 400 may be trained to output the quality value of the degraded image when the degraded image is input to the first neural network 400.

For example, an input image including R, G, and B channels (RGB 3ch) may be input to the first neural network 400 shown in FIG. 4. According to another embodiment, a first image including Y, U, and V channels (YUV 3ch) may be input.

The first neural network 400 according to an embodiment of the disclosure may receive the input image including the R, G, and B channels (RGB 3ch) or the Y, U, and V channels (YUV 3ch), and may perform a convolution calculation by applying one or more kernels or filters to the first image, thereby extracting a feature map. For example, the first neural network 400 may output 32 channels by applying 32 3 X 3 filters to the input image. The first neural network 400 may scan a target of the convolution calculation pixel by pixel from left to right and from top to bottom, and may multiply the target by weight values included in the kernel and may add the result, thereby generating a result value. Data subject to the convolution calculation may be scanned by moving pixel by pixel, but may be scanned by moving by two or more pixels. During the scanning process, the number of pixels that input data moves is referred to as a stride, and a size of the output feature map may be determined according to a size of the stride.

The first neural network 400 according to an embodiment of the disclosure may have a single input multi output structure in which two types of quality values are output for one input image.

Also, in order to reduce network complexity, the first neural network 400 according to an embodiment of the disclosure may have a structure in which middle layers that extract features are commonly used and an output is separated at the last stage so as to output quality factors of the image.

The first neural network 400 according to an embodiment of the disclosure may obtain a 128-channel vector via pooling and may convert the 128-channel vector into a 256-channel vector via a linear network. Afterward, the first neural network 400 may obtain a final result by decreasing the 256-channel vector to one dimension. According to an embodiment of the disclosure, the first neural network 400 may output a quality value of an input image as two defined quality values.

The first neural network 400 according to an embodiment of the disclosure may output, as result values, blur sigma (or kernel sigma) indicating a blur quality of an image and a compression factor (QF) indicating a compression image quality of the image. Kernel sigma and QF may indicate a degree of degradation of a compressed image. Kernel sigma and QF may implicitly express a degree of degradation of a compressed image. However, the disclosure is not limited thereto, and the first neural network according to an embodiment of the disclosure may obtain various types of quality values as a result, as well as the blur sigma (or kernel sigma) and the QF values.

FIG. 5 is a graph showing quality information of various images, according to an embodiment of the disclosure.

FIG. 5 is a graph showing results of analyzing image quality of various images on a quality plane, and shows results of qualities of moving pictures captured via an image quality analyzer in a two-dimensional graph. An example of the image quality analyzer may include the quality analyzer 310 of FIG. 3 and the first neural network 400 of FIG. 4.

Referring to FIG. 5, a horizontal axis of a graph 500 represents a Kernel Sigma value, and a vertical axis of the graph 500 represents compression quality (quality factor (QF)) of an image. The Kernel Sigma value is a value that represents blur quality of an image. For example, as the Kernel Sigma value increases, the blur level increases, and as the Kernel Sigma value decreases, the blur level also decreases. For example, in a case in which the Kernel Sigma value is large, the blur level is also large, and in a case in which the Kernel Sigma value is small, the blur level is also small. The QF represents a degree of degradation due to compression. The smaller the QF value, the more severe the degradation due to compression, and the greater the QF value, the less degradation due to compression.

In the graph 500, symbols of the same shape represent quality values of images with the same resolution. As shown in the graph 500, even in an example case in which images have the same resolution and have the same symbol, the quality values of the images may be distributed in various ways. For example, even when images have the same resolution, the images may have various qualities depending on the degradation that occurs during the process of obtaining, transmitting, and storing the images.

However, this is merely an embodiment of the disclosure, and the image processing device 100 may further

obtain another QF, as well as Kernel Sigma and a QF of each input image, by analyzing an input image. For example, the image processing device 100 may further obtain a QF indicating a noise level included in the input image, by analyzing the input image. In this case, a quality value of each input image which is obtained by the image processing device 100 may be expressed in a three-dimensional graph represented by three axes of Kernel Sigma, a QF, and a noise level.

According to an embodiment of the disclosure, the image processing device 100 may analyze in real time values of various qualities of an input image by using the image quality analyzer.

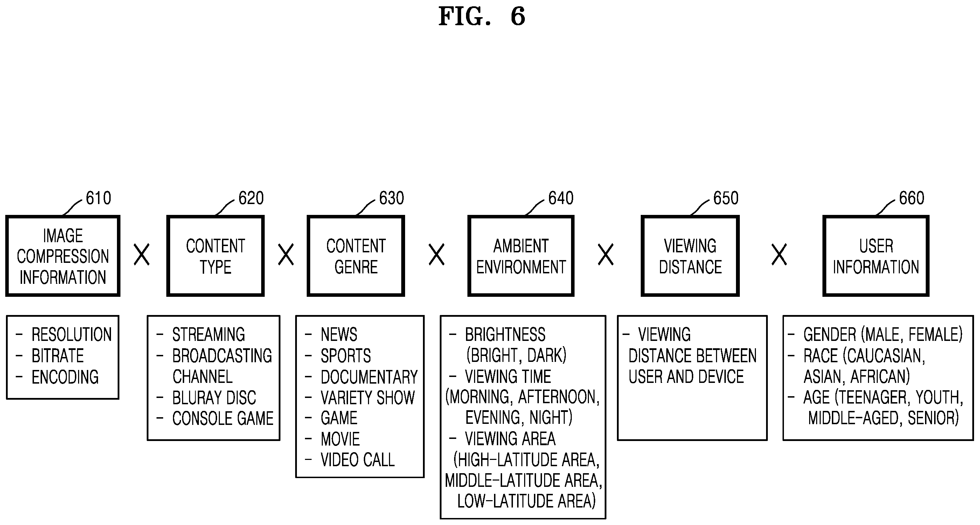

FIG. 6 illustrates an example of a type of viewing information, according to an embodiment of the disclosure.

Referring to FIG. 6, the image processing device 100 according to an embodiment of the disclosure may obtain an input image with viewing information corresponding to auxiliary information. For example, the image processing device 100 may obtain the viewing information via the viewing information collector 340.

According to an embodiment of the disclosure, the viewing information may include, but is not limited to, image compression information 610, content type 620, content genre 630, an ambient environment 640 of the image processing device 100, a viewing distance 650 between the image processing device 100 and a user, user information 660. The content type 620 may be according to an image reception scheme. The image processing device 100 according to an embodiment of the disclosure may generate training data or generate a meta model, according to the viewing information.

According to an embodiment of the disclosure, the image compression information 610 may include, but is not limited to, resolution information, bitrate information, encoding information, etc., of an image. According to an embodiment of the disclosure, the image processing device 100 may receive a compressed image having different resolutions, different bitrates, or different encoding information. For example, the compressed image may include compressed image data having resolutions of 8K, 4K, full high-definition (FHD), and HD with respect to the same original image. For example, the compressed image may include compressed image data having bitrates of 40 megabits per second (Mbps), 30 Mbps, 20 Mbps, and 10 Mbps with respect to the same original image. For example, the compressed image may include compressed image data having codec information such as h.264, High Efficiency Video Coding (HEVC), AOMedia Video 1 (AV1), etc. with respect to the same original image. The image compression information 610 may be determined according to a state of a network between a content provider and the image processing device 100, e.g., a degree of occurrence of traffic.

The image processing device 100 according to an embodiment of the disclosure may identify the image compression information 610, based on attribute information or metadata of the image which is received from the content provider. The image processing device 100 may determine whether the input image is a high-quality image or a low-quality image, based on the image compression information 610. In an example case in which the image processing device 100 receives a high-resolution and high-bitrate image, the image processing device 100 may determine the input image as a high-quality image, and in an example case in which the image processing device 100 receives a low-resolution and low-bitrate image, the image processing device 100 may determine the input image as a low-quality image. For example, a high-resolution image may be an image having a resolution higher than a first reference resolution value, and a low-resolution image may be an image having a resolution lower than a second reference resolution value. For example, a high-bitrate image may be an image having a bitrate higher than a first reference bitrate value, and a low-bitrate image may be an image having a bitrate lower than a second reference bitrate value.

According to an embodiment of the disclosure, the content type 620 may include streaming content, broadcasting content, a video content, a stored content, a distributed content, a Bluray disc, a console game, or the like, according to an image reception scheme.

According to an embodiment of the disclosure, the image processing device 100 may determine or identify the content type 620, based on an external device connected to the image processing device 100. For example, the image processing device 100 may receive streaming content including VOD content, a real-time broadcasting program, etc., which are received from a streaming server such as an OTT service provider or an IPTV provider, which is connected via a network. The streaming content may further include a cloud game received from a cloud game server. The image processing device 100 may receive content in a streaming manner.

Also, for example, the image processing device 100 may receive broadcasting content such as a real-time broadcasting program received from a terrestrial broadcast station, a cable broadcast station, etc. which are connected via a set-top box. Also, for example, the image processing device 100 may receive broadcasting content such as a real-time broadcasting program received from a public broadcast station connected via RF.

Also, for example, the image processing device 100 may receive media content in the form of Bluray disc which is reproduced via a Bluray disc player. Also, for example, the image processing device 100 may receive graphic content of a console game executed via a game player or Internet.

According to an embodiment of the disclosure, the content genre 630 may include, but is not limited to, news, sports, a drama, a documentary, a variety show, a game, a movie, a video call, or the like.

According to an embodiment of the disclosure, the image processing device 100 may obtain metadata of received content from a broadcasting station, an OTT service provider, etc., and may identify the content genre 630 via the metadata. Metadata of content may be data that describes an attribute of the content or the content, and may be

information indicating auxiliary information about the content. The metadata of content may include a program guide transmitted with broadcasting that is currently received. For example, based on text information of the program guide, the image processing device 100 may determine that a genre of currently-watched content corresponds to news, sports, a drama, a variety show, a documentary, or the like. The metadata of content may include a text, a logo, etc. which is output to a captured content screen.

According to another embodiment, the image processing device 100 according to an embodiment of the disclosure may identify the content genre 630 by identifying at least one of an attribute of a currently-executed program, a category of a currently-executed application, an attribute of a currently-executed application, or a type of a currently-executed application. For example, based on the attribute of the currently-executed application, the image processing device 100 may determine that a genre of currently-watched content corresponds to a movie, a game, news, sports, a video call, or the like.

According to an embodiment of the disclosure, the ambient environment 640 of the image processing device 100 may include, but is not limitd to, an ambient brightness, a viewing time (e.g., watching time) , a viewing area (e.g., watching area), etc. For example, the ambient brightness may include, but is not limited to, bright or dark. For example, the viewing time may include, but is not limited to, morning, afternoon, evening, or night. For example, the viewing area may indicate a geographical area. For example, the viewing area may include, but is not limited to, a high-latitude area, a middle-latitude area, a low-latitude area.

According to an embodiment of the disclosure, the image processing device 100 may obtain ambient brightness information of the image processing device 100, via an illuminance sensor. For example, the image processing device 100 may determine a level of brightness or a level of darkness around the image processing device 100, via the illuminance sensor.

According to an embodiment of the disclosure, the image processing device 100 may obtain the brightness information around the image processing device 100 via information about a viewing time and/or a viewing area. For example, the image processing device 100 may determine whether a viewing time is a morning time, an afternoon time, an evening time, or a night time, and may predict a level of brightness or a level of darkness around the image processing device 100. For example, the image processing device 100 may determine whether a viewing area is a high-latitude area, a middle-latitude area, or a low-latitude area, and may predict a level of brightness or a level of darkness around the image processing device 100 by combining the viewing area and the viewing time.

According to an embodiment of the disclosure, the image processing device 100 may obtain the viewing distance 650 between the image processing device 100 and a user via a distance sensor. For example, the image processing device 100 may determine whether a viewing distance between the image processing device 100 and a user is long or short, via the distance sensor.

According to an embodiment of the disclosure, the image processing device 100 may determine a target image quality of the input image, based on the ambient environment 640 and/or the viewing distance 650. The target image quality may include sharpness, brightness, a contrast, a chroma, etc. For example, the image processing device 100 may determine a ratio of increase or decrease in one or more of sharpness, brightness, a contrast, and a chroma of the input image. The image processing device 100 may generate training data, based on the target image quality of the input image. For example, the image processing device 100 may generate the training data by adjusting an image quality by increasing or decreasing one or more of sharpness, brightness, a contrast, and a chroma in the input image, at a constant ratio.

According to an embodiment of the disclosure, the user information 660 may include a gender (male, female), a race (Caucasian, Asian, African), an age (teenager, youth, middle-aged, senior), etc. According to an embodiment of the disclosure, the image processing device 100 may obtain the user information 660, based on an account, ID, identification information, etc., which are registered by the user.

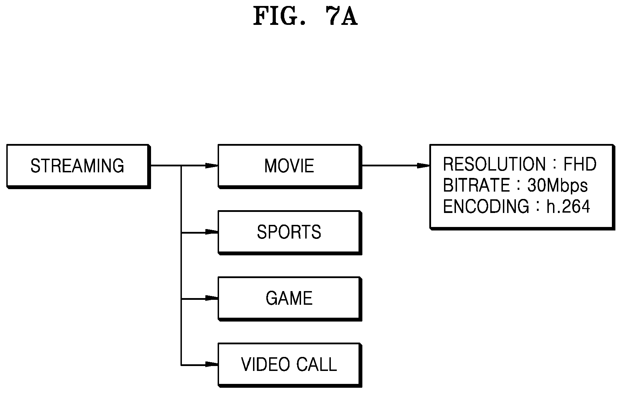

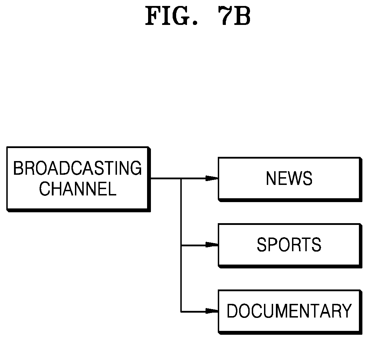

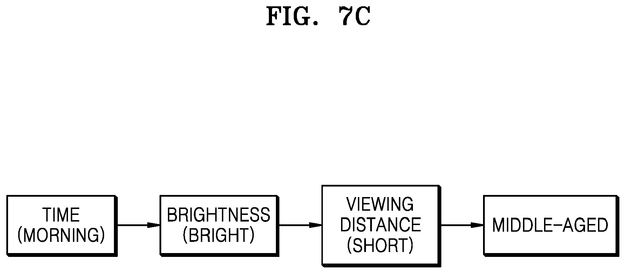

FIGS. 7A, 7B and 7C illustrates combination examples of viewing information, according to an embodiment of the disclosure.

Referring to FIGS. 7A, 7B and 7C, the image processing device 100 according to an embodiment of the disclosure may obtain combination information in which one or more pieces of viewing information are combined. The image processing device 100 may generate training data, based on the combination information in which one or more pieces of viewing information are combined. The image processing device 100 may generate a meta model, based on the combination information in which one or more pieces of viewing information are combined.

Referring to FIG. 7A, in an example case in which a type of content is streaming content, a genre of the content may be classified to a movie, sports, a game, and a video call, based on metadata of the content or an attribute of an executed application. For example, the image processing device 100 may obtain viewing information indicating that an input image is streaming content and a movie genre and has an FHD resolution, a bitrate of 30 Mbps, and compression information of h.264 codec.

For example, the image processing device 100 may identify one or more reference models from among reference models that have trained training images corresponding to streaming content and reference models that have trained training images corresponding to a movie genre, and may obtain a meta model by using the identified one or more

reference models.

For example, the image processing device 100 may select a training image (first data) corresponding to streaming content and/or a movie genre, from training data stored in a DB.

For example, the image processing device 100 may perform degradation processing on the training image, based on the FHD resolution, the bitrate of 30 Mbps, and the compression information of h.264 codec, and thus, may obtain a degraded image (second data). The image processing device 100 may train the meta model, by using the first data and the second data as training data.

Referring to FIG. 7B, in an example case in which a type of content is broadcasting content, a genre of the content may be classified to news, sports, and a documentary, based on a program guide. For example, the image processing device 100 may obtain viewing information indicating that an input image is broadcasting content and corresponds to a news genre.

For example, the image processing device 100 may identify one or more reference models from among reference models that have trained training images corresponding to broadcasting content and reference models that have trained training images corresponding to a news genre, and may obtain a meta model by using the identified one or more reference models.

For example, the image processing device 100 may select a training image (first data) corresponding to broadcasting content and/or a news genre, from training data stored in the DB.

Referring to FIG. 7C, for example, the image processing device 100 may obtain viewing information indicating that a viewing time of an input image is a morning time, ambient brightness is high, a viewing distance between the image processing device 100 and a user is short, and the user is a middle-aged person.

The image processing device 100 may determine a target image quality in which brightness and a chroma of an image are increased at a preset ratio. The image processing device 100 may generate training data by adjusting brightness and a chroma of an input image, based on the target image quality. For example, the image processing device 100 may apply the target image quality to first data, and thus, may generate second data of which image quality is adjusted. The image processing device 100 may train the meta model, by using the first data and the second data as training data.

FIG. 8 is a diagram for describing an operation of a model training unit, according to an embodiment of the disclosure.

Referring to FIG. 8, the model training unit 320 may include a training DB generator 321, a meta model obtainer 323, and a transfer training unit 325.

According to an embodiment of the disclosure, the model training unit 320 may obtain a meta model, based on a quality and viewing information of an input image, may train the meta model by using training data corresponding to the quality and viewing information of the input image, and thus, may generate a transfer model that is adaptive to the input image.

According to an embodiment of the disclosure, the training DB generator 321 may obtain training data corresponding to an input image by using the input image and viewing information.

According to an embodiment of the disclosure, the training DB generator 321 may obtain an image corresponding to the viewing information, and may use the image as a training image (first data). For example, the training DB generator 321 may select an image corresponding to content having a same or similar type and genre, from training data stored in a DB 327. The training data may include high-resolution images. The training data may be stored in the external database, or may be stored in an internal memory of the image processing device 100. The first data may include a training image corresponding to the input image and content having a same or similar characteristic (type and genre) of the input image.

According to another embodiment, the training DB generator 321 according to an embodiment of the disclosure may identify a category of an input image. For example, the training DB generator 321 may identify the category of the input image by a probability value. The training DB generator 321 may identify a category of a highest probability value as the category of the input image, and may select images in the identified category, from training data stored in the DB 327. The training DB generator 321 may obtain first data including an input image and a training image included in a category of the input image.

According to another embodiment, the training DB generator 321 according to an embodiment of the disclosure may obtain a preset number of images from among images that is included in the same category of the input image. According to another embodiment, the training DB generator 321 may identify a preset number of categories in order of high probability values from among categories of an input image, and may obtain images included in the identified categories, in proportion to the probability values. In an example case in which the training DB generator 321 determines that a probability an object included in an input image is a dog is 70% and a cat is 30%, a dog image and a cat image from among training data may be obtained at a ratio of 7:3.

According to an embodiment of the disclosure, the training DB generator 321 may generate an image (second data) of which image quality is degraded to have an image quality corresponding to the quality value and the viewing information of the input image. The training DB generator 321 may degrade training images included in the first data, and thus, may generate an image degraded from a training image, according to a degree of degradation of the input image. For

example, the training DB generator 321 may generate the image quality degraded image by performing at least one of methods including compression degradation, blurring, noise addition, and down sampling on the selected training images.

According to an embodiment of the disclosure, the training DB generator 321 may receive compression information of the input image from the viewing information collector 340. The training DB generator 321 may degrade the training images included in the first data, and thus, may generate the degraded image from the training image, according to the compression information of the input image, e.g., the compression information of at least one of bitrate information of the input image, resolution information, or encoding information, which is included in the viewing information.

Also, the training DB generator 321 according to an embodiment of the disclosure may receive information about an ambient environment and/or a viewing distance from the viewing information collector 340. The training DB generator 321 may receive information about a target image quality determined based on the ambient environment and/or the viewing distance. The training DB generator 321 may generate an image quality adjusted image by adjusting an image quality of training images included in the first data. For example, the training DB generator 321 may generate the image quality adjusted image by increasing or decreasing a ratio of one or more of sharpness, brightness, a contrast, and a chroma of the selected training images. The image quality adjusted image may be referred to as second data.

According to an embodiment of the disclosure, the training DB generator 321 may use the second data as training data for the meta model, the second data being obtained by performing image quality processing or image quality adjustment on the first data and the training image included in the first data. According to an embodiment of the disclosure, the training DB generator 321 may transmit the training data to the transfer training unit 325.

According to an embodiment of the disclosure, the meta model obtainer 323 may obtain the meta model corresponding to the quality and the viewing information of the input image. In an example case in which on device training is performed on a random initial model, without the meta model obtainer 323, a long training time is requested. However, according to an embodiment of the disclosure, it is possible to select a model matching the quality of the input image via the meta model obtainer 323, and to fast generate a meta model by using the selected model.

According to an embodiment of the disclosure, the meta model obtainer 323 may obtain a meta model by using a plurality of reference models. Reference models may be stored in a DB 329. The DB 329 may corresponding to the memory of the image processing device 100, an external DB, or the like. The manufacturer may pre-generate the plurality of reference models and store them in the image processing device 100, but the disclosure is not limited thereto.

According to an embodiment of the disclosure, the plurality of reference models may include an image quality processing model trained based on training images having different quality values, an image quality processing model trained based on training images corresponding to different types of content, or an image quality processing model trained based on training images corresponding to different genres of content. In an example case in which the plurality of reference models include a first reference model and a second reference model, the first reference model is an image quality processing model trained based on training images having a first image quality value, and the second reference model is an image quality processing model trained based on training images having a second image quality value. According to another embodiment, the first reference model is an image quality processing model trained based on training images corresponding to content of a first characteristic, and the second reference model is an image quality processing model trained based on training images corresponding to content of a second characteristic.

According to an embodiment of the disclosure, each of the plurality of reference models may be trained based on training images having quality values with a uniform gap therebetween. According to another embodiment, according to an embodiment of the disclosure, a quality value corresponding to reference model may be determined based on quality value distribution of training images. For example, the manufacturer may obtain quality values of training images by analyzing the training images, and may determine a representative quality sampling position via statistical distribution of the quality values of the training images. The manufacturer may train a reference model by using images having a quality value of the representative quality sampling position, as training data.

According to an embodiment of the disclosure, the meta model obtainer 323 may compare quality values of images used to train each of the plurality of reference models with a quality value of the input image, and thus, may identify a reference model trained based on training images having a similar image quality as an image quality of the input image.

According to an embodiment of the disclosure, the meta model obtainer 323 may identify a preset number of reference models trained based on images with quality values having a small difference from the quality value of the input image, from among the plurality of reference models. For example, the meta model obtainer 323 may identify a reference model trained based on images having a quality value of which difference from the quality value of the input image is within a reference value, from among the plurality of reference models.

According to an embodiment of the disclosure, the meta model obtainer 323 may further use viewing information in identifying a reference model. For example, the meta model obtainer 323 may compare a content characteristic of training images used to train each of the plurality of reference models with a content characteristic of the input image, and thus, may identify a reference model trained based on training images corresponding to content matching the content characteristic of the input image. That the content characteristic matches may include that a type of content or a genre of

content may be identical to or similar with each other. In an example case in which content of the input image is streaming content, the image processing device 100 may identify a reference model trained based on training images corresponding to streaming content. In an example case in which a genre of content of the input image is a video call, the image processing device 100 may identify a reference model trained based on person-focused training images.

Un an example case in which one reference model is identified, the meta model obtainer 323 may use the identified one reference model as the meta model according to an embodiment of the disclosure.

In an example case in which a plurality of reference models are identified, the meta model obtainer 323 according to an embodiment of the disclosure may interpolate the plurality of reference models so as to generate the meta model. According to an embodiment of the disclosure, the meta model obtainer 323 may apply a weight to each of the identified plurality of reference models, and may generate the meta model by performing weighted sum on each of the reference models to which the weight is applied.

According to an embodiment of the disclosure, the weight applied to each of the reference models may be determined based on a difference between a quality value corresponding to the reference model and a quality value of the input image. For example, as the difference between the quality value corresponding to the reference model and the quality value of the input image increases, a weight value to be applied to the reference model decreases, and as the difference between the quality value corresponding to the reference model and the quality value of the input image decreases, a weight value to be applied to the reference model increases.

Also, according to an embodiment of the disclosure, the weight applied to each of the reference models may be determined based on a difference between a type of content or a genre of the content corresponding to the reference model and a type of content or a genre of the content of the input image. In an example case in which the input image corresponds to streaming content, a weight value to be applied to a reference model corresponding to graphic content may be small. In an example case in which the input image corresponds to a video call genre, a weight value to be applied to a reference model corresponding to a movie genre or a drama genre may be great.

According to an embodiment of the disclosure, the meta model obtainer 323 may transmit the obtained meta model to the transfer training unit 325.

According to an embodiment of the disclosure, the transfer training unit 325 may train the meta model, which is obtained by the meta model obtainer 323, by using training data received from the training DB generator 321.

According to an embodiment of the disclosure, the transfer training unit 325 may train the meta model by using a gradient descent algorithm. The gradient descent algorithm is an optimization algorithm for finding first-order approximations. According to an embodiment, the gradient descent algorithm includes a method of obtaining a gradient of a function and finding the value of x when a function value is a minimum value by continuously moving toward a lower absolute value of the gradient.

According to an embodiment of the disclosure, the transfer training unit 325 may compare an image output from the meta model by inputting an image with degraded image quality (second data) included in the training data to the meta model with an training image (first data) included in the training data, may obtain a difference (a training error or loss) between the two images as a slope of a function, and may obtain parameters of the model when an absolute value of the slope is minimized. That is, the transfer training unit 325 may obtain a transfer model by training the meta model by continuously updating the parameters of the meta model so that a quantitative difference between the image output from the meta model and the high-quality image included in a training data set is minimized.

According to an embodiment of the disclosure, the transfer training unit 325 may train the meta model by using known various training algorithms. The transfer training unit 325 may selectively apply hyper-parameters of training (a training rate, a distribution size, an end condition, etc.) an optimization algorithm (stochastic gradient descent (SGD), adaptive moment estimation (Adam), adaptive moment estimation for power (AdamP)), or the like, according to a limit condition of a system, which includes a memory, a calculator, power, etc.

According to an embodiment of the disclosure, the meta model obtainer 323 and the transfer training unit 325 may generate a transfer model at regular or random intervals. According to an embodiment of the disclosure, the meta model obtainer 323 may newly obtain a meta model in one of a frame unit, a unit of a scene including a plurality of frames, or in a case in which a content type of a video is changed. For example, the meta model obtainer 323 may newly obtain the meta model in an example case in which the content type is changed from news to a drama. According to an embodiment of the disclosure, in an example case in which the meta model obtainer 323 newly obtains the meta model, the transfer training unit 325 may update a transfer model by training the meta model. For example, the transfer training unit 325 may generate a new transfer model by training a meta model in every frame unit or a unit of a scene including a plurality of frames, or whenever a content type of a video is changed. According to an embodiment of the disclosure, the meta model obtainer 323 may newly obtain a meta model in every frame unit or a unit of a scene including a plurality of frames, or whenever a content type of a video is changed, e.g., when the content type is changed from news to a drama. According to an embodiment of the disclosure, whenever the meta model obtainer 323 newly obtains the meta model, the transfer training unit 325 may update a transfer model by training the meta model. For example, the transfer training unit 325 may generate a new transfer model by training a meta model in every frame unit or a unit of a scene including a plurality of frames, or

whenever a content type of a video is changed.

According to an embodiment of the disclosure, the transfer training unit 325 may generate a transfer model that is adaptively trained to match an input image. The metal model updated by the transfer training unit 325 may be loaded to the image quality processor 330 and may be used in image quality processing.

In one or more embodiments of the disclosure, it is shown that the training DB generator 321 and the meta model obtainer 323 generate training data and a meta model by each using viewing information, but the disclosure is not limited thereto. For example, the viewing information may be transmitted only to the training DB generator 321 or only to the meta model obtainer 323.

FIG. 9A is a diagram for describing an example of an operation in which a training DB generator obtains training images related to an input image, according to an embodiment of the disclosure.

Referring to FIG. 9A, the training DB generator 321 according to an embodiment of the disclosure may collect, from an external DB 910, images having a similar characteristic to a content characteristic of an input image, and may generate a training image (first data 920). For example, the training DB generator 321 may selectively collect, from an external DB 910, images having a similar characteristic to a content characteristic of an input image, and may generate a training image (first data 920).

According to an embodiment of the disclosure, the training DB generator 321 may obtain an image corresponding to viewing information, and may use the image corresponding to the viewing information, as the training image. For example, the training DB generator 321 may select, from the external DB 910, training images corresponding to the content characteristic of the input image. For example, the training DB generator 321 may select, from the external DB 910, training images corresponding a type or genre of the content. The training images selected from the external DB 910 may be stored in the first data 920. For example, the training DB generator 321 may use, as the training image, one or more external patches that are cropped from the viewing information and have meaningful information. For example, meaningful information may include, but is not limited to, attribute information or characteristic information. The one or more external patches corresponding to the input image may be stored in the first data 920. The one or more external patches may be referred to as correlating patches. For example, the correlating patches may be one or more patches extracted from the viewing information that are correlated with an input image.

In the external DB 910, high-resolution training data corresponding to various types of content including streaming content, broadcasting content, media content, game graphic content, or the like may be stored. A type pf content may vary according to content providers. Also, in the external DB 910, high-resolution training data is stored for each of various genres of content including news, sports, a drama, a documentary, a variety show, a game, a movie, a video call, etc.

According to an embodiment of the disclosure, the training DB generator 321 may select, as a training image, an image corresponding to content that is same as or similar to content of an input image. In an example case in which the input image is game content, the training DB generator 321 may select, as the training image, images corresponding to graphic content. In an example case in which the input image is a movie genre or a video call genre, the training DB generator 321 may select, as the training image, person-focused images. According to an embodiment of the disclosure, the training DB generator 321 may select images from among learning images stored in the internal memory of the image processing device 100, not in the external DB 910.

According to an embodiment of the disclosure, the training DB generator 321 may obtain, from the external DB 910, a training image corresponding to content that is same as or similar to content of the input image, and may generate a new DB including the training image, as the first data 920.

According to an embodiment of the disclosure, the training DB generator 321 may use the input image as a training image. For example, the training DB generator 321 may use, as the training image, one or more patches that are cropped from the input image and have meaningful information. For example, meaningful information may include, but is not limited to, attribute information or characteristic information. The one or more patches corresponding to the input image may be stored in the first data 920. The one or more patches corresponding to the input image may be referred to as self-patches.

According to an embodiment of the disclosure, the training DB generator 321 may generate the first data 920 including the training image corresponding to content that is same as or similar to content of the input image, and the input image. The first data 920 may be stored in the internal memory of the image processing device 100. The images included in the first data 920 may be used as high-resolution images to train a metal model.

FIG. 9B is a diagram for describing an example of an operation in which a training DB generator obtains training images related to an input image, according to an embodiment of the disclosure.

Referring to FIG. 9B, the training DB generator 321 may generate a training image (first data 925) by selectively collecting, from the external DB 910, images having similar content characteristics to content characteristics of an input image.

The training DB generator 321 according to an embodiment of the disclosure may use viewing information of the input image and category information of the input image so as to select a training image. The training DB generator 321

may select, as the training image, an image included in a category of the input image, by identifying the category of the input image.

The training DB generator 321 according to an embodiment of the disclosure may identify the category of the input image by using a third neural network 930. The third neural network 930 according to an embodiment of the disclosure may be an algorithm that receives images and classifies image categories from the input images, or a set of algorithms, software for executing a set of algorithms, and/or hardware for executing a set of algorithms.

The third neural network 930 according to an embodiment of the disclosure may use a softmax regression function to obtain various classes or categories as a result. The softmax function may be used when there are a plurality of correct answers (classes) that must be classified. For example, the softmax function may be used when predicting a plurality of classes. In an example case in which a total number of classes is k, the softmax function may receive a k-dimensional vector and may estimate a probability for each class. The third neural network 930 according to an embodiment of the disclosure may be a neural network that receives a k-dimensional vector and is trained such that the probability for each class obtained therefrom is equal to a correct answer set. However, the disclosure is not limited thereto, and the third neural network 930 may be implemented as algorithms of various types capable of classifying image categories from an input image.

The third neural network 930 according to an embodiment of the disclosure may obtain a probability value for a category or class of the input image as a result. For example, the third neural network 930 may obtain vectors representing the probability that the category of the input image is a human face, a dog, a cat, and a building as 0.5, 0.2, 0.2, and 0.1, respectively, as the result value.

The training DB generator 321 according to an embodiment of the disclosure may identify a category with the highest probability as the category of the input image. For example, in the example above, the training DB generator 321 may identify the category of the input image as the human face, which is the category with the greatest vector value.

The training DB generator 321 according to an embodiment of the disclosure may obtain images with content characteristics similar to the content characteristics of the input image, that is, images included in the same or similar category as the input image. The training DB generator 321 according to an embodiment of the disclosure may obtain, from the external DB 910, the image included in a category similar to the category of the input image. The training DB generator 321 according to an embodiment of the disclosure may select an image from among training images stored in an internal memory of the image processing device 100, not from the external DB 910. Images having categories of various types may be labeled with an index or tag for a category of each image and stored in the external DB 910 or the internal memory according to an embodiment of the disclosure.

The training DB generator 321 may obtain, from the external DB 910, one or more images that are identified by an index of a category similar to the category of the input image, and may generate, as first data 925, a new DB including the one or more images.

According to another embodiment, the training DB generator 321 may identify only a predetermined number of categories in order of high probability value from among the categories of the input image, and may obtain images included in the identified category in proportion to the probability value. For example, the training DB generator 321 may obtain a human face image, a dog image, and a cat image at a ratio of 5:2:2 from the external DB 910, based on a result from the third neural network 930.

The training DB generator 321 may store one or more patches corresponding to the input image, in the first data 925.

The training DB generator 321 may generate the first data 925 including content same or similar to the input image and a training image corresponding to the identified category of the input image. The first data 925 may be stored in the internal memory of the image processing device 100. The images included in the first data 925 may be used as a high-resolution image for training the meta model.

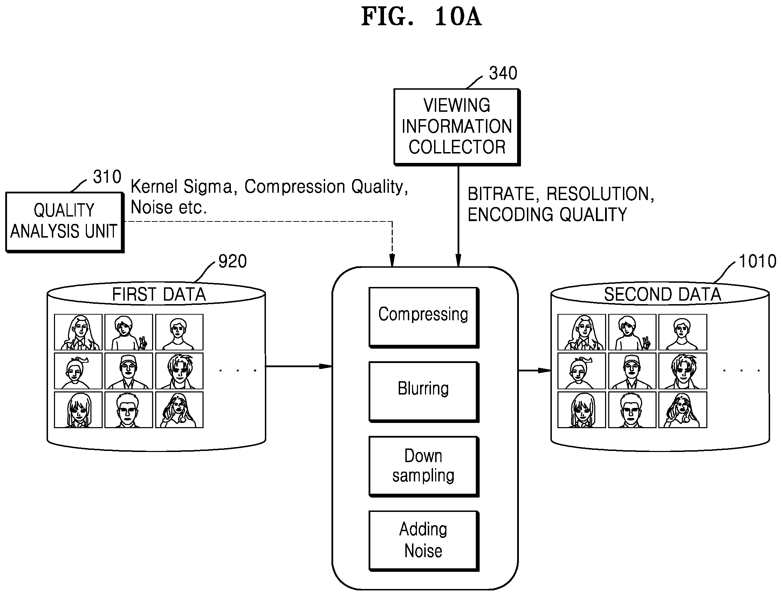

FIG. 10A is a diagram for describing an example of an operation in which a training DB generator generates training data, according to an embodiment of the disclosure.

Referring to FIG. 10A, the training DB generator 321 according to an embodiment of the disclosure decreases an image quality by degrading images included in the first data 920.

According to an embodiment of the disclosure, the training DB generator 321 may degrade the images included in the first data 920, according to a quality characteristic and viewing information of an input image.

According to an embodiment of the disclosure, the training DB generator 321 may receive a quality value of the input image, and may degrade collected images to have a quality value corresponding the received quality value. The quality value of the input image may be a quality value that image processing device 100 obtained by analyzing or evaluating an image quality of the input image. According to an embodiment of the disclosure, the quality value of the input image may include Kernel Sigma indicating a blur level of the input image and a QF indicating a degree of compression degradation of the input image. The training DB generator 321 may degrade the images included in the first data 920 to have blur and compression degradation to the extent of those of the input image.

According to an embodiment of the disclosure, the training DB generator 321 may receive compression

information of the input image, and may degrade the collected images to have compression information corresponding to the received compression information. The compression information of the input image may include one or more of bitrate information, resolution information, and encoding information, which are of the input image. The training DB generator 321 may degrade the images included in the first data 920 to have a bitrate, resolution, or encoding information which is the same as that of the input image.

For example, the training DB generator 321 may perform filtering to degrade the images included in the first data 920. The training DB generator 321 may use two-dimensional kernel to apply blur degradation to the images. According to another embodiment, the training DB generator 321 may process box blur to perform modelling on motion degradation. According to another embodiment, the training DB generator 321 may use a Gaussian filter to apply a shape or optical blur to the images. According to another embodiment, the training DB generator 321 may perform down sampling on the images included in the first data 920, based on resolution information from among the compression information of the input image.

According to an embodiment of the disclosure, the training DB generator 321 may adjust a coefficient of the filter, according to blur of the input image.

Degradation may be performed via commonly known spatial filtering, and may be equal to an operation of a low pass filter in the field of signal processing. In detail, the degradation may be performed via a convolution calculation with two-dimensional Gaussian kernel.

According to an embodiment of the disclosure, the training DB generator 321 may degrade an image quality of the images included in the first data 920, and thus, may generate second data 1010 including degraded images.

According to an embodiment of the disclosure, the training DB generator 321 may use, as training data, the images included in the first data 920, and the second data 1010 including the degraded images which are generated by degrading the images. The training DB generator 321 may transmit the first data 920 and the second data 1010 to the transfer training unit 325.

According to an embodiment of the disclosure, the transfer training unit 325 may update a parameter of a meta model so as to allow a difference between an image output by inputting the image quality degraded images included in the second data 1010 to the meta model and the images before image quality degradation in the first data 920 to be a minimum.

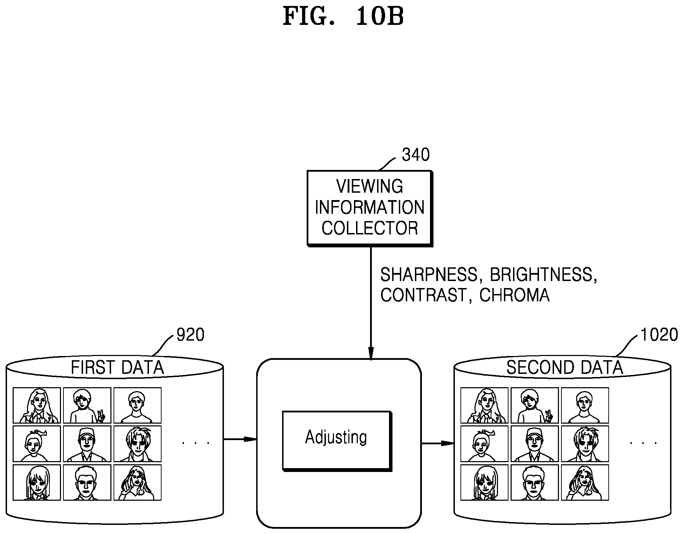

FIG. 10B is a diagram for describing an example of an operation in which a training DB generator generates training data, according to an embodiment of the disclosure.

Referring to FIG. 10B, the training DB generator 321 according to an embodiment of the disclosure may degrade images included in the first data 920, according to viewing information of an input image.

According to an embodiment of the disclosure, the training DB generator 321 may receive information about a target image quality determined based on an ambient environment and/or a viewing distance. The information about the target image quality may include one or more piece of information from among sharpness, brightness, a contrast, and a chroma, which are of an image. The training DB generator 321 may generate an image quality adjusted image by adjusting an image quality of training images included in the first data 920. For example, the training DB generator 321 may generate an image quality adjusted image by increasing or decreasing a ratio of one or more of sharpness, brightness, a contrast, and a chroma of selected training images. The training DB generator 321 may generate second data 1020 including images in which the ratio of one or more of sharpness, brightness, a contrast, and a chroma of the selected training images is increased.

According to an embodiment of the disclosure, the training DB generator 321 may use the images included in the first data 920, and the second data 1020 including the images generated by performing image quality adjustment on the images in the first data 920. The training DB generator 321 may transmit the first data 920 and the second data 1020 to the transfer training unit 325.

According to an embodiment of the disclosure, the transfer training unit 325 may update a parameter of a meta model so as to allow a difference between an image output by inputting the image quality adjusted images included in the second data 1010 to the meta model and the images before image quality adjustment in the first data 920 to be a minimum.

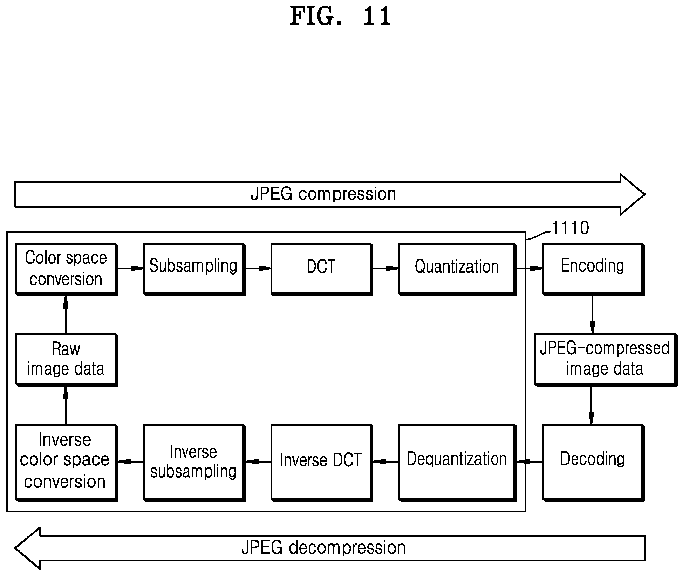

FIG. 11 is a diagram for describing a method of reflecting, on a training image, degradation occurring in a compression procedure according to an embodiment of the disclosure.

Referring to FIG. 11, raw image data may be encoded into a Joint Photographic Experts Group (JPEG) compressed image through color conversion, frequency conversion (discrete cosine transform (DCT)), quantization, and arithmetic coding in that order. The encoded image may be reconstructed through decoding, dequantization, inverse DCT, and inverse color conversion processes. The encoding process may further include a subsampling operation, and the decoding process may include an inverse subsampling operation.

The training DB generator 321 according to an embodiment of the disclosure may obtain a compressed and degraded image by JPEG encoding and decoding an image to be degraded in the order shown in FIG. 11.

As entropy coding performed in the encoding/decoding process is a lossless compression method, quality degradation does not occur in the entropy coding and entropy decoding processes. Accordingly, the training DB generator 321 according to an embodiment of the disclosure may omit the entropy coding and entropy decoding processes for the

image to be degraded and may perform only methods indicated by reference numeral 1110, to obtain the compressed degraded image.

The training DB generator 321 according to an embodiment of the disclosure may position the image to be degraded in the place of raw image data, may perform color conversion, DCT, and quantization on the image to be degraded, and may perform dequantization, inverse DCT, and inverse color conversion on the quantized image, to obtain the compressed degraded image.

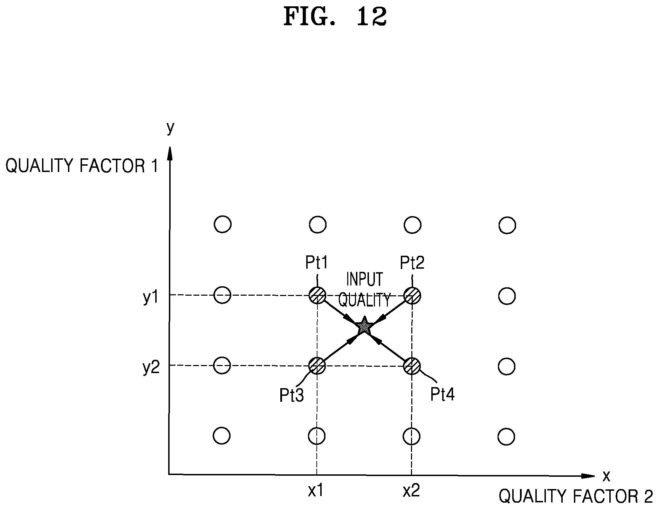

FIG. 12 is a graph for describing an example of an operation in which a meta model obtainer obtains a meta model by using a reference model, according to an embodiment of the disclosure.

The graph of FIG. 12 represents a quality plane graph. The quality plane graph is a graph representing the quality of an image with two quality factors, with the horizontal axis representing quality factor 1 and the vertical axis representing quality factor 2. The image processing device 100 may analyze in real time an image quality of an input image via the quality analysis unit 310, and thus, may obtain a quality value of the input image. The quality value of the input image may be represented on the quality plane graph of FIG. 12.

A metal model according to an embodiment of the disclosure for performing image quality processing on an input image may be generated based on a reference model that is a pre-trained image quality processing model. The reference model may be represented on the quality plane graph of FIG. 12.

The quality plane graph according to an embodiment of the disclosure may include N points in a grid form. For example, training images respectively corresponding to the N points may include training images degraded to have the corresponding quality. That is, in the graph of FIG. 12, the training images may refer to training images having a quality value corresponding to coordinate values of the respective points. For example, a first point Pt1 may represent training images having coordinate values (x1, y1) of the first point as a quality value thereof, and a second point Pt2 may represent training images having coordinate values (x2, y1) of the second point as a quality value thereof.

A device for generating a reference model (the reference model generating device) may generate training images for each of the N points by degrading the training images before degradation. The reference model generating device may generate a reference model by training the image quality processing model by using a training data set including training images before degradation and training images after degradation. For example, the reference model generating device may train the image quality processing model by using training images as training data, thereby generating reference model 1 corresponding to the first point Pt1. For example, the training images are obtained by degrading the training images before degradation and the training images obtained by degrading the images before degradation to have the quality value of the first point Pt1.

Reference model 1 may be an image quality processing model trained such that the training images after degradation corresponding to the quality value of the first point Pt1 are restored to the training images before degradation. Also, reference model 1 may be a model appropriate for processing image quality of images having the quality value of the first point Pt1.

Also, the reference model generating device may train the image quality processing model by using training images as a training data set, thereby generating reference model 2 corresponding to the second point Pt2. For example, the training images are obtained by degrading the training images before degradation and the training images after degradation to have the quality value of the second point Pt2.

Reference model 2 may be an image quality processing model trained such that the training images after degradation corresponding to the quality value of the second point Pt2 are restored to the training images before degradation. Also, reference model 2 may be a model appropriate for processing image quality of the images having the quality value of the second point Pt2.

The reference model generating device according to an embodiment of the disclosure may generate a reference model corresponding to each of the N points in the grid shape shown in FIG. 12. The reference model generating device determines positions of quality values of target training images as the respective positions of the N points in the grid form via uniform sampling, so that each of the N reference models is trained based on training images having quality values with a uniform gap therebetween.

However, the disclosure is not limited thereto, and the reference model generating device may determine a quality value corresponding to the reference model, based on a quality value distribution of the training images. For example, the reference model generating device may obtain the quality values of the training images by analyzing the training images and may determine a representative quality sampling position via statistical distribution of the quality values of the training images. For example, the reference model generating device may determine the representative sampling position by using a K-means clustering algorithm. The K-means clustering algorithm is an algorithm that finds a point with a minimum error when a data distribution is represented by K representative points.

The reference model generating device may group the quality value distribution of the training images into a preset number, for example, K clusters, and may determine a quality value at which a variance of a distance difference in each of the clusters is minimized. The reference model generating device may train a reference model by using the training images after image quality degradation having the determined quality value and the corresponding training images before

image quality degradation as a training data set. In this case, as a reference model may be trained by using training images having high statistical quality values, the number of reference models may be decreased. Also, the reference model such obtained may have a higher usability when generating a meta model in the future. Also, when the meta model is generated by using the reference model obtained in this manner, computational complexity and memory usage may be decreased.

The trained reference models may be stored in a server or an image processing device according to an embodiment of the disclosure.

The image processing device 100 may obtain a meta model by loading a pre-trained and stored reference model. In more detail, the meta model obtainer 323 may obtain in real time the meta model by using the pre-trained reference model.

According to an embodiment of the disclosure, the meta model obtainer 323 may obtain the meta model appropriate for a quality value of an input image. To this end, the meta model obtainer 323 may identify a reference model trained based on training images having a similar quality value to the quality value of the input image, by using the quality value of the input image identified by the quality analysis unit 310.

According to an embodiment of the disclosure, the meta model obtainer 323 may identify one or more reference models from among a plurality of reference models by comparing an image quality value of the input image with image quality values corresponding to the plurality of reference models.

According to an embodiment of the disclosure, the meta model obtainer 323 may select only a most-adjacent reference model that is most adjacent in order of distances. For example, the meta model obtainer 323 may identify a reference model trained based on training images having a most-adjacent quality value to the quality value of the input image. The meta model obtainer 323 may identify a reference model being adjacent in order of distances by calculating a difference, as a distance, between a quality value of a current input image and quality values of training images used to train reference models.

According to an embodiment of the disclosure, the meta model obtainer 323 may identify, from among the plurality of reference models, reference models trained based on training images having image quality values of which difference from the image quality value of the input image is within a reference value. According to another embodiment, the meta model obtainer 323 may identify, from among the plurality of reference models, a reference model trained based on training images having a preset number of image quality values in order in which a difference from the image quality value of the input image is close.

With reference to FIG. 12, it is assumed that, for example, an input image has a quality value at a point where a star-shaped figure is positioned. According to an embodiment of the disclosure, the meta model obtainer 323 may identify a reference model trained based on training images having a quality value of a point close to the star-shaped figure, that is, the quality value being close to the quality value of the input image, on the quality plane graph of FIG. 12.

As illustrated in FIG. 12, in an example case in which the input image has the quality value at the point of the star-shaped figure, the meta model obtainer 323 may identify a reference model trained based on training images having a quality value close to the point of the star-shaped figure on the graph of FIG. 12, i.e., the quality value being close to the quality value of the input image.

The meta model obtainer 323 may identify or select reference model 1 corresponding to a first point Pt1 close to the star-shaped figure, reference model 2 corresponding to a second point Pt2, reference model 3 corresponding to a third point Pt3, and reference model 4 corresponding to a fourth point Pt4. The reference models the meta model obtainer 323 of FIG. 12 identified by using the quality value of the input image are expressed as slash points.

The meta model obtainer 323 may obtain a meta model by interpolating the identified plurality of reference models. That a plurality of reference models are interpolated may mean that parameters of known reference models are interpolated to be used as a parameter of a meta model. The meta model obtainer 323 may obtain a weight (an interpolation coefficient) by using a difference between a quality value of a first image and a quality value corresponding to a reference model (a distance between the position of the star-shaped figure and a position of the quality value corresponding to the reference model).

For example, the meta model obtainer 323 may obtain the meta model by interpolating reference models, according to Equation 1 below.

$$\text{meta model} = W1 * \text{reference model } 1 + W2 * \text{reference model } 2 + \ldots + WN * \text{reference model } N \qquad \text{[Equation 1]}$$

Here, reference model 1 to reference model N may indicate parameters of a reference model. W1 to WN are weights to be applied to each reference model, and the weight may be determined as a value inversely proportional to a difference between quality values corresponding to selected reference models and the quality value of the input image (the distance between the position of the star-shaped figure and the position of the quality value corresponding to the reference model). For example, the weight may be expressed as "1/(distance)". A sum of the weights may be 1. For example, as a difference between a quality value corresponding to a reference model and the quality value of the input image increases, a

weight value to be applied to the reference model may decrease, and a difference between a quality value corresponding to a reference model and the quality value of the input image decreases, a weight value to be applied to the reference model may increase.

However, the disclosure is not limited thereto, and the meta model obtainer 323 may use various methods to obtain a meta model by interpolating a plurality of reference models. For example, the meta model obtainer 323 may obtain a meta model from a reference model by using various interpolation methods such as linear interpolation, spline interpolation, cubic interpolation, bilinear interpolation in which linear interpolation is extended to two dimensions, bicubic interpolation in which cubic interpolation is extended to two dimensions, or the like.

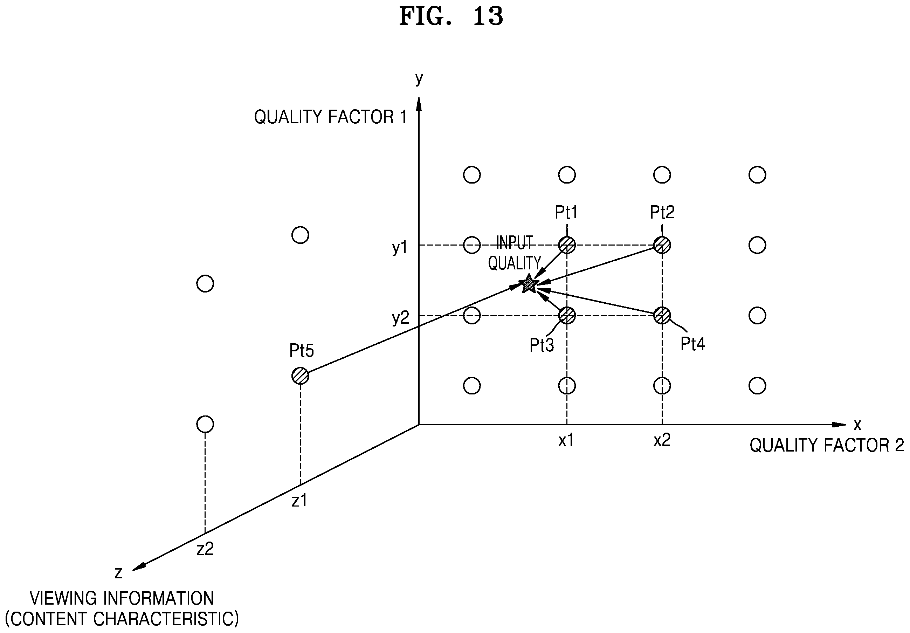

FIG. 13 is a graph for describing an example of an operation in which a metal model obtainer obtains a meta model by using a reference model, according to an embodiment of the disclosure.

The graph of FIG. 13 shows a three-dimensional quality plane graph. The three-dimensional quality plane graph is a graph representing a quality of an image as two QFs and one piece of viewing information, in which an x-axis may indicate a Quality Factor (QF) 1, a y-axis indicates may indicate a Quality Factor (QF) 2, and a z-axis may indicate viewing information. In the graph of FIG. 13, the viewing information corresponds to a characteristic of content, e.g., a type of content and a genre of content, but the disclosure is not limited thereto.

The reference model generating device may degrade training images that are not degraded and are classified according to a type and genre of content, and thus, may generate training images for each of N points. The reference model generating device may train an image quality processing model by using training data including training images before degradation and training images after degradation, and thus, may generate a reference model. The reference model may include at least one of an image quality processing model trained based on training images corresponding different types of content or an image quality processing model trained based on training images corresponding different genres of content.

For example, the reference model generating device may train the image quality processing model by using, as training data, training images before degradation and training images obtained by degrading the training images before degradation, which are classified according to a type and genre of content, and thus, may generate a reference model 5 corresponding to a fifth point Pt5. The reference model 5 may be a model appropriate for processing an image quality of images of content corresponding to the fifth point Pt5. A z-axis value z1 of N points may be determined according to a type of content, e.g., streaming content, broadcasting content, a Bluray disc, a console game, or the like. A z-axis value z1 of N points may be determined according to a genre of content, e.g., news, sports, a drama, a documentary, a variety show, a game, a movie, a video call, or the like.

According to an embodiment of the disclosure, the meta model obtainer 323 may further use viewing information in identifying a reference model. For example, the meta model obtainer 323 may compare a content characteristic of training images used to train each of the plurality of reference models with a content characteristic of the input image, and thus, may identify a reference model trained based on training images corresponding to content matching the content characteristic of the input image. That the content characteristic matches may include that a type of content or a genre of content may be identical to or similar with each other. In an example case in which content of the input image is streaming content, the image processing device 100 may identify a reference model trained based on training images corresponding to streaming content. In an example case in which a genre of content of the input image is a video call, the image processing device 100 may identify a reference model trained based on person-focused training images.

In an example case in which a plurality of reference models are identified, the meta model obtainer 323 may interpolate the plurality of reference models so as to obtain the meta model according to an embodiment of the disclosure. According to an embodiment of the disclosure, the meta model obtainer 323 may apply a weight to each of the identified plurality of reference models, and may obtain the meta model by performing weighted sum on each of the reference models to which the weight is applied.

Also, according to an embodiment of the disclosure, a weight of a reference model corresponding to W1 to WN of Equation 1 may be determined based on a difference between a type of content or a genre of the content corresponding to the reference model and a type of content or a genre of the content of the input image. In an example case in which the input image corresponds to streaming content, a weight value applied to a reference model corresponding to graphic content may be small. In an example case in which the input image corresponds to a video call genre, a weight value applied to a reference model corresponding to a movie genre or a drama genre may be large.

However, the disclosure is not limited thereto, and the meta model obtainer 323 may obtain a meta model from a two-dimensional quality plane graph representing a QF 1 and viewing information.

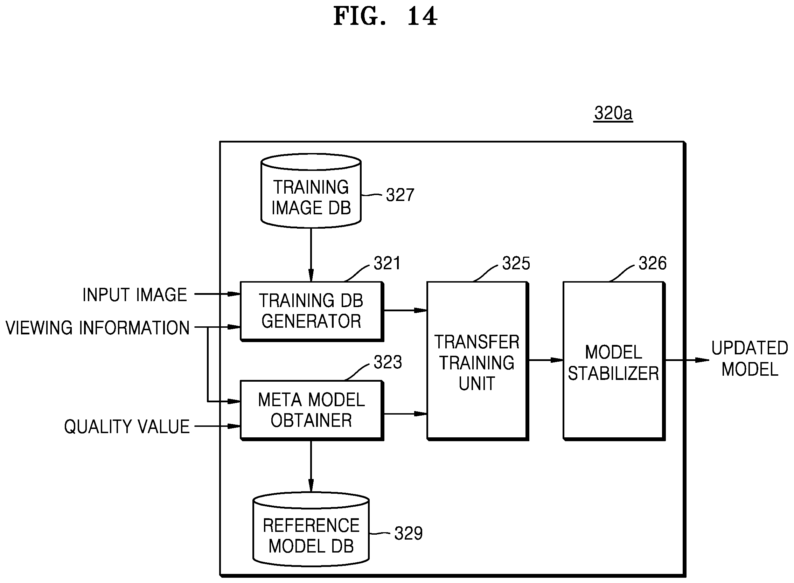

FIG. 14 is a diagram for describing an operation of a model training unit, according to an embodiment of the disclosure.

A model training unit 320a shown in FIG. 14 may be an example of the model training unit 320 of FIG. 3. Descriptions that are redundant to those of FIG. 8 are not provided here.

Referring to FIG. 14, the model training unit 320a may include the training DB generator 321, the meta model obtainer 323, the transfer training unit 325, and a model stabilizer 326. Unlike to the model training unit 320 of FIG. 8, the

model training unit 320a may further include the model stabilizer 326.

In a general linear system, an output in response to an input is predictable, but, in a deep training model, it is impossible to exactly predict an output, in response to a training condition and an initial value. Therefore, it may be difficult to prevent, by averaging image qualities of an image, a flickering phenomenon that occurs due to a sharp change between the image qualities. In an example case in which a method of performing training in a unit of an image is applied to a moving picture, flickering may occur due to a difference between image qualities of sequential images, due to a performance deviation of a transfer model that performs image quality restoration. As training is performed every time according to a change in an input environment in an on device training system, a stable update of a model is a very important factor to stabilize the system.

According to an embodiment of the disclosure, in order to solve a problem in which an image quality sharply changes between images included in a moving picture, the image processing device 100 may adjust a performance deviation of a transfer model for each frame by using the model stabilizer 326.

According to an embodiment of the disclosure, the model stabilizer 326 may stabilize transfer models by using a movement averaging method with respect to the transfer models. According to an embodiment of the disclosure, the model stabilizer 326 may stabilize transfer models by using a method of averaging parameters of the transfer models. According to an embodiment of the disclosure, the model stabilizer 326 may average transfer models by using a simple moving average method or an exponential moving average method.

According to an embodiment of the disclosure, the model stabilizer 326 may distinguish between a meta model obtained and trained based on an input image and an application model to be applied to an actual input image, and may obtain an application model to be applied to an input image of a current time point, by using a meta model trained after being obtained at the current time point and a meta model trained after being obtained at a past time point.

For example, the model stabilizer 326 may perform simple moving averaging on the meta model generated for the current input image and meta models generated for past input images, and may obtain a result therefrom as the application model to be applied to the current image. According to an embodiment of the disclosure, the model stabilizer 326 may average a meta model trained after being obtained at a first time point and meta models trained after being obtained at a past time point before the first time point, and may obtain a result of the average as an application model to be applied to a current image of the first time point.

According to another embodiment, the model stabilizer 326 may obtain a meta model to be applied to a current image, by using an exponential moving average method of averaging a meta model obtained in the past and a meta model obtained for the current input image.

According to an embodiment of the disclosure, the model stabilizer 326 may obtain a t time point exponential moving average model by considering both a meta model trained after being obtained at a first time point (t time point) and a meta model applied to a past input image at a past time point before the t time point. The t time point exponential moving average model may indicate a meta model that is actually applied to an input image input at the t time point and performs image quality processing.

For example, the model stabilizer 326 may obtain the t time point exponential moving average model by using Equation 2 below.

Hereinafter, an embodiment of the will now be described more fully with reference to the accompanying drawings for one of ordinary skill in the art to be able to perform the embodiment without any difficulty. The disclosure may, however, be embodied in many different forms and should not be construed as being limited to the embodiment set forth herein.

Throughout the disclosure, the expression "at least one of a, b or c" indicates only a, only b, only c, both a and b, both a and c, both b and c, all of a, b, and c, or variations thereof.

Although the terms used in embodiments of the disclosure are selected from among common terms that are currently widely used in consideration of their functions in the present disclosure, the terms may indicate various other terms according the intention of one of ordinary skill in the art, a precedent, or the advent of new technology. Therefore, the terms used in the disclosure should not be interpreted based on only their names but have to be defined based on the meaning of the terms together with the descriptions throughout the specification.

The terms used in the disclosure are just for the purpose of describing particular embodiments of the disclosure and are not intended to limit the scope of the disclosure.

Throughout the specification, it will also be understood that when an element is referred to as being "connected to" or "coupled with" another element, it can be directly connected to or coupled with the other element, or it can be electrically connected to or coupled with the other element by having an intervening element interposed therebetween.

The use of the terms "a" and "an" and "the" and similar referents in the context of describing the disclosure, especially in the context of the following claims, are to be construed to cover both the singular and the plural. Also, the steps of all methods described in the disclosure can be performed in any suitable order unless otherwise indicated herein or otherwise clearly contradicted by context. The disclosure is not limited by the steps described herein.

The expression "some embodiments" or "an embodiment" recited in the specification does not necessarily indicate the same embodiment.

Some embodiments of the disclosure may be described in terms of functional block elements and various processing operations. Some or all of such functional blocks may be implemented by any number of hardware and/or software elements configured to perform the specified functions. Some of the functional block elements may include terms such as "er (or)", "unit", "module", etc. For example, the functional blocks of the disclosure may be implemented by one or more microprocessors or may be implemented by circuit elements for predefined functions. Also, for example, the functional blocks of the disclosure may be implemented with any programming or various scripting languages. The functional blocks may be implemented in algorithms that are executed on one or more processors. Also, the disclosure may employ any number of techniques according to the related art for electronics configuration, signal processing and/or data processing, and the like. The terms "mechanism", "means" and "element" are used broadly and are not limited to mechanical or physical embodiments.

Furthermore, connecting lines or connectors between elements shown in drawings are intended to represent exemplary functional connection and/or physical or logical connection between the elements. It should be noted that many alternative or additional functional connections, physical connections or logical connections may be present in a practical device.

In addition, as used in the specification, the terms such as "er (or)", "unit", "module", etc., indicate a unit that performs at least one function or operation, which may be implemented as hardware or software or a combination of hardware and software.

In the specification, the processor may include various processing circuitry and/or multiple processors. For example, as used herein, including the claims, the term "processor" may include various processing circuitry, including at least one processor, wherein one or more of at least one processor, individually and/or collectively in a distributed manner, may be configured to perform various functions described herein. As used herein, when "a processor", "at least one processor", and "one or more processors" are described as being configured to perform numerous functions, these terms cover situations, for example and without limitation, in which one processor performs some of recited functions and another processor(s) performs other of recited functions, and also situations in which a single processor may perform all recited functions. Additionally, the at least one processor may include a combination of processors performing various of the recited /disclosed functions, e.g., in a distributed manner. At least one processor may execute program instructions to achieve or perform various functions.

Also, in the specification, the term "user" indicates a person who uses an image processing device, and may include a customer, an evaluator, a viewer, a manger, or a service engineer. Also, in the specification, the term "manufacturer" may indicate a manufacture that manufactures an image processing device and/or elements included in the image processing device.

In one or more embodiments of the disclosure, an "image" may indicate a still image, a picture, a frame, a moving picture including a plurality of sequential still images, or a video. In one or more embodiments of the disclosure, an image may indicate a patch cropped from the image and having meaningful information.

In one or more embodiments of the disclosure, a 'neural network' refers to a representative example of an artificial intelligence model simulating neurons of brain. However, the disclosure is not limited to a neural network model using a particular algorithm. The neural network may be referred to as a deep neural network.

In one or more embodiments of the disclosure, a 'parameter' refers to a value used in a calculation process of each layer of a neural network, and may be used to, for example, apply an input value to a preset formula. The parameter is a value set as a result of training, and may be refined by using separate training data when necessary.

Hereinafter, the disclosure will now be described in detail with reference to accompanying drawings.

FIG. 1 is a diagram illustrating an image quality processed image output by an image processing device, according to an embodiment of the disclosure.

Referring to FIG. 1, an image processing device 100 according to an embodiment of the disclosure may be an electronic device configured to process an input image and output an output image. The image processing device 100 according to an embodiment of the disclosure may be implemented in various forms including a display. For example, the image processing device 100 may be implemented in various electronic devices such as a television (TV), a mobile phone, a tablet personal computer (PC), a digital camera, a camcorder, a laptop computer, a desktop, an electronic-book terminal, a terminal for digital broadcasting, a personal digital assistant (PDA), a portable multimedia player (PMP), a navigation, an MP3 player, a wearable device, or the like.

The image processing device 100 may output a video. The video may include a plurality of frames. The video may include, but is not limited to, TV programs provided by content providers, or items such as various movies or dramas via video on demand (VOD) services. The content providers may include, but is not limited to, a terrestrial broadcast station, a cable broadcast station, an over the top (OTT) service provider, or an Internet protocol (IP) TV service provider, which provides various pieces of content including the video to a customer. The video is transmitted after being captured and compressed, and then is reproduced and output by the image processing device 100. Due to a limit in physical characteristics of a device used to capture the video and a limited bandwidth, information is lost, and thus, distortion may occur in an image. Due to the distortion of the image, a quality of the image may deteriorate.

The image processing device 100 according to an embodiment of the disclosure may perform image quality processing on an image. For example, the image processing device 100 may obtain an output image 120 by performing image quality processing on an input image 110. For example, the image processing device 100 may obtain a high-resolution (or high quality) output image by upscaling a low-resolution (or low quality) input image, by using an image quality processing model.

The image quality processing model according to an embodiment of the disclosure may include a neural network model configured to implement an upscaling algorithm capable of converting a low-resolution image into a high-resolution image. For example, the image quality processing model may include a neural network model trained, from a neural network model obtained based on a quality of the input image 110, by using training data corresponding to the input image 110.

The image processing device 100 according to an embodiment of the disclosure may train in real time an image quality processing model embedded in the image processing device 100, on the device itself. An image quality processing model according to an embodiment of the disclosure may be referred to as a meta model. The meta model may indicate a neural network model capable of fast learning or generalizing new data. The meta model may be pre-trained by using training data corresponding to various pieces of quality information stored in a cloud server, and then may be used by the image processing device 100 to process an image quality of an actual image. The image processing device 100 may decrease a domain gap problem by training the meta model by using an actual image as training data. As the meta model is a neural network pre-trained with respect to various image quality degradation scenarios, a training procedure for adjusting a parameter of the meta model, based on the input image 110, may be simplified. For example, the number of repetitive calculations in a gradient descent algorithm for adjusting the parameter of the meta model may be decreased. The image processing device 100 may generate, via on device learning, an adaptive meta model that is adaptive to the input image 110.

The image processing device 100 according to an embodiment of the disclosure may train a meta model, based on an image quality of the input image 110 and viewing information related to the input image 110. According to an embodiment, the viewing information may be referred to as watching information. The image quality of the input image 110 may indicate a degree of degradation of an image which is analyzed by an image quality analyzer. The viewing information related to the input image 110 may include auxiliary information related to the input image 110 other than the degree of degradation of the image which is analyzed by the image quality analyzer. For example, the auxiliary information, may include, but is not limited to, an attribute of the input image, a characteristic of the input image, or a watching environment when the input image 110 is watched. For example, the viewing information related to the input image 110 may include, but is not limited to, compression information of the input image 110, a type of content, a genre of the content, etc. Also, the viewing information related to the input image 110 may include, but is not limited to, an ambient environment of a device, a viewing distance between a user and the device, user personal information, etc. According to an embodiment, the viewing distance may be referred to as watching distance.

For example, the image processing device 100 may generate training data of the meta model, based on the image quality of the input image 110 and the viewing information related to the input image 110. For example, the image processing device 100 may generate (or obtain) the meta model, based on the image quality of the input image 110 and the viewing information related to the input image 110.

The image processing device 100 according to an embodiment of the disclosure may train the meta model, based on the image quality of the input image 110 and the viewing information related to the input image 110. Accordingly, the image processing device 100 may obtain the meta model in which a parameter is optimized according to the image quality of the input image 110 and the watching environment of the user. The image processing device 100 may generate the high-resolution output image 120, based on the meta model having the parameter optimized according to the image quality of the input image 110 and the watching environment of the user.

Hereinafter, a method by which the image processing device 100 trains a meta model by considering an image quality of the input image 110 and viewing information related to the input image 110 will now be described in detail.

FIG. 2 is a flowchart of a method by which an image processing device performs image quality processing on an input image, according to an embodiment of the disclosure.

Referring to FIG. 2, in operation 210, the method may include obtaining a neural network model corresponding to an image quality of an input image and viewing information related to the input image. For example, the image processing device 100 according to an embodiment of the disclosure may obtain a neural network model corresponding to an image quality of an input image and viewing information related to the input image.

The image processing device 100 according to an embodiment of the disclosure may determine an image quality or quality of the input image. An image quality or quality of an image may indicate a degree of degradation of the image. The image processing device 100 may evaluate or determine at least one of a compression degradation of an image, a blur level, a noise level, or a resolution of the image.

The image processing device 100 may analyze or evaluate the image quality of the input image by using an image quality analyzer (or a quality analysis unit). The image quality analyzer may include a first neural network trained to analyze

or evaluate an image quality of an input image. For example, the first neural network may be a neural network trained to evaluate an image quality of an image or a video, by using an image quality assessment (IQA) technique, a video quality assessment (VQA) technique, etc.

For example, the image processing device 100 may obtain, as quality information, a kernel sigma value indicating a blur quality of an image and a quality factor (QF) value indicating a compression quality of the image, by using the first neural network. However, the disclosure is not limited thereto. This will be described in detail with reference to FIG. 4.

In an example case in which the input image is any one of a plurality of frame images included in video content, the image processing device 100 according to an embodiment of the disclosure may obtain quality information of the input image, based on quality information of each of the plurality of frame images.

The image processing device 100 according to an embodiment of the disclosure may obtain the viewing information related to the input image. According to an embodiment of the disclosure, the viewing information may include auxiliary information obtained by the image processing device 100, as well as the quality information of the input image determined by using the image quality analyzer. The viewing information according to an embodiment of the disclosure may include compression information of an image, a type of content according to an image reception scheme, a genre of the content, an ambient environment of the image processing device 100, a viewing distance between the image processing device 100 and a user, user information, etc. The type of content and/or the genre of the content may be referred to as a characteristic of the content.

According to an embodiment of the disclosure, the image processing device 100 may obtain compression information of an image via compressed images having different resolutions, different bitrates, or different encoding information. The compression information of the image may include resolution information, bitrate information, and encoding information, which are of a compressed image. The image processing device 100 may determine whether the input image is a high-quality image or a low-quality image, according to the compression information of the image.

According to an embodiment of the disclosure, the image processing device 100 may determine or identify a type of content, based on an external device connected to the image processing device 100. The type of content may include streaming content, broadcasting content, a Bluray disc, a console game, or the like, according to the image reception scheme. For example, the streaming content may be received from a streaming server via a network, and the broadcasting content may be received from a broadcasting station via a set-top box or radio frequency (RF). The Bluray disc refers to media content received via a Bluray disc player, and the console game refers to graphic content received via a gaming device or a PC.

According to an embodiment of the disclosure, the image processing device 100 may identify a genre of content. For example, the image processing device 100 may identify the genre of content via metadata or text information of a program guide with respect to the content received from a broadcasting station, an OTT service provider, or the like. For example, the image processing device 100 may identify the genre of content by identifying an attribute of a currently-executed program, or a category, an attribute, or a type of a currently-executed application. The genre of content may include news, sports, a drama, a documentary, a variety show, a game, a movie, a video call, or the like.

According to an embodiment of the disclosure, the image processing device 100 may obtain ambient brightness information of the image processing device 100, via an illuminance sensor. The image processing device 100 may obtain the brightness information around the image processing device 100 via information about a viewing time and/or a viewing area. The ambient brightness information, the viewing time, and the viewing area may indicate an ambient environment. According to an embodiment of the disclosure, the image processing device 100 may obtain the viewing distance between the image processing device 100 and a user via a distance sensor. The image processing device 100 according to an embodiment of the disclosure may obtain the user information, based on an account, identification (ID), identification information, etc., which are registered by the user.

According to an embodiment of the disclosure, the image processing device 100 may obtain combination information in which one or more pieces of viewing information are combined. For example, the image processing device 100 may train the neural network model, based on the combination information in which one or more pieces of viewing information from among the compression information of the image, the type of content according to the image reception scheme, the genre of content, the ambient environment of the image processing device 100, the viewing distance between the image processing device 100 and a user, and the user information are combined.

The image processing device 100 according to an embodiment of the disclosure may obtain a meta model by using a plurality of reference models or anchor models. The reference model may indicate an image quality processing model pre-trained by using a training image. The reference model may be stored in a memory of the image processing device 100, an external database (DB), or the like.

According to an embodiment of the disclosure, the plurality of reference models may include at least one of an image quality processing model trained based on training images having different quality values, an image quality processing model trained based on training images corresponding to different types of content, or an image quality processing model trained based on training images corresponding to different genres of content.

The image processing device 100 according to an embodiment of the disclosure may compare a quality value of

training images used to train each of the plurality of reference models with a quality value of the input image, and thus, may identify a reference model trained based on training images having a similar quality of a quality of the input image.

The image processing device 100 according to an embodiment of the disclosure may compare a content characteristic of training images used to train each of the plurality of reference models with a content characteristic of the input image, and thus, may obtain a reference model trained based on training images corresponding to content matching the content characteristic of the input image. That the content characteristic matches may include that a type of content or a genre of content may be identical to or similar with each other. In an example case in which content of the input image is streaming content, the image processing device 100 may obtain a reference model trained based on training images corresponding to streaming content. In an example case in which a genre of content of the input image is a video call, the image processing device 100 may obtain a reference model trained based on person-focused training images.

In an example case in which a plurality of reference models are identified, the image processing device 100 according to an embodiment of the disclosure may interpolate the plurality of reference models so as to generate the meta model. For example, the image processing device 100 may apply a weight to each of the identified plurality of reference models, and may generate the meta model by performing weighted sum on each of the reference models to which the weight is applied. Here, the weight applied to each of the reference models may be determined based on a difference between a quality value corresponding to the reference model and a quality value of the input image. According to another embodiment, the weight applied to each of the reference models may be determined based on a difference between a type of content or a genre of the content corresponding to the reference model and a type of content or a genre of the content of the input image.

In operation 220, the method may include generating training data, based on at least one of a quality or viewing information of the input image. For example, the image processing device 100 according to an embodiment of the disclosure may generate training data, based on at least one of a quality or viewing information of the input image. The training data may include a pair of a low-resolution image and a high-resolution image. In one or more embodiments of the disclosure, a high-resolution image corresponding to a label of a neural network model is referred to as first data, and a low-resolution image is referred to as second data.

The image processing device 100 according to an embodiment of the disclosure may obtain an image corresponding to the obtained viewing information, and may use the image as a training image (first data). For example, the image processing device 100 may select an image corresponding to content having a same or similar type and genre, from training data stored in a DB. The training data may include high-resolution images. The training data may be stored in the external database, or may be stored in an internal memory of the image processing device 100. The first data may include a training image corresponding to the input image and content having a same or similar characteristic (type and genre) of the input image. This will be described in detail with reference to FIG. 9A.

The image processing device 100 according to an embodiment of the disclosure may identify a category of the input image, and may select an image included in the identified category, from training data stored in the DB. The image processing device 100 may use the image selected from the training data, as the training image (first data). The first data may include the input image and a training image that is included in a category of the input image. This will be described in detail with reference to FIG. 9B.

The image processing device 100 according to an embodiment of the disclosure may generate an image (second data) of which quality is degraded to have an image quality corresponding to the quality value and the compression information of the input image. The image processing device 100 may degrade training images included in the first data, and thus, may generate a degraded image from the training image, according to a degree of degradation of the input image. Also, the image processing device 100 according to an embodiment of the disclosure may degrade the training images included in the first data, and thus, may generate the degraded image from the training image, according to the compression information of the input image, e.g., the compression information of at least one of bitrate information of the input image, resolution information, or encoding information. For example, the image processing device 100 may generate the image quality degraded image by performing at least one of methods including compression degradation, blurring, noise addition, and down sampling on the selected training images.

The image processing device 100 according to an embodiment of the disclosure may obtain information about an ambient environment and/or a viewing distance via one or more sensors, and may generate an image quality adjusted image corresponding to the ambient environment and/or the viewing distance. The image processing device 100 may determine a target image quality of an image, based on the ambient environment and/or the viewing distance. The target image quality of the image may include one or more image qualities from among sharpness, brightness, a contrast, and a chroma. The image processing device 100 may generate the image quality adjusted image by increasing or decreasing a ratio of one or more of sharpness, brightness, a contrast, and a chroma of the input image, based on the target image quality. The image quality adjusted image may be referred to as second data that is image quality adjusted from the first data including the input image and the selected training image.

The image processing device 100 according to an embodiment of the disclosure may use, as training data, the first data and the second data obtained by performing image quality processing on the training image included in the first

data.

In operation 230, the method may include training the neural network model by using the training data. For example, the method may include obtaining a trained neural network model by training the neural network model by using the training data For example, the image processing device 100 according to an embodiment of the disclosure may train the neural network model by using the training data.

The image processing device 100 according to an embodiment of the disclosure may perform an on device training operation of training the image quality processing model to be adaptive to the input image, the image quality processing model being provided to process an image quality of the input image. The image processing device 100 may train the meta model by using the selected training images (first data) and the image quality degraded images (second data) obtained by performing image quality processing on the training images. The image processing device 100 may update a parameter of the meta model so as to allow a difference (a training error or loss) between an image output by inputting the image quality degraded image included in the training data to the meta model and a high-resolution training image included in the training data to be a minimum. For example, the image processing device 100 may train the meta model by using a gradient descent algorithm, but the disclosure is not limited thereto.

In operation 240, the method may include obtaining an output image corresponding to the input image, based on the trained neural network model. For example, the method may include obtaining the output image by performing an image quality processing operation on the first image based on the trained neural network model. For example, the image processing device 100 according to an embodiment of the disclosure may obtain an image quality processed output image from the input image, based on the trained neural network model. For example, the image processing device 100 may generate the output image by inputting the input image into the trained neural network model.

According to an embodiment of the disclosure, the trained meta model (the updated neural network model) may include a second neural network trained to process an image quality of an input image. For example, the second neural network may include an inference network configured to implement a super resolution (SR) algorithm capable of converting a low resolution (LR) to a high resolution (HR). According to an embodiment of the disclosure, the output image may be an image of a high resolution or a high image quality than that of the input image.

The image processing device 100 according to an embodiment of the disclosure may obtain the meta model having a parameter optimized according to a watching environment of a user, by training the meta model, based on the image quality of the input image and the viewing information related to the input image. The image processing device 100 may generate the high-resolution output image, based on the meta model having the parameter optimized for the image quality of the input image and the viewing information of the user.

FIG. 3 is an internal block diagram of an image processing device according to an embodiment of the disclosure.

Referring to FIG. 3, the image processing device 100 may include a quality analysis unit 310, a model training unit 320, an image quality processor 330, and a viewing information collector 340. The quality analysis unit 310, the model training unit 320, the image quality processor 330, and the viewing information collector 340 may be implemented by at least one processor. The quality analysis unit 310, the model training unit 320, the image quality processor 330, and the viewing information collector 340 may operate according to at least one instruction stored in a memory. However, the disclosure is not limited thereto, and as such, according to another embodiment, one or more other components may be added or omitted from the image processing device 100 illustrated in FIG. 3.

The quality analysis unit 310 according to an embodiment of the disclosure may analyze or evaluate an image quality or quality of an input image. An image quality of an image may indicate a degree of degradation of the image. The quality analysis unit 310 may evaluate or determine at least one of a compression degradation of an input image, a compression degree of the input image, a blur level, a noise level, or a resolution of the image.

The quality analysis unit 310 may analyze or evaluate the image quality of the input image by using a neural network trained to analyze or evaluate an image quality of an input image. For example, the neural network may be a neural network trained to evaluate an image quality of an image or a video, by using an IQA technique, a VQA technique, etc. For example, a first neural network may be a neural network trained to receive an input of an input image and output a kernel sigma value indicating a blur quality of the input image and a QF indicating a compression quality of the image. A structure of the first neural network may be equally expressed as the first neural network 400 of FIG. 4. A quality of an output input image may be represented on a quality plane graph of FIG. 5.

In an example case in which an input image is one of a plurality of frame images included in video content, the image processing device 100 according to an embodiment of the disclosure may obtain a quality value of the input image, based on a quality value of each of the plurality of frame images.

The image processing device 100 according to an embodiment of the disclosure may obtain an average quality value with respect to an input image of a first time point, based on a quality value of an input image of the first time point and a quality value of the input image of a past time point before the first time point. For example, the past time point may be referred to as a prior time point or a previous time point.

According to an embodiment of the disclosure, the quality analysis unit 310 may obtain an average image quality value with respect to an input image of a first time point, based on an image quality value of an input image of the first time

point and an image quality value of the input image of a past time point before the first time point. For example, the quality analysis unit 310 may obtain the average image quality value by taking into consideration the image quality value of the input image of the first time point and the image quality value of the input image of the past time point before the first time point.

According to an embodiment of the disclosure, the quality analysis unit 310 may use a method of obtaining a simple moving average with respect to N past samples. According to an embodiment of the disclosure, the quality analysis unit 310 may determine, as an image value of an input image input at a current time point, a value obtained by summing an image quality value of a past image input at a past time point and an image quality value of the input image input at the current time point and averaging the summed value.

According to another embodiment of the disclosure, the quality analysis unit 310 may use an exponential moving average method of obtaining an average based on only a past-calculated value and a currently-input value. According to an embodiment of the disclosure, the quality analysis unit 310 may obtain a first time point exponential moving average image quality value with respect to an input image input at a first time point, based on an image quality value of the image input at the first time point and a past time exponential moving average image quality value obtained with respect to an input image input at a past time before the first time point.

The quality analysis unit 310 according to an embodiment of the disclosure may provide the quality value of the input image to the model training unit 320.

The viewing information collector 340 according to an embodiment of the disclosure may collect or obtain viewing information related to the input image. According to an embodiment of the disclosure, the viewing information may include auxiliary information obtained by the image processing device 100, as well as the quality information of the input image determined by using the quality analysis unit 310. The viewing information according to an embodiment of the disclosure may include compression information of an image, a type of content according to an image reception scheme, a genre of the content, an ambient environment of the image processing device 100, a viewing distance between the image processing device 100 and a user, user information, etc. The type of content and/or the genre of the content may be referred to as a characteristic of the content.

According to an embodiment of the disclosure, the viewing information collector 340 may obtain compression information of an image via compressed images having different resolutions, different bitrates, or different encoding information. The compression information of the image may include resolution information, bitrate information, and encoding information, which are of a compressed image. The viewing information collector 340 may determine whether the input image is a high-quality image or a low-quality image, according to the compression information of the image.

According to an embodiment of the disclosure, the viewing information collector 340 may determine or identify a type of content, based on an external device connected to the image processing device 100. The type of content may include streaming content, broadcasting content, a Bluray disc, a console game, or the like, according to the image reception scheme. For example, the streaming content may be received from a streaming server via a network, and the broadcasting content may be received from a broadcasting station via a set-top box or RF. The Bluray disc refers to media content received via a Bluray disc player, and the console game refers to graphic content received via a gaming device or a PC.

According to an embodiment of the disclosure, the viewing information collector 340 may identify a genre of content. For example, the viewing information collector 340 may identify the genre of content via metadata or text information of a program guide with respect to the content received from a broadcasting station, an OTT service provider, or the like. For example, the viewing information collector 340 may identify the genre of content by identifying an attribute of a currently-executed program, or a category, an attribute, or a type of a currently-executed application. The genre of content may include news, sports, a drama, a documentary, a variety show, a game, a movie, a video call, or the like.

According to an embodiment of the disclosure, the viewing information collector 340 may obtain ambient brightness information of the image processing device 100, via an illuminance sensor. The illuminance sensor may be provided inside or outside the image processing device 100. The viewing information collector 340 may obtain the brightness information around the image processing device 100 via information about a viewing time and/or a viewing area. The ambient brightness information, the viewing time, and the viewing area may indicate an ambient environment. According to an embodiment of the disclosure, the viewing information collector 340 may obtain the viewing distance between the image processing device 100 and a user via a distance sensor. The distance sensor may be provided inside or outside the image processing device 100. The viewing information collector 340 according to an embodiment of the disclosure may determine a target image quality of an image by using one or more of the ambient brightness information, information about the viewing time and/or the viewing area, and the viewing distance. The target image quality may include one or more of sharpness, brightness, a contrast, and a chroma. The target image quality may be used for the model training unit 320 to generate second data of which image quality is adjusted from first data.

The viewing information collector 340 according to an embodiment of the disclosure may obtain user information, based on an account, ID, identification information, etc., which are registered by a user.

According to an embodiment of the disclosure, the viewing information collector 340 may obtain combination

information in which one or more pieces of viewing information are combined. For example, the viewing information collector 340 may obtain combination information in which one or more pieces of viewing information from among the compression information of the image, the type of content according to the image reception scheme, the genre of content, the ambient environment of the image processing device 100, the viewing distance between the image processing device 100 and a user, and the user information are combined.

The viewing information collector 340 according to an embodiment of the disclosure may provide viewing information to the model training unit 320.

The model training unit 320 according to an embodiment of the disclosure may perform an on device training operation. The on device training operation may include an operation of training an image quality processing model to be adaptive to the input image, the image quality processing model being provided to process an image quality of the input image.

The model training unit 320 according to an embodiment of the disclosure may train a neural network model, according to the quality of the input image provided from the quality analysis unit 310 and the viewing information provided from the viewing information collector 340.

The model training unit 320 according to an embodiment of the disclosure may generate a metal model corresponding to the quality of the input image provided from the quality analysis unit 310 and the viewing information provided from the viewing information collector 340.

The model training unit 320 according to an embodiment of the disclosure may generate training data corresponding to the quality of the input image provided from the quality analysis unit 310 and the viewing information provided from the viewing information collector 340.

The model training unit 320 according to an embodiment of the disclosure may generate an updated model by training (transfer training) the generated meta model by using training data corresponding to a first image. The model training unit 320 according to an embodiment of the disclosure may provide the updated model to the image quality processor 330.

An operation of the model training unit 320 according to an embodiment of the disclosure will be described in detail with reference to FIG. 8.

The image quality processor 330 according to an embodiment of the disclosure may load the updated model from the model training unit 320, and may perform image processing on the input image by using the updated model. The image quality processor 330 may obtain an output image by performing image processing on the input image. For example, the image quality processor 330 may perform image processing on the input image by using a second neural network trained to process an image quality of an image. For example, the second neural network may include an inference network configured to implement a super resolution (SR) algorithm capable of converting a low resolution (LR) to a high resolution (HR). The image quality processor 330 may perform image processing on the input image by using the model updated via the model training unit 320. The image quality processor 330 may obtain the output image by applying the input image to the updated model. For example, the output image may be a high-resolution image.

FIG. 4 illustrates a structure of a first neural network according to an embodiment of the disclosure.

Referring to FIG. 4, a first neural network 400 may be a neural network based on a convolution neural network (CNN), a deep convolution neural network (DCNN), or a capsule network (CapsNet). However, the disclosure is not limited thereto, and as such, the first neural network 400 may include another type of neural network.

According to an embodiment, the first neural network 400 may receive various data and may be trained to learn or discover a method of analyzing the input data, a method of classifying the input data, and/or a method of extracting a feature necessary for generating result data from the input data. For example, the first neural network 400 may be trained to implement a method of analyzing the input data, a method of classifying the input data, and/or a method of extracting a feature necessary for generating result data from the input data. The first neural network 400 may be generated as an artificial intelligence model with desired characteristics by applying a training algorithm to a plurality of pieces of training data. This training may be performed in the image processing device 100 itself or may be performed via a separate server/system.

Examples of the learning algorithm may include supervised learning, unsupervised learning, semi-supervised learning, or reinforcement learning. However, the learning algorithm in the embodiment of the disclosure is not limited to the examples described above unless specified. For example, the first neural network 400 may be trained as a data inference model via supervised learning using training data as an input value.

In an embodiment of the disclosure, the first neural network 400 may include, but is not limited to, an input layer, a hidden layer, and an output layer. In an embodiment of the disclosure, the first neural network 400 may be a deep neural network (DNN) including a plurality of hidden layers as the hidden layer.

The first neural network 400 according to an embodiment of the disclosure may be trained by using a training DB, which includes each training image and quality values corresponding to the each training image as a training data set. For example, the training data set may include degraded images generated by compressing, blurring, or adding noise to high-resolution images in various ways, and quality values (answer or label) of the deteriorated images. For example, the first

neural network 400 may be trained to output the quality value of the degraded image based on the degraded image is input to the first neural network 400. That is, the first neural network 400 may be trained to output the quality value of the degraded image when the degraded image is input to the first neural network 400.

For example, an input image including R, G, and B channels (RGB 3ch) may be input to the first neural network 400 shown in FIG. 4. According to another embodiment, a first image including Y, U, and V channels (YUV 3ch) may be input.

The first neural network 400 according to an embodiment of the disclosure may receive the input image including the R, G, and B channels (RGB 3ch) or the Y, U, and V channels (YUV 3ch), and may perform a convolution calculation by applying one or more kernels or filters to the first image, thereby extracting a feature map. For example, the first neural network 400 may output 32 channels by applying 32 3 X 3 filters to the input image. The first neural network 400 may scan a target of the convolution calculation pixel by pixel from left to right and from top to bottom, and may multiply the target by weight values included in the kernel and may add the result, thereby generating a result value. Data subject to the convolution calculation may be scanned by moving pixel by pixel, but may be scanned by moving by two or more pixels. During the scanning process, the number of pixels that input data moves is referred to as a stride, and a size of the output feature map may be determined according to a size of the stride.

The first neural network 400 according to an embodiment of the disclosure may have a single input multi output structure in which two types of quality values are output for one input image.

Also, in order to reduce network complexity, the first neural network 400 according to an embodiment of the disclosure may have a structure in which middle layers that extract features are commonly used and an output is separated at the last stage so as to output quality factors of the image.

The first neural network 400 according to an embodiment of the disclosure may obtain a 128-channel vector via pooling and may convert the 128-channel vector into a 256-channel vector via a linear network. Afterward, the first neural network 400 may obtain a final result by decreasing the 256-channel vector to one dimension. According to an embodiment of the disclosure, the first neural network 400 may output a quality value of an input image as two defined quality values.

The first neural network 400 according to an embodiment of the disclosure may output, as result values, blur sigma (or kernel sigma) indicating a blur quality of an image and a compression factor (QF) indicating a compression image quality of the image. Kernel sigma and QF may indicate a degree of degradation of a compressed image. Kernel sigma and QF may implicitly express a degree of degradation of a compressed image. However, the disclosure is not limited thereto, and the first neural network according to an embodiment of the disclosure may obtain various types of quality values as a result, as well as the blur sigma (or kernel sigma) and the QF values.

FIG. 5 is a graph showing quality information of various images, according to an embodiment of the disclosure.

FIG. 5 is a graph showing results of analyzing image quality of various images on a quality plane, and shows results of qualities of moving pictures captured via an image quality analyzer in a two-dimensional graph. An example of the image quality analyzer may include the quality analyzer 310 of FIG. 3 and the first neural network 400 of FIG. 4.

Referring to FIG. 5, a horizontal axis of a graph 500 represents a Kernel Sigma value, and a vertical axis of the graph 500 represents compression quality (quality factor (QF)) of an image. The Kernel Sigma value is a value that represents blur quality of an image. For example, as the Kernel Sigma value increases, the blur level increases, and as the Kernel Sigma value decreases, the blur level also decreases. For example, in a case in which the Kernel Sigma value is large, the blur level is also large, and in a case in which the Kernel Sigma value is small, the blur level is also small. The QF represents a degree of degradation due to compression. The smaller the QF value, the more severe the degradation due to compression, and the greater the QF value, the less degradation due to compression.

In the graph 500, symbols of the same shape represent quality values of images with the same resolution. As shown in the graph 500, even in an example case in which images have the same resolution and have the same symbol, the quality values of the images may be distributed in various ways. For example, even when images have the same resolution, the images may have various qualities depending on the degradation that occurs during the process of obtaining, transmitting, and storing the images.

However, this is merely an embodiment of the disclosure, and the image processing device 100 may further obtain another QF, as well as Kernel Sigma and a QF of each input image, by analyzing an input image. For example, the image processing device 100 may further obtain a QF indicating a noise level included in the input image, by analyzing the input image. In this case, a quality value of each input image which is obtained by the image processing device 100 may be expressed in a three-dimensional graph represented by three axes of Kernel Sigma, a QF, and a noise level.

According to an embodiment of the disclosure, the image processing device 100 may analyze in real time values of various qualities of an input image by using the image quality analyzer.

FIG. 6 illustrates an example of a type of viewing information, according to an embodiment of the disclosure.

Referring to FIG. 6, the image processing device 100 according to an embodiment of the disclosure may obtain an input image with viewing information corresponding to auxiliary information. For example, the image processing device 100 may obtain the viewing information via the viewing information collector 340.

According to an embodiment of the disclosure, the viewing information may include, but is not limited to, image

compression information 610, content type 620, content genre 630, an ambient environment 640 of the image processing device 100, a viewing distance 650 between the image processing device 100 and a user, user information 660. The content type 620 may be according to an image reception scheme. The image processing device 100 according to an embodiment of the disclosure may generate training data or generate a meta model, according to the viewing information.

According to an embodiment of the disclosure, the image compression information 610 may include, but is not limited to, resolution information, bitrate information, encoding information, etc., of an image. According to an embodiment of the disclosure, the image processing device 100 may receive a compressed image having different resolutions, different bitrates, or different encoding information. For example, the compressed image may include compressed image data having resolutions of 8K, 4K, full high-definition (FHD), and HD with respect to the same original image. For example, the compressed image may include compressed image data having bitrates of 40 megabits per second (Mbps), 30 Mbps, 20 Mbps, and 10 Mbps with respect to the same original image. For example, the compressed image may include compressed image data having codec information such as h.264, High Efficiency Video Coding (HEVC), AOMedia Video 1 (AV1), etc. with respect to the same original image. The image compression information 610 may be determined according to a state of a network between a content provider and the image processing device 100, e.g., a degree of occurrence of traffic.

The image processing device 100 according to an embodiment of the disclosure may identify the image compression information 610, based on attribute information or metadata of the image which is received from the content provider. The image processing device 100 may determine whether the input image is a high-quality image or a low-quality image, based on the image compression information 610. In an example case in which the image processing device 100 receives a high-resolution and high-bitrate image, the image processing device 100 may determine the input image as a high-quality image, and in an example case in which the image processing device 100 receives a low-resolution and low-bitrate image, the image processing device 100 may determine the input image as a low-quality image. For example, a high-resolution image may be an image having a resolution higher than a first reference resolution value, and a low-resolution image may be an image having a resolution lower than a second reference resolution value. For example, a high-bitrate image may be an image having a bitrate higher than a first reference bitrate value, and a low-bitrate image may be an image having a bitrate lower than a second reference bitrate value.

According to an embodiment of the disclosure, the content type 620 may include streaming content, broadcasting content, a video content, a stored content, a distributed content, a Bluray disc, a console game, or the like, according to an image reception scheme.

According to an embodiment of the disclosure, the image processing device 100 may determine or identify the content type 620, based on an external device connected to the image processing device 100. For example, the image processing device 100 may receive streaming content including VOD content, a real-time broadcasting program, etc., which are received from a streaming server such as an OTT service provider or an IPTV provider, which is connected via a network. The streaming content may further include a cloud game received from a cloud game server. The image processing device 100 may receive content in a streaming manner.

Also, for example, the image processing device 100 may receive broadcasting content such as a real-time broadcasting program received from a terrestrial broadcast station, a cable broadcast station, etc. which are connected via a set-top box. Also, for example, the image processing device 100 may receive broadcasting content such as a real-time broadcasting program received from a public broadcast station connected via RF.

Also, for example, the image processing device 100 may receive media content in the form of Bluray disc which is reproduced via a Bluray disc player. Also, for example, the image processing device 100 may receive graphic content of a console game executed via a game player or Internet.

According to an embodiment of the disclosure, the content genre 630 may include, but is not limited to, news, sports, a drama, a documentary, a variety show, a game, a movie, a video call, or the like.

According to an embodiment of the disclosure, the image processing device 100 may obtain metadata of received content from a broadcasting station, an OTT service provider, etc., and may identify the content genre 630 via the metadata. Metadata of content may be data that describes an attribute of the content or the content, and may be information indicating auxiliary information about the content. The metadata of content may include a program guide transmitted with broadcasting that is currently received. For example, based on text information of the program guide, the image processing device 100 may determine that a genre of currently-watched content corresponds to news, sports, a drama, a variety show, a documentary, or the like. The metadata of content may include a text, a logo, etc. which is output to a captured content screen.

According to another embodiment, the image processing device 100 according to an embodiment of the disclosure may identify the content genre 630 by identifying at least one of an attribute of a currently-executed program, a category of a currently-executed application, an attribute of a currently-executed application, or a type of a currently-executed application. For example, based on the attribute of the currently-executed application, the image processing device 100 may determine that a genre of currently-watched content corresponds to a movie, a game, news, sports, a video call, or the like.

According to an embodiment of the disclosure, the ambient environment 640 of the image processing device 100 may include, but is not limitd to, an ambient brightness, a viewing time (e.g., watching time) , a viewing area (e.g., watching area), etc. For example, the ambient brightness may include, but is not limited to, bright or dark. For example, the viewing time may include, but is not limited to, morning, afternoon, evening, or night. For example, the viewing area may indicate a geographical area. For example, the viewing area may include, but is not limited to, a high-latitude area, a middle-latitude area, a low-latitude area.

According to an embodiment of the disclosure, the image processing device 100 may obtain ambient brightness information of the image processing device 100, via an illuminance sensor. For example, the image processing device 100 may determine a level of brightness or a level of darkness around the image processing device 100, via the illuminance sensor.

According to an embodiment of the disclosure, the image processing device 100 may obtain the brightness information around the image processing device 100 via information about a viewing time and/or a viewing area. For example, the image processing device 100 may determine whether a viewing time is a morning time, an afternoon time, an evening time, or a night time, and may predict a level of brightness or a level of darkness around the image processing device 100. For example, the image processing device 100 may determine whether a viewing area is a high-latitude area, a middle-latitude area, or a low-latitude area, and may predict a level of brightness or a level of darkness around the image processing device 100 by combining the viewing area and the viewing time.

According to an embodiment of the disclosure, the image processing device 100 may obtain the viewing distance 650 between the image processing device 100 and a user via a distance sensor. For example, the image processing device 100 may determine whether a viewing distance between the image processing device 100 and a user is long or short, via the distance sensor.

According to an embodiment of the disclosure, the image processing device 100 may determine a target image quality of the input image, based on the ambient environment 640 and/or the viewing distance 650. The target image quality may include sharpness, brightness, a contrast, a chroma, etc. For example, the image processing device 100 may determine a ratio of increase or decrease in one or more of sharpness, brightness, a contrast, and a chroma of the input image. The image processing device 100 may generate training data, based on the target image quality of the input image. For example, the image processing device 100 may generate the training data by adjusting an image quality by increasing or decreasing one or more of sharpness, brightness, a contrast, and a chroma in the input image, at a constant ratio.

According to an embodiment of the disclosure, the user information 660 may include a gender (male, female), a race (Caucasian, Asian, African), an age (teenager, youth, middle-aged, senior), etc. According to an embodiment of the disclosure, the image processing device 100 may obtain the user information 660, based on an account, ID, identification information, etc., which are registered by the user.

FIGS. 7A, 7B and 7C illustrates combination examples of viewing information, according to an embodiment of the disclosure.

Referring to FIGS. 7A, 7B and 7C, the image processing device 100 according to an embodiment of the disclosure may obtain combination information in which one or more pieces of viewing information are combined. The image processing device 100 may generate training data, based on the combination information in which one or more pieces of viewing information are combined. The image processing device 100 may generate a meta model, based on the combination information in which one or more pieces of viewing information are combined.

Referring to FIG. 7A, in an example case in which a type of content is streaming content, a genre of the content may be classified to a movie, sports, a game, and a video call, based on metadata of the content or an attribute of an executed application. For example, the image processing device 100 may obtain viewing information indicating that an input image is streaming content and a movie genre and has an FHD resolution, a bitrate of 30 Mbps, and compression information of h.264 codec.

For example, the image processing device 100 may identify one or more reference models from among reference models that have trained training images corresponding to streaming content and reference models that have trained training images corresponding to a movie genre, and may obtain a meta model by using the identified one or more reference models.

For example, the image processing device 100 may select a training image (first data) corresponding to streaming content and/or a movie genre, from training data stored in a DB.

For example, the image processing device 100 may perform degradation processing on the training image, based on the FHD resolution, the bitrate of 30 Mbps, and the compression information of h.264 codec, and thus, may obtain a degraded image (second data). The image processing device 100 may train the meta model, by using the first data and the second data as training data.

Referring to FIG. 7B, in an example case in which a type of content is broadcasting content, a genre of the content may be classified to news, sports, and a documentary, based on a program guide. For example, the image processing device 100 may obtain viewing information indicating that an input image is broadcasting content and corresponds to a news genre.

For example, the image processing device 100 may identify one or more reference models from among reference models that have trained training images corresponding to broadcasting content and reference models that have trained training images corresponding to a news genre, and may obtain a meta model by using the identified one or more reference models.

For example, the image processing device 100 may select a training image (first data) corresponding to broadcasting content and/or a news genre, from training data stored in the DB.

Referring to FIG. 7C, for example, the image processing device 100 may obtain viewing information indicating that a viewing time of an input image is a morning time, ambient brightness is high, a viewing distance between the image processing device 100 and a user is short, and the user is a middle-aged person.

The image processing device 100 may determine a target image quality in which brightness and a chroma of an image are increased at a preset ratio. The image processing device 100 may generate training data by adjusting brightness and a chroma of an input image, based on the target image quality. For example, the image processing device 100 may apply the target image quality to first data, and thus, may generate second data of which image quality is adjusted. The image processing device 100 may train the meta model, by using the first data and the second data as training data.

FIG. 8 is a diagram for describing an operation of a model training unit, according to an embodiment of the disclosure.

Referring to FIG. 8, the model training unit 320 may include a training DB generator 321, a meta model obtainer 323, and a transfer training unit 325.

According to an embodiment of the disclosure, the model training unit 320 may obtain a meta model, based on a quality and viewing information of an input image, may train the meta model by using training data corresponding to the quality and viewing information of the input image, and thus, may generate a transfer model that is adaptive to the input image.

According to an embodiment of the disclosure, the training DB generator 321 may obtain training data corresponding to an input image by using the input image and viewing information.

According to an embodiment of the disclosure, the training DB generator 321 may obtain an image corresponding to the viewing information, and may use the image as a training image (first data). For example, the training DB generator 321 may select an image corresponding to content having a same or similar type and genre, from training data stored in a DB 327. The training data may include high-resolution images. The training data may be stored in the external database, or may be stored in an internal memory of the image processing device 100. The first data may include a training image corresponding to the input image and content having a same or similar characteristic (type and genre) of the input image.

According to another embodiment, the training DB generator 321 according to an embodiment of the disclosure may identify a category of an input image. For example, the training DB generator 321 may identify the category of the input image by a probability value. The training DB generator 321 may identify a category of a highest probability value as the category of the input image, and may select images in the identified category, from training data stored in the DB 327. The training DB generator 321 may obtain first data including an input image and a training image included in a category of the input image.

According to another embodiment, the training DB generator 321 according to an embodiment of the disclosure may obtain a preset number of images from among images that is included in the same category of the input image. According to another embodiment, the training DB generator 321 may identify a preset number of categories in order of high probability values from among categories of an input image, and may obtain images included in the identified categories, in proportion to the probability values. In an example case in which the training DB generator 321 determines that a probability an object included in an input image is a dog is 70% and a cat is 30%, a dog image and a cat image from among training data may be obtained at a ratio of 7:3.

According to an embodiment of the disclosure, the training DB generator 321 may generate an image (second data) of which image quality is degraded to have an image quality corresponding to the quality value and the viewing information of the input image. The training DB generator 321 may degrade training images included in the first data, and thus, may generate an image degraded from a training image, according to a degree of degradation of the input image. For example, the training DB generator 321 may generate the image quality degraded image by performing at least one of methods including compression degradation, blurring, noise addition, and down sampling on the selected training images.

According to an embodiment of the disclosure, the training DB generator 321 may receive compression information of the input image from the viewing information collector 340. The training DB generator 321 may degrade the training images included in the first data, and thus, may generate the degraded image from the training image, according to the compression information of the input image, e.g., the compression information of at least one of bitrate information of the input image, resolution information, or encoding information, which is included in the viewing information.

Also, the training DB generator 321 according to an embodiment of the disclosure may receive information about an ambient environment and/or a viewing distance from the viewing information collector 340. The training DB generator 321 may receive information about a target image quality determined based on the ambient environment and/or the

viewing distance. The training DB generator 321 may generate an image quality adjusted image by adjusting an image quality of training images included in the first data. For example, the training DB generator 321 may generate the image quality adjusted image by increasing or decreasing a ratio of one or more of sharpness, brightness, a contrast, and a chroma of the selected training images. The image quality adjusted image may be referred to as second data.

According to an embodiment of the disclosure, the training DB generator 321 may use the second data as training data for the meta model, the second data being obtained by performing image quality processing or image quality adjustment on the first data and the training image included in the first data. According to an embodiment of the disclosure, the training DB generator 321 may transmit the training data to the transfer training unit 325.

According to an embodiment of the disclosure, the meta model obtainer 323 may obtain the meta model corresponding to the quality and the viewing information of the input image. In an example case in which on device training is performed on a random initial model, without the meta model obtainer 323, a long training time is requested. However, according to an embodiment of the disclosure, it is possible to select a model matching the quality of the input image via the meta model obtainer 323, and to fast generate a meta model by using the selected model.

According to an embodiment of the disclosure, the meta model obtainer 323 may obtain a meta model by using a plurality of reference models. Reference models may be stored in a DB 329. The DB 329 may corresponding to the memory of the image processing device 100, an external DB, or the like. The manufacturer may pre-generate the plurality of reference models and store them in the image processing device 100, but the disclosure is not limited thereto.

According to an embodiment of the disclosure, the plurality of reference models may include an image quality processing model trained based on training images having different quality values, an image quality processing model trained based on training images corresponding to different types of content, or an image quality processing model trained based on training images corresponding to different genres of content. In an example case in which the plurality of reference models include a first reference model and a second reference model, the first reference model is an image quality processing model trained based on training images having a first image quality value, and the second reference model is an image quality processing model trained based on training images having a second image quality value. According to another embodiment, the first reference model is an image quality processing model trained based on training images corresponding to content of a first characteristic, and the second reference model is an image quality processing model trained based on training images corresponding to content of a second characteristic.

According to an embodiment of the disclosure, each of the plurality of reference models may be trained based on training images having quality values with a uniform gap therebetween. According to another embodiment, according to an embodiment of the disclosure, a quality value corresponding to reference model may be determined based on quality value distribution of training images. For example, the manufacturer may obtain quality values of training images by analyzing the training images, and may determine a representative quality sampling position via statistical distribution of the quality values of the training images. The manufacturer may train a reference model by using images having a quality value of the representative quality sampling position, as training data.

According to an embodiment of the disclosure, the meta model obtainer 323 may compare quality values of images used to train each of the plurality of reference models with a quality value of the input image, and thus, may identify a reference model trained based on training images having a similar image quality as an image quality of the input image.

According to an embodiment of the disclosure, the meta model obtainer 323 may identify a preset number of reference models trained based on images with quality values having a small difference from the quality value of the input image, from among the plurality of reference models. For example, the meta model obtainer 323 may identify a reference model trained based on images having a quality value of which difference from the quality value of the input image is within a reference value, from among the plurality of reference models.

According to an embodiment of the disclosure, the meta model obtainer 323 may further use viewing information in identifying a reference model. For example, the meta model obtainer 323 may compare a content characteristic of training images used to train each of the plurality of reference models with a content characteristic of the input image, and thus, may identify a reference model trained based on training images corresponding to content matching the content characteristic of the input image. That the content characteristic matches may include that a type of content or a genre of content may be identical to or similar with each other. In an example case in which content of the input image is streaming content, the image processing device 100 may identify a reference model trained based on training images corresponding to streaming content. In an example case in which a genre of content of the input image is a video call, the image processing device 100 may identify a reference model trained based on person-focused training images.

Un an example case in which one reference model is identified, the meta model obtainer 323 may use the identified one reference model as the meta model according to an embodiment of the disclosure.

In an example case in which a plurality of reference models are identified, the meta model obtainer 323 according to an embodiment of the disclosure may interpolate the plurality of reference models so as to generate the meta model. According to an embodiment of the disclosure, the meta model obtainer 323 may apply a weight to each of the identified plurality of reference models, and may generate the meta model by performing weighted sum on each of the reference models to which the weight is applied.

According to an embodiment of the disclosure, the weight applied to each of the reference models may be determined based on a difference between a quality value corresponding to the reference model and a quality value of the input image. For example, as the difference between the quality value corresponding to the reference model and the quality value of the input image increases, a weight value to be applied to the reference model decreases, and as the difference between the quality value corresponding to the reference model and the quality value of the input image decreases, a weight value to be applied to the reference model increases.

Also, according to an embodiment of the disclosure, the weight applied to each of the reference models may be determined based on a difference between a type of content or a genre of the content corresponding to the reference model and a type of content or a genre of the content of the input image. In an example case in which the input image corresponds to streaming content, a weight value to be applied to a reference model corresponding to graphic content may be small. In an example case in which the input image corresponds to a video call genre, a weight value to be applied to a reference model corresponding to a movie genre or a drama genre may be great.

According to an embodiment of the disclosure, the meta model obtainer 323 may transmit the obtained meta model to the transfer training unit 325.

According to an embodiment of the disclosure, the transfer training unit 325 may train the meta model, which is obtained by the meta model obtainer 323, by using training data received from the training DB generator 321.

According to an embodiment of the disclosure, the transfer training unit 325 may train the meta model by using a gradient descent algorithm. The gradient descent algorithm is an optimization algorithm for finding first-order approximations. According to an embodiment, the gradient descent algorithm includes a method of obtaining a gradient of a function and finding the value of x when a function value is a minimum value by continuously moving toward a lower absolute value of the gradient.

According to an embodiment of the disclosure, the transfer training unit 325 may compare an image output from the meta model by inputting an image with degraded image quality (second data) included in the training data to the meta model with an training image (first data) included in the training data, may obtain a difference (a training error or loss) between the two images as a slope of a function, and may obtain parameters of the model when an absolute value of the slope is minimized. That is, the transfer training unit 325 may obtain a transfer model by training the meta model by continuously updating the parameters of the meta model so that a quantitative difference between the image output from the meta model and the high-quality image included in a training data set is minimized.

According to an embodiment of the disclosure, the transfer training unit 325 may train the meta model by using known various training algorithms. The transfer training unit 325 may selectively apply hyper-parameters of training (a training rate, a distribution size, an end condition, etc.) an optimization algorithm (stochastic gradient descent (SGD), adaptive moment estimation (Adam), adaptive moment estimation for power (AdamP)), or the like, according to a limit condition of a system, which includes a memory, a calculator, power, etc.

According to an embodiment of the disclosure, the meta model obtainer 323 and the transfer training unit 325 may generate a transfer model at regular or random intervals. According to an embodiment of the disclosure, the meta model obtainer 323 may newly obtain a meta model in one of a frame unit, a unit of a scene including a plurality of frames, or in a case in which a content type of a video is changed. For example, the meta model obtainer 323 may newly obtain the meta model in an example case in which the content type is changed from news to a drama. According to an embodiment of the disclosure, in an example case in which the meta model obtainer 323 newly obtains the meta model, the transfer training unit 325 may update a transfer model by training the meta model. For example, the transfer training unit 325 may generate a new transfer model by training a meta model in every frame unit or a unit of a scene including a plurality of frames, or whenever a content type of a video is changed. According to an embodiment of the disclosure, the meta model obtainer 323 may newly obtain a meta model in every frame unit or a unit of a scene including a plurality of frames, or whenever a content type of a video is changed, e.g., when the content type is changed from news to a drama. According to an embodiment of the disclosure, whenever the meta model obtainer 323 newly obtains the meta model, the transfer training unit 325 may update a transfer model by training the meta model. For example, the transfer training unit 325 may generate a new transfer model by training a meta model in every frame unit or a unit of a scene including a plurality of frames, or whenever a content type of a video is changed.

According to an embodiment of the disclosure, the transfer training unit 325 may generate a transfer model that is adaptively trained to match an input image. The metal model updated by the transfer training unit 325 may be loaded to the image quality processor 330 and may be used in image quality processing.

In one or more embodiments of the disclosure, it is shown that the training DB generator 321 and the meta model obtainer 323 generate training data and a meta model by each using viewing information, but the disclosure is not limited thereto. For example, the viewing information may be transmitted only to the training DB generator 321 or only to the meta model obtainer 323.

FIG. 9A is a diagram for describing an example of an operation in which a training DB generator obtains training images related to an input image, according to an embodiment of the disclosure.

Referring to FIG. 9A, the training DB generator 321 according to an embodiment of the disclosure may collect,

from an external DB 910, images having a similar characteristic to a content characteristic of an input image, and may generate a training image (first data 920). For example, the training DB generator 321 may selectively collect, from an external DB 910, images having a similar characteristic to a content characteristic of an input image, and may generate a training image (first data 920).

According to an embodiment of the disclosure, the training DB generator 321 may obtain an image corresponding to viewing information, and may use the image corresponding to the viewing information, as the training image. For example, the training DB generator 321 may select, from the external DB 910, training images corresponding to the content characteristic of the input image. For example, the training DB generator 321 may select, from the external DB 910, training images corresponding a type or genre of the content. The training images selected from the external DB 910 may be stored in the first data 920. For example, the training DB generator 321 may use, as the training image, one or more external patches that are cropped from the viewing information and have meaningful information. For example, meaningful information may include, but is not limited to, attribute information or characteristic information. The one or more external patches corresponding to the input image may be stored in the first data 920. The one or more external patches may be referred to as correlating patches. For example, the correlating patches may be one or more patches extracted from the viewing information that are correlated with an input image.

In the external DB 910, high-resolution training data corresponding to various types of content including streaming content, broadcasting content, media content, game graphic content, or the like may be stored. A type pf content may vary according to content providers. Also, in the external DB 910, high-resolution training data is stored for each of various genres of content including news, sports, a drama, a documentary, a variety show, a game, a movie, a video call, etc.

According to an embodiment of the disclosure, the training DB generator 321 may select, as a training image, an image corresponding to content that is same as or similar to content of an input image. In an example case in which the input image is game content, the training DB generator 321 may select, as the training image, images corresponding to graphic content. In an example case in which the input image is a movie genre or a video call genre, the training DB generator 321 may select, as the training image, person-focused images. According to an embodiment of the disclosure, the training DB generator 321 may select images from among learning images stored in the internal memory of the image processing device 100, not in the external DB 910.

According to an embodiment of the disclosure, the training DB generator 321 may obtain, from the external DB 910, a training image corresponding to content that is same as or similar to content of the input image, and may generate a new DB including the training image, as the first data 920.

According to an embodiment of the disclosure, the training DB generator 321 may use the input image as a training image. For example, the training DB generator 321 may use, as the training image, one or more patches that are cropped from the input image and have meaningful information. For example, meaningful information may include, but is not limited to, attribute information or characteristic information. The one or more patches corresponding to the input image may be stored in the first data 920. The one or more patches corresponding to the input image may be referred to as self-patches.

According to an embodiment of the disclosure, the training DB generator 321 may generate the first data 920 including the training image corresponding to content that is same as or similar to content of the input image, and the input image. The first data 920 may be stored in the internal memory of the image processing device 100. The images included in the first data 920 may be used as high-resolution images to train a metal model.

FIG. 9B is a diagram for describing an example of an operation in which a training DB generator obtains training images related to an input image, according to an embodiment of the disclosure.

Referring to FIG. 9B, the training DB generator 321 may generate a training image (first data 925) by selectively collecting, from the external DB 910, images having similar content characteristics to content characteristics of an input image.

The training DB generator 321 according to an embodiment of the disclosure may use viewing information of the input image and category information of the input image so as to select a training image. The training DB generator 321 may select, as the training image, an image included in a category of the input image, by identifying the category of the input image.

The training DB generator 321 according to an embodiment of the disclosure may identify the category of the input image by using a third neural network 930. The third neural network 930 according to an embodiment of the disclosure may be an algorithm that receives images and classifies image categories from the input images, or a set of algorithms, software for executing a set of algorithms, and/or hardware for executing a set of algorithms.

The third neural network 930 according to an embodiment of the disclosure may use a softmax regression function to obtain various classes or categories as a result. The softmax function may be used when there are a plurality of correct answers (classes) that must be classified. For example, the softmax function may be used when predicting a plurality of classes. In an example case in which a total number of classes is k, the softmax function may receive a k-dimensional vector and may estimate a probability for each class. The third neural network 930 according to an

embodiment of the disclosure may be a neural network that receives a k-dimensional vector and is trained such that the probability for each class obtained therefrom is equal to a correct answer set. However, the disclosure is not limited thereto, and the third neural network 930 may be implemented as algorithms of various types capable of classifying image categories from an input image.

The third neural network 930 according to an embodiment of the disclosure may obtain a probability value for a category or class of the input image as a result. For example, the third neural network 930 may obtain vectors representing the probability that the category of the input image is a human face, a dog, a cat, and a building as 0.5, 0.2, 0.2, and 0.1, respectively, as the result value.

The training DB generator 321 according to an embodiment of the disclosure may identify a category with the highest probability as the category of the input image. For example, in the example above, the training DB generator 321 may identify the category of the input image as the human face, which is the category with the greatest vector value.

The training DB generator 321 according to an embodiment of the disclosure may obtain images with content characteristics similar to the content characteristics of the input image, that is, images included in the same or similar category as the input image. The training DB generator 321 according to an embodiment of the disclosure may obtain, from the external DB 910, the image included in a category similar to the category of the input image. The training DB generator 321 according to an embodiment of the disclosure may select an image from among training images stored in an internal memory of the image processing device 100, not from the external DB 910. Images having categories of various types may be labeled with an index or tag for a category of each image and stored in the external DB 910 or the internal memory according to an embodiment of the disclosure.

The training DB generator 321 may obtain, from the external DB 910, one or more images that are identified by an index of a category similar to the category of the input image, and may generate, as first data 925, a new DB including the one or more images.

According to another embodiment, the training DB generator 321 may identify only a predetermined number of categories in order of high probability value from among the categories of the input image, and may obtain images included in the identified category in proportion to the probability value. For example, the training DB generator 321 may obtain a human face image, a dog image, and a cat image at a ratio of 5:2:2 from the external DB 910, based on a result from the third neural network 930.

The training DB generator 321 may store one or more patches corresponding to the input image, in the first data 925.

The training DB generator 321 may generate the first data 925 including content same or similar to the input image and a training image corresponding to the identified category of the input image. The first data 925 may be stored in the internal memory of the image processing device 100. The images included in the first data 925 may be used as a high-resolution image for training the meta model.

FIG. 10A is a diagram for describing an example of an operation in which a training DB generator generates training data, according to an embodiment of the disclosure.

Referring to FIG. 10A, the training DB generator 321 according to an embodiment of the disclosure decreases an image quality by degrading images included in the first data 920.

According to an embodiment of the disclosure, the training DB generator 321 may degrade the images included in the first data 920, according to a quality characteristic and viewing information of an input image.

According to an embodiment of the disclosure, the training DB generator 321 may receive a quality value of the input image, and may degrade collected images to have a quality value corresponding the received quality value. The quality value of the input image may be a quality value that image processing device 100 obtained by analyzing or evaluating an image quality of the input image. According to an embodiment of the disclosure, the quality value of the input image may include Kernel Sigma indicating a blur level of the input image and a QF indicating a degree of compression degradation of the input image. The training DB generator 321 may degrade the images included in the first data 920 to have blur and compression degradation to the extent of those of the input image.

According to an embodiment of the disclosure, the training DB generator 321 may receive compression information of the input image, and may degrade the collected images to have compression information corresponding to the received compression information. The compression information of the input image may include one or more of bitrate information, resolution information, and encoding information, which are of the input image. The training DB generator 321 may degrade the images included in the first data 920 to have a bitrate, resolution, or encoding information which is the same as that of the input image.

For example, the training DB generator 321 may perform filtering to degrade the images included in the first data 920. The training DB generator 321 may use two-dimensional kernel to apply blur degradation to the images. According to another embodiment, the training DB generator 321 may process box blur to perform modelling on motion degradation. According to another embodiment, the training DB generator 321 may use a Gaussian filter to apply a shape or optical blur to the images. According to another embodiment, the training DB generator 321 may perform down sampling on the images included in the first data 920, based on resolution information from among the compression information of the input

image.

According to an embodiment of the disclosure, the training DB generator 321 may adjust a coefficient of the filter, according to blur of the input image.

Degradation may be performed via commonly known spatial filtering, and may be equal to an operation of a low pass filter in the field of signal processing. In detail, the degradation may be performed via a convolution calculation with two-dimensional Gaussian kernel.

According to an embodiment of the disclosure, the training DB generator 321 may degrade an image quality of the images included in the first data 920, and thus, may generate second data 1010 including degraded images.

According to an embodiment of the disclosure, the training DB generator 321 may use, as training data, the images included in the first data 920, and the second data 1010 including the degraded images which are generated by degrading the images. The training DB generator 321 may transmit the first data 920 and the second data 1010 to the transfer training unit 325.

According to an embodiment of the disclosure, the transfer training unit 325 may update a parameter of a meta model so as to allow a difference between an image output by inputting the image quality degraded images included in the second data 1010 to the meta model and the images before image quality degradation in the first data 920 to be a minimum.

FIG. 10B is a diagram for describing an example of an operation in which a training DB generator generates training data, according to an embodiment of the disclosure.

Referring to FIG. 10B, the training DB generator 321 according to an embodiment of the disclosure may degrade images included in the first data 920, according to viewing information of an input image.

According to an embodiment of the disclosure, the training DB generator 321 may receive information about a target image quality determined based on an ambient environment and/or a viewing distance. The information about the target image quality may include one or more piece of information from among sharpness, brightness, a contrast, and a chroma, which are of an image. The training DB generator 321 may generate an image quality adjusted image by adjusting an image quality of training images included in the first data 920. For example, the training DB generator 321 may generate an image quality adjusted image by increasing or decreasing a ratio of one or more of sharpness, brightness, a contrast, and a chroma of selected training images. The training DB generator 321 may generate second data 1020 including images in which the ratio of one or more of sharpness, brightness, a contrast, and a chroma of the selected training images is increased.

According to an embodiment of the disclosure, the training DB generator 321 may use the images included in the first data 920, and the second data 1020 including the images generated by performing image quality adjustment on the images in the first data 920. The training DB generator 321 may transmit the first data 920 and the second data 1020 to the transfer training unit 325.

According to an embodiment of the disclosure, the transfer training unit 325 may update a parameter of a meta model so as to allow a difference between an image output by inputting the image quality adjusted images included in the second data 1010 to the meta model and the images before image quality adjustment in the first data 920 to be a minimum.

FIG. 11 is a diagram for describing a method of reflecting, on a training image, degradation occurring in a compression procedure according to an embodiment of the disclosure.

Referring to FIG. 11, raw image data may be encoded into a Joint Photographic Experts Group (JPEG) compressed image through color conversion, frequency conversion (discrete cosine transform (DCT)), quantization, and arithmetic coding in that order. The encoded image may be reconstructed through decoding, dequantization, inverse DCT, and inverse color conversion processes. The encoding process may further include a subsampling operation, and the decoding process may include an inverse subsampling operation.

The training DB generator 321 according to an embodiment of the disclosure may obtain a compressed and degraded image by JPEG encoding and decoding an image to be degraded in the order shown in FIG. 11.

As entropy coding performed in the encoding/decoding process is a lossless compression method, quality degradation does not occur in the entropy coding and entropy decoding processes. Accordingly, the training DB generator 321 according to an embodiment of the disclosure may omit the entropy coding and entropy decoding processes for the image to be degraded and may perform only methods indicated by reference numeral 1110, to obtain the compressed degraded image.

The training DB generator 321 according to an embodiment of the disclosure may position the image to be degraded in the place of raw image data, may perform color conversion, DCT, and quantization on the image to be degraded, and may perform dequantization, inverse DCT, and inverse color conversion on the quantized image, to obtain the compressed degraded image.

FIG. 12 is a graph for describing an example of an operation in which a meta model obtainer obtains a meta model by using a reference model, according to an embodiment of the disclosure.

The graph of FIG. 12 represents a quality plane graph. The quality plane graph is a graph representing the quality of an image with two quality factors, with the horizontal axis representing quality factor 1 and the vertical axis representing quality factor 2. The image processing device 100 may analyze in real time an image quality of an input image via the quality

analysis unit 310, and thus, may obtain a quality value of the input image. The quality value of the input image may be represented on the quality plane graph of FIG. 12.

A metal model according to an embodiment of the disclosure for performing image quality processing on an input image may be generated based on a reference model that is a pre-trained image quality processing model. The reference model may be represented on the quality plane graph of FIG. 12.

The quality plane graph according to an embodiment of the disclosure may include N points in a grid form. For example, training images respectively corresponding to the N points may include training images degraded to have the corresponding quality. That is, in the graph of FIG. 12, the training images may refer to training images having a quality value corresponding to coordinate values of the respective points. For example, a first point Pt1 may represent training images having coordinate values (x1, y1) of the first point as a quality value thereof, and a second point Pt2 may represent training images having coordinate values (x2, y1) of the second point as a quality value thereof.

A device for generating a reference model (the reference model generating device) may generate training images for each of the N points by degrading the training images before degradation. The reference model generating device may generate a reference model by training the image quality processing model by using a training data set including training images before degradation and training images after degradation. For example, the reference model generating device may train the image quality processing model by using training images as training data, thereby generating reference model 1 corresponding to the first point Pt1. For example, the training images are obtained by degrading the training images before degradation and the training images obtained by degrading the images before degradation to have the quality value of the first point Pt1.

Reference model 1 may be an image quality processing model trained such that the training images after degradation corresponding to the quality value of the first point Pt1 are restored to the training images before degradation. Also, reference model 1 may be a model appropriate for processing image quality of images having the quality value of the first point Pt1.

Also, the reference model generating device may train the image quality processing model by using training images as a training data set, thereby generating reference model 2 corresponding to the second point Pt2. For example, the training images are obtained by degrading the training images before degradation and the training images after degradation to have the quality value of the second point Pt2.

Reference model 2 may be an image quality processing model trained such that the training images after degradation corresponding to the quality value of the second point Pt2 are restored to the training images before degradation. Also, reference model 2 may be a model appropriate for processing image quality of the images having the quality value of the second point Pt2.

The reference model generating device according to an embodiment of the disclosure may generate a reference model corresponding to each of the N points in the grid shape shown in FIG. 12. The reference model generating device determines positions of quality values of target training images as the respective positions of the N points in the grid form via uniform sampling, so that each of the N reference models is trained based on training images having quality values with a uniform gap therebetween.

However, the disclosure is not limited thereto, and the reference model generating device may determine a quality value corresponding to the reference model, based on a quality value distribution of the training images. For example, the reference model generating device may obtain the quality values of the training images by analyzing the training images and may determine a representative quality sampling position via statistical distribution of the quality values of the training images. For example, the reference model generating device may determine the representative sampling position by using a K-means clustering algorithm. The K-means clustering algorithm is an algorithm that finds a point with a minimum error when a data distribution is represented by K representative points.

The reference model generating device may group the quality value distribution of the training images into a preset number, for example, K clusters, and may determine a quality value at which a variance of a distance difference in each of the clusters is minimized. The reference model generating device may train a reference model by using the training images after image quality degradation having the determined quality value and the corresponding training images before image quality degradation as a training data set. In this case, as a reference model may be trained by using training images having high statistical quality values, the number of reference models may be decreased. Also, the reference model such obtained may have a higher usability when generating a meta model in the future. Also, when the meta model is generated by using the reference model obtained in this manner, computational complexity and memory usage may be decreased.

The trained reference models may be stored in a server or an image processing device according to an embodiment of the disclosure.

The image processing device 100 may obtain a meta model by loading a pre-trained and stored reference model. In more detail, the meta model obtainer 323 may obtain in real time the meta model by using the pre-trained reference model.

According to an embodiment of the disclosure, the meta model obtainer 323 may obtain the meta model appropriate for a quality value of an input image. To this end, the meta model obtainer 323 may identify a reference model

trained based on training images having a similar quality value to the quality value of the input image, by using the quality value of the input image identified by the quality analysis unit 310.

According to an embodiment of the disclosure, the meta model obtainer 323 may identify one or more reference models from among a plurality of reference models by comparing an image quality value of the input image with image quality values corresponding to the plurality of reference models.

According to an embodiment of the disclosure, the meta model obtainer 323 may select only a most-adjacent reference model that is most adjacent in order of distances. For example, the meta model obtainer 323 may identify a reference model trained based on training images having a most-adjacent quality value to the quality value of the input image. The meta model obtainer 323 may identify a reference model being adjacent in order of distances by calculating a difference, as a distance, between a quality value of a current input image and quality values of training images used to train reference models.

According to an embodiment of the disclosure, the meta model obtainer 323 may identify, from among the plurality of reference models, reference models trained based on training images having image quality values of which difference from the image quality value of the input image is within a reference value. According to another embodiment, the meta model obtainer 323 may identify, from among the plurality of reference models, a reference model trained based on training images having a preset number of image quality values in order in which a difference from the image quality value of the input image is close.

With reference to FIG. 12, it is assumed that, for example, an input image has a quality value at a point where a star-shaped figure is positioned. According to an embodiment of the disclosure, the meta model obtainer 323 may identify a reference model trained based on training images having a quality value of a point close to the star-shaped figure, that is, the quality value being close to the quality value of the input image, on the quality plane graph of FIG. 12.

As illustrated in FIG. 12, in an example case in which the input image has the quality value at the point of the star-shaped figure, the meta model obtainer 323 may identify a reference model trained based on training images having a quality value close to the point of the star-shaped figure on the graph of FIG. 12, i.e., the quality value being close to the quality value of the input image.

The meta model obtainer 323 may identify or select reference model 1 corresponding to a first point Pt1 close to the star-shaped figure, reference model 2 corresponding to a second point Pt2, reference model 3 corresponding to a third point Pt3, and reference model 4 corresponding to a fourth point Pt4. The reference models the meta model obtainer 323 of FIG. 12 identified by using the quality value of the input image are expressed as slash points.

The meta model obtainer 323 may obtain a meta model by interpolating the identified plurality of reference models. That a plurality of reference models are interpolated may mean that parameters of known reference models are interpolated to be used as a parameter of a meta model. The meta model obtainer 323 may obtain a weight (an interpolation coefficient) by using a difference between a quality value of a first image and a quality value corresponding to a reference model (a distance between the position of the star-shaped figure and a position of the quality value corresponding to the reference model).

For example, the meta model obtainer 323 may obtain the meta model by interpolating reference models, according to Equation 1 below.

meta model = W1 * reference model 1 + W2 * reference model 2 + ... + WN * reference model N [Equation 1]

Here, reference model 1 to reference model N may indicate parameters of a reference model. W1 to WN are weights to be applied to each reference model, and the weight may be determined as a value inversely proportional to a difference between quality values corresponding to selected reference models and the quality value of the input image (the distance between the position of the star-shaped figure and the position of the quality value corresponding to the reference model). For example, the weight may be expressed as "1/(distance)". A sum of the weights may be 1. For example, as a difference between a quality value corresponding to a reference model and the quality value of the input image increases, a weight value to be applied to the reference model may decrease, and a difference between a quality value corresponding to a reference model and the quality value of the input image decreases, a weight value to be applied to the reference model may increase.

However, the disclosure is not limited thereto, and the meta model obtainer 323 may use various methods to obtain a meta model by interpolating a plurality of reference models. For example, the meta model obtainer 323 may obtain a meta model from a reference model by using various interpolation methods such as linear interpolation, spline interpolation, cubic interpolation, bilinear interpolation in which linear interpolation is extended to two dimensions, bicubic interpolation in which cubic interpolation is extended to two dimensions, or the like.

FIG. 13 is a graph for describing an example of an operation in which a metal model obtainer obtains a meta model by using a reference model, according to an embodiment of the disclosure.

The graph of FIG. 13 shows a three-dimensional quality plane graph. The three-dimensional quality plane graph

is a graph representing a quality of an image as two QFs and one piece of viewing information, in which an x-axis may indicate a Quality Factor (QF) 1, a y-axis indicates may indicate a Quality Factor (QF) 2, and a z-axis may indicate viewing information. In the graph of FIG. 13, the viewing information corresponds to a characteristic of content, e.g., a type of content and a genre of content, but the disclosure is not limited thereto.

The reference model generating device may degrade training images that are not degraded and are classified according to a type and genre of content, and thus, may generate training images for each of N points. The reference model generating device may train an image quality processing model by using training data including training images before degradation and training images after degradation, and thus, may generate a reference model. The reference model may include at least one of an image quality processing model trained based on training images corresponding different types of content or an image quality processing model trained based on training images corresponding different genres of content.

For example, the reference model generating device may train the image quality processing model by using, as training data, training images before degradation and training images obtained by degrading the training images before degradation, which are classified according to a type and genre of content, and thus, may generate a reference model 5 corresponding to a fifth point Pt5. The reference model 5 may be a model appropriate for processing an image quality of images of content corresponding to the fifth point Pt5. A z-axis value z1 of N points may be determined according to a type of content, e.g., streaming content, broadcasting content, a Bluray disc, a console game, or the like. A z-axis value z1 of N points may be determined according to a genre of content, e.g., news, sports, a drama, a documentary, a variety show, a game, a movie, a video call, or the like.

According to an embodiment of the disclosure, the meta model obtainer 323 may further use viewing information in identifying a reference model. For example, the meta model obtainer 323 may compare a content characteristic of training images used to train each of the plurality of reference models with a content characteristic of the input image, and thus, may identify a reference model trained based on training images corresponding to content matching the content characteristic of the input image. That the content characteristic matches may include that a type of content or a genre of content may be identical to or similar with each other. In an example case in which content of the input image is streaming content, the image processing device 100 may identify a reference model trained based on training images corresponding to streaming content. In an example case in which a genre of content of the input image is a video call, the image processing device 100 may identify a reference model trained based on person-focused training images.

In an example case in which a plurality of reference models are identified, the meta model obtainer 323 may interpolate the plurality of reference models so as to obtain the meta model according to an embodiment of the disclosure. According to an embodiment of the disclosure, the meta model obtainer 323 may apply a weight to each of the identified plurality of reference models, and may obtain the meta model by performing weighted sum on each of the reference models to which the weight is applied.

Also, according to an embodiment of the disclosure, a weight of a reference model corresponding to W1 to WN of Equation 1 may be determined based on a difference between a type of content or a genre of the content corresponding to the reference model and a type of content or a genre of the content of the input image. In an example case in which the input image corresponds to streaming content, a weight value applied to a reference model corresponding to graphic content may be small. In an example case in which the input image corresponds to a video call genre, a weight value applied to a reference model corresponding to a movie genre or a drama genre may be large.

However, the disclosure is not limited thereto, and the meta model obtainer 323 may obtain a meta model from a two-dimensional quality plane graph representing a QF 1 and viewing information.

FIG. 14 is a diagram for describing an operation of a model training unit, according to an embodiment of the disclosure.

A model training unit 320a shown in FIG. 14 may be an example of the model training unit 320 of FIG. 3. Descriptions that are redundant to those of FIG. 8 are not provided here.

Referring to FIG. 14, the model training unit 320a may include the training DB generator 321, the meta model obtainer 323, the transfer training unit 325, and a model stabilizer 326. Unlike to the model training unit 320 of FIG. 8, the model training unit 320a may further include the model stabilizer 326.

In a general linear system, an output in response to an input is predictable, but, in a deep training model, it is impossible to exactly predict an output, in response to a training condition and an initial value. Therefore, it may be difficult to prevent, by averaging image qualities of an image, a flickering phenomenon that occurs due to a sharp change between the image qualities. In an example case in which a method of performing training in a unit of an image is applied to a moving picture, flickering may occur due to a difference between image qualities of sequential images, due to a performance deviation of a transfer model that performs image quality restoration. As training is performed every time according to a change in an input environment in an on device training system, a stable update of a model is a very important factor to stabilize the system.

According to an embodiment of the disclosure, in order to solve a problem in which an image quality sharply changes between images included in a moving picture, the image processing device 100 may adjust a performance

deviation of a transfer model for each frame by using the model stabilizer 326.

According to an embodiment of the disclosure, the model stabilizer 326 may stabilize transfer models by using a movement averaging method with respect to the transfer models. According to an embodiment of the disclosure, the model stabilizer 326 may stabilize transfer models by using a method of averaging parameters of the transfer models. According to an embodiment of the disclosure, the model stabilizer 326 may average transfer models by using a simple moving average method or an exponential moving average method.

According to an embodiment of the disclosure, the model stabilizer 326 may distinguish between a meta model obtained and trained based on an input image and an application model to be applied to an actual input image, and may obtain an application model to be applied to an input image of a current time point, by using a meta model trained after being obtained at the current time point and a meta model trained after being obtained at a past time point.

For example, the model stabilizer 326 may perform simple moving averaging on the meta model generated for the current input image and meta models generated for past input images, and may obtain a result therefrom as the application model to be applied to the current image. According to an embodiment of the disclosure, the model stabilizer 326 may average a meta model trained after being obtained at a first time point and meta models trained after being obtained at a past time point before the first time point, and may obtain a result of the average as an application model to be applied to a current image of the first time point.

According to another embodiment, the model stabilizer 326 may obtain a meta model to be applied to a current image, by using an exponential moving average method of averaging a meta model obtained in the past and a meta model obtained for the current input image.

According to an embodiment of the disclosure, the model stabilizer 326 may obtain a t time point exponential moving average model by considering both a meta model trained after being obtained at a first time point (t time point) and a meta model applied to a past input image at a past time point before the t time point. The t time point exponential moving average model may indicate a meta model that is actually applied to an input image input at the t time point and performs image quality processing.

For example, the model stabilizer 326 may obtain the t time point exponential moving average model by using Equation 2 below.

t time point exponential moving average model = $\alpha$ * (model trained at t time point) + (1-$\alpha$)* (t-1 time point exponential moving average model) [Equation 2]

Here, $\alpha$ (alpha) may be determined according to a convergence speed or system stability. The models of Equation 2 may be a set of parameter values of a meta model, and a parameter value of a model may include a filter weight and values of bias.

Equation 2 may be rearranged to be expressed as Equation 3.

t time point exponential moving average model = model used at t-1 time point + $\alpha$ * $\delta$, [Equation 3]

Here, it may mean that $\delta$ (delta model) = (model trained at t time point) - (t-1 time point exponential moving average model).

This may indicate that a past model is updated as $\delta$ (delta model) is gradually added thereto by $\alpha$. In this case, as the number of multiplication calculators for model update is decreased in half, power consumption may be decreased.

A value of $\alpha$ may be used as a fixed value according to various conditions, and may be newly initialized or changed according to a change in a scene, a change in content, or the like.

According to an embodiment of the disclosure, the image quality processor 330 may obtain an output image by applying, to an input image of t time point, the t time point exponential moving average model obtained by the model stabilizer 326. That is, according to an embodiment of the disclosure, the model stabilizer 326 does not apply a meta model trained after being obtained at a t time point to the input image of the t time point but applies the t time point exponential moving average model to process an image quality of the input image, and thus, may perform image quality stabilization in which an output image of which image quality is processed for the input image does not have a sharp image quality difference from images output at a previous time point.

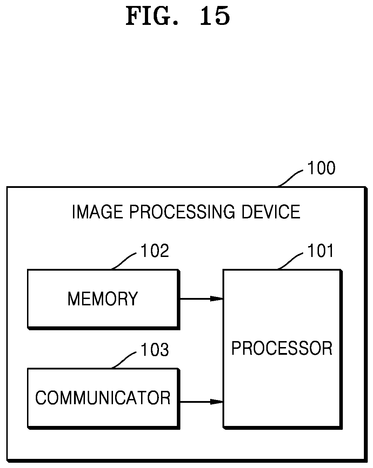

FIG. 15 is a block diagram of a configuration of an image processing device according to an embodiment of the disclosure.

Referring to FIG. 15, the image processing device 100 according to an embodiment of the disclosure may include the processor 101, a memory 102, and a communicator 103.

The communicator 103 according to an embodiment of the disclosure may transmit and receive data or signals to and from an external device or a server. For example, the communicator 103 may include a wireless fidelity (Wi-Fi) module, a Bluetooth module, an infrared communication, a wireless communication module, a local area network (LAN) module, an

Ethernet module, a wired communication module, or the like. In this case, each of the communication modules may be implemented in the form of at least one hardware chip.

The Wi-Fi module and the Bluetooth module may perform communication by using Wi-Fi and Bluetooth methods, respectively. In an example case in which the Wi-Fi module or the Bluetooth module is used, various connection information such as a service set identifier (SSID) and a session key is first transmitted and received, and various information may be transmitted and received after establishing a communication connection by using the connection information. Wireless communication modules may include at least one communication chip that performs communication according to various wireless communication standards such as ZigBee, 3$^{rd}$ Generation (3G), 3$^{rd}$ Generation Partnership Project (3GPP), Long Term Evolution (LTE), LTE Advanced (LTE-A), 4$^{th}$ Generation (4G), 5$^{th}$ Generation (5G), or the like.

According to an embodiment of the disclosure, the communicator 103 may transmit a model storage condition to a server. According to an embodiment of the disclosure, the communicator 103 may receive a reference model corresponding to the model storage condition from the server.

According to an embodiment of the disclosure, the processor 101 may perform functions of controlling an overall operation of the image processing device 100 and signal flow between internal elements of the image processing device 100, and processing data.

The processor 101 may include single core, dual core, triple core, quad core, and multiple cores thereof. In addition, the processor 101 may include a plurality of processors. For example, the processor 101 may be implemented as a main processor and a sub processor.

In addition, the processor 101 may include at least one of a central processing unit (CPU), a graphics processing unit (GPU), or a video processing unit (VPU). According to another embodiment, depending on an embodiment of the disclosure, the processor 101 may be implemented in the form of a system on chip (SoC) integrating at least one of CPU, GPU, or VPU. According to another embodiment, the processor 101 may further include a neural processing unit (NPU).

According to an embodiment of the disclosure, the memory 102 may store various data, programs, or applications for driving and controlling the image processing device 100.

Also, a program stored in the memory 102 may include one or more instructions. The program (the one or more instructions) or the applications stored in the memory 102 may be executed by the processor 101.

According to an embodiment of the disclosure, the processor 101 may include the quality analysis unit 310, the model training unit 320, the image quality processor 330, and the viewing information collector 340 of FIG. 3, and may perform operations of the quality analysis unit 310, the model training unit 320, the image quality processor 330, and the viewing information collector 340.

According to an embodiment of the disclosure, the processor 101 is configured to execute the one or more instructions stored in the memory 102 to obtain a neural network model corresponding to an image quality of an input image and viewing information related to or corresponding to the input image. According to an embodiment of the disclosure, the processor 101 is configured to generate training data, based on a quality of the input image and the viewing information. According to an embodiment of the disclosure, the processor 101 is configured to train the neural network model by using the training data. According to an embodiment of the disclosure, the processor 101 is configured to obtain an image quality processed output image from the input image, based on the trained neural network model.

According to an embodiment of the disclosure, the viewing information may include resolution information, bitrate information, encoding information, a content type, a content genre, an ambient environment, a viewing distance, user information, which are of the input image, or a combination of one or more pieces of viewing information.

According to an embodiment of the disclosure, the processor 101 may be configured to execute the one or more instructions stored in the memory 102 to, based on the viewing information including the content type and/or the content genre of the input image, obtain a training image corresponding to the content type and/or the content genre, as first data. According to an embodiment of the disclosure, the processor 101 may be configured to obtain an image quality degraded image as second data, the image quality degraded image being obtained by performing image quality degradation on the training image in the first data to have an image quality corresponding to a quality value of the input image. The training data may include the first data and the second data.

According to an embodiment of the disclosure, the processor 101 may be configured to execute the one or more instructions stored in the memory 102 to obtain one or more pieces of compression information from among the bitrate information, the resolution information, and the encoding information, which are of the input image and correspond to the viewing information of the input image. According to an embodiment of the disclosure, the processor 101 may be configured to obtain one or more quality values from among a compression image quality, a blur image quality, and noise, which are of the input image. According to an embodiment of the disclosure, the processor 101 may be configured to obtain the image quality degraded image by performing image quality processing on the input image, based on the quality value of the input image and the one or more pieces of compression information.

According to an embodiment of the disclosure, the processor 101 may be configured to execute the one or more instructions stored in the memory 102 to obtain the ambient environment and/or the viewing distance corresponding to the viewing information via one or more sensors. According to an embodiment of the disclosure, the processor 101 may be

configured to determine a target image quality of an image, based on the ambient environment and/or the viewing distance. According to an embodiment of the disclosure, the processor 101 may be configured to generate the training data by adjusting an image quality of the input image, based on the target image quality. The target image quality of the image may include one or more image qualities from among sharpness, brightness, a contrast, and a chroma.

According to an embodiment of the disclosure, the processor 101 may be configured to execute the one or more instructions stored in the memory 102 to train the neural network model to allow a difference between an image output by inputting the image quality degraded image in the second data to the neural network model and the training image included in the first data to be a minimum.

According to an embodiment of the disclosure, the processor 101 may be configured to execute the one or more instructions stored in the memory 102 to obtain, via a plurality of reference models, a neural network model corresponding to the image quality of the input image and the viewing information related to the input image. According to an embodiment of the disclosure, the plurality of reference models may include at least one of an image quality processing model trained based on training images having different quality values, an image quality processing model trained based on training images corresponding to different types of content, or an image quality processing model trained based on training images corresponding to different genres of content.

According to an embodiment of the disclosure, the processor 101 may be configured to execute the one or more instructions stored in the memory 102 to identify one or more reference models from among the plurality of reference models by comparing a content type and/or a content genre corresponding to the plurality of reference models with the content type and/or the content genre of the input image. According to an embodiment of the disclosure, the processor 101 may be configured to obtain the neural network model by using the identified one or more reference models.

According to an embodiment of the disclosure, the processor 101 may be configured to execute the one or more instructions stored in the memory 102 to identify one or more reference models from among the plurality of reference models by comparing a quality value corresponding to the plurality of reference models with the quality value of the input image. According to an embodiment of the disclosure, the processor 101 may be configured to obtain the neural network model by using the identified one or more reference models.

According to an embodiment of the disclosure, the processor 101 may be configured to execute the one or more instructions stored in the memory 102 to, based on a plurality of reference models being identified, apply a weight to each of the identified plurality of reference models. According to an embodiment of the disclosure, the processor 101 may be configured to obtain the neural network model by performing weighted sum on each of the identified plurality of reference models to which the weight is applied. According to an embodiment of the disclosure, the processor 101 may be configured to determine the weight, based on a difference between a quality value corresponding to a reference model and the quality value of the input image.

According to an embodiment of the disclosure, an operating method of the image processing device includes obtaining a neural network model corresponding to an image quality of an input image and viewing information related to the input image, generating training data, based on a quality of the input image and the viewing information, training the neural network model by using the training data, and obtaining an image quality processed output image from the input image, based on the trained neural network model.

According to an embodiment of the disclosure, the generating of the training data, based on the quality of the input image and the viewing information may include based on the viewing information including the content type and/or the content genre of the input image, obtaining a training image corresponding to the content type and/or the content genre, as first data, and obtaining an image quality degraded image as second data, the image quality degraded image being obtained by performing image quality degradation on the training image in the first data to have an image quality corresponding to a quality value of the input image.

According to an embodiment of the disclosure, the generating of the training data, based on the quality of the input image and the viewing information may include obtaining one or more pieces of compression information from among the bitrate information, the resolution information, and the encoding information, which are of the input image and correspond to the viewing information of the input image, obtaining one or more quality values from among a compression image quality, a blur image quality, and noise, which are of the input image, and obtaining the image quality degraded image by performing image quality processing on the input image, based on the quality value of the input image and the one or more pieces of compression information.

According to an embodiment of the disclosure, the generating of the training data, based on the quality of the input image and the viewing information may include obtaining the ambient environment and/or the viewing distance corresponding to the viewing information via one or more sensors, determining a target image quality of an image, based on the ambient environment and/or the viewing distance, and generating the training data by adjusting an image quality of the input image, based on the target image quality. The target image quality of the image may include one or more image qualities from among sharpness, brightness, a contrast, and a chroma.

According to an embodiment of the disclosure, the training of the neural network model by using the training data may include training the neural network model to allow a difference between an image output by inputting the image quality

degraded image in the second data to the neural network model and the training image included in the first data to be a minimum.

According to an embodiment of the disclosure, the obtaining of the neural network model corresponding to the image quality of the input image and the viewing information related to the input image may include obtaining, via a plurality of reference models, a neural network model corresponding to the image quality of the input image and the viewing information related to the input image. At least one of the plurality of reference models may include at least one of an image quality processing model trained based on training images having different quality values, an image quality processing model trained based on training images corresponding to different types of content, or an image quality processing model trained based on training images corresponding to different genres of content.

According to an embodiment of the disclosure, the obtaining of the neural network model corresponding to the image quality of the input image and the viewing information related to the input image may include identifying one or more reference models from among the plurality of reference models by comparing a content type and/or a content genre corresponding to the plurality of reference models with the content type and/or the content genre of the input image, and obtaining the neural network model by using the identified one or more reference models.

According to an embodiment of the disclosure, the obtaining of the neural network model corresponding to the image quality of the input image and the viewing information related to the input image may include identifying one or more reference models from among the plurality of reference models by comparing a quality value corresponding to the plurality of reference models with the quality value of the input image, and obtaining the neural network model by using the identified one or more reference models.

According to an embodiment of the disclosure, the obtaining of the neural network model by using the identified one or more reference models may include, based on a plurality of reference models being identified, applying a weight to each of the identified plurality of reference models, and obtaining the neural network model by performing weighted sum on each of the identified plurality of reference models to which the weight is applied. The weight may be determined based on a difference between a quality value corresponding to a reference model and the quality value of the input image.

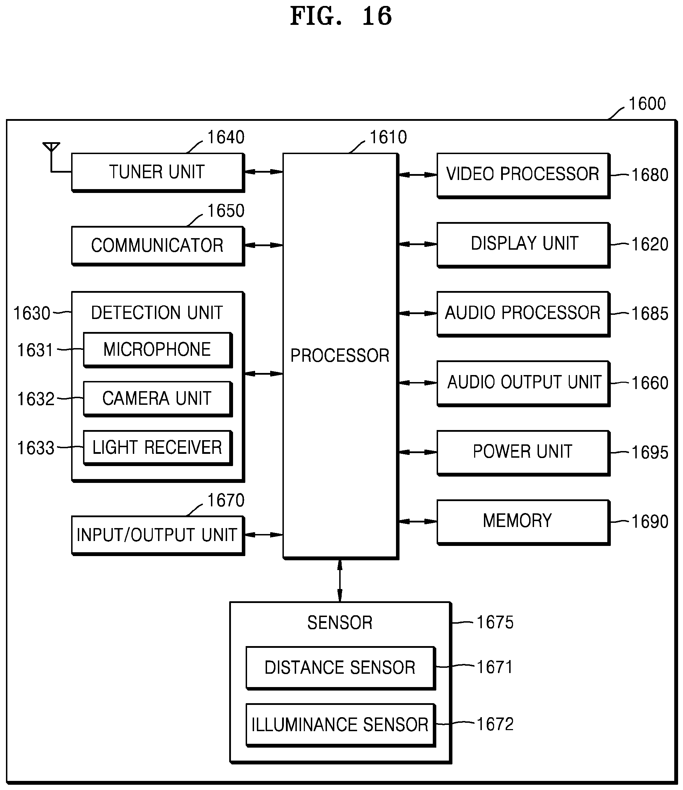

FIG. 16 is a block diagram illustrating a configuration of an image processing device according to an embodiment of the disclosure.

An image processing device 1600 of FIG. 16 may be an example of the image processing device 100 of FIG. 1.

Referring to FIG. 16, the image processing device 1600 according to an embodiment of the disclosure may include a tuner unit 1640, a processor 1610, a display unit 1620, a communicator 1650, a detection unit 1630, an input/output unit 1670, a sensor 1675, a video processor 1680, an audio processor 1685, an audio output unit 1660, a memory 1690, and a power unit 1695.

The communicator 1650 of FIG. 16 may correspond to the communicator 103 of FIG. 15, the processor 1610 of FIG. 16 may correspond to the processor 101 of FIG. 15, and the memory 1690 of FIG. 16 may correspond to the memory 102 of FIG. 15. Thus, the same content as described above is omitted.

The display unit 1620 according to an embodiment of the disclosure may generate a driving signal by converting image signals, data signals, on-screen display (OSD) signals, and control signals processed by the processor 1610. The display unit 1620 may be implemented as a plasma display panel (PDP), a liquid-crystal display (LCD), an organic light-emitting diode (OLED), a flexible display, or the like, and may also be implemented as a three-dimensional (3D) display. Also, the display unit 1620 may be configured as a touch screen and used as an input device as well as an output device.

The tuner unit 1640 according to an embodiment of the disclosure may select a broadcast signal received by wire or wirelessly by tuning only a frequency of a channel to be received from the image processing device 1600 via amplification, mixing, resonance, or the like from among many radio wave components. The broadcast signal may include audio, video, and auxiliary information (e.g., an electronic program guide (EPG)).

The tuner unit 1640 may receive broadcast signals from various sources such as terrestrial broadcasting, cable broadcasting, satellite broadcasting, Internet broadcasting, etc. The tuner unit 1640 may also receive broadcasting signals from sources such as analog broadcasting or digital broadcasting.

The communicator 1650 according to an embodiment of the disclosure may receive control signals or control commands from an external control device. For example, the communicator 1650 may include an infrared (IR) module capable of transmitting and receiving signals to and from an external control device according to an IR communication standard. In detail, the communicator 1650 may receive, from a control device, a control signal or control command corresponding to a user input (e.g., a key or button input of the control device, or the like). The image processing device 1600 according to an embodiment of the disclosure may be connected to a network via the communicator 1650, and thus, may be connected to a streaming server.

The detection unit 1630 according to an embodiment of the disclosure may detect a user's voice, a user's image, or a user's interaction, and may include a microphone 1631, a camera unit 1632, and a light receiver 1633.

The microphone 1631 may receive a user's uttered voice. The microphone 1631 may convert the received voice into an electrical signal and may output the converted voice to the processor 1610. For example, the user's voice may include a voice corresponding to a menu or function of the image processing device 1600. For example, the microphone

1631 may receive a user's voice corresponding to a display rotation command, may convert the received voice into an electrical signal, and may output the converted voice to the processor 1610.

The camera unit 1632 may receive an image (e.g., sequential frames) corresponding to a user's motion, including gestures, within a camera recognition range. The processor 1610 may select a menu displayed on the image processing device 1600 by using a recognition result of the received motion, or may perform control corresponding to the motion recognition result. For example, the processor 1610 may receive an image from the camera unit 1632 and recognize a user's motion corresponding to a rotation of the display from the received image, and may rotate the display in response thereto.

The light receiver 1633 may receive optical signals (including control signals) received from an external control device via a light window of a bezel of the display unit 1620. The light receiver 1633 may receive an optical signal corresponding to a user input (e.g., touch, press, touch gesture, voice, or motion) from the control device. A control signal may be extracted from the received optical signal according to the control by the processor 1610.

The input/output unit 1670 according to an embodiment of the disclosure may receive video (e.g., a moving picture or the like), audio (e.g., voice, music, or the like), and auxiliary information (e.g., EPG or the like) from the outside of the image processing device 1600. The input/output unit 1670 may include any of a high-definition multimedia interface (HDMI), a mobile high-definition link (MHL), a universal serial bus (USB), a display port (DP), a thunderbolt, a video graphics array (VGA) port, an RGB port, a D-subminiature (D-SUB), a digital visual interface (DVI), a component jack, and a personal computer (PC) port. The image processing device 1600 according to an embodiment of the disclosure may be connected to a set-top box, a game console, a PC, etc. via the input/output unit 1670.

The sensor 1675 according to an embodiment of the disclosure may detect an ambient environment of the image processing device 1600. The sensor 1675 may include a distance sensor 1671 and an illuminance sensor 1672.

The distance sensor 1671 may include various sensors such as an ultrasound sensor, an infrared radiation (IR) sensor, a time of flight (ToF) sensor, etc. which are configured to detect a distance between the image processing device 1600 and a user. The distance sensor 1671 may detect a distance to a user, and may transmit sensing data to the processor 1610. The sensing data may be collected by the viewing information collector 340.

The illuminance sensor 1672 may detect an ambient illuminance. The illuminance sensor 1672 may detect an ambient brightness by detecting the amount of ambient light. The illuminance sensor 1672 may transmit the sensing data to the processor 1610. The sensing data may be collected by the viewing information collector 340.

The processor 1610 may perform functions of controlling an overall operation of the image processing device 1600 and signal flow between internal elements of the image processing device 1600, and processing data. In an example case in which there is a user input or a preset and stored condition is satisfied, the processor 1610 may execute an operating system (OS) and various applications stored in the memory 1690.

The processor 1610 may include a random-access memory (RAM) storing signals or data received from the outside of the image processing device 1600 or used as a storage area corresponding to various tasks performed in the image processing device 1600, a read-only memory (ROM) storing a control program for controlling the image processing device 1600, and a processor.

The video processor 1680 may perform processing on video data received by the image processing device 1600. The video processor 1680 may perform various image processing such as decoding, scaling, noise filtering, frame rate conversion, resolution conversion, etc. on video data.

The audio processor 1685 may perform processing on audio data. The audio processor 1685 may perform various processing such as decoding, amplification, noise filtering, etc. on the audio data. The audio processor 1685 may include a plurality of audio processing modules to process audio corresponding to a plurality of pieces of content.

The audio output unit 1660 may output audio included in the broadcast signal received via the tuner unit 1640 according to the control by the processor 1610. The audio output unit 1660 may output audio (e.g., voice or sound) received via the communicator 1650 or the input/output unit 1670. Also, the audio output unit 1660 may output audio stored in the memory 1690 according to the control by the processor 1610. The audio output unit 1660 may include at least one of a speaker, a headphone output terminal, or a Sony/Philips Digital Interface (S/PDIF) output terminal.

The power unit 1695 may supply power received from an external power source to internal elements of the image processing device 1600 according to the control by the processor 1610. Also, the power unit 1695 may supply power output from one or more batteries positioned within the image processing device 1600 to the internal elements according to the control by the processor 1610.

The memory 1690 may store various data, programs, or applications for driving and controlling the image processing device 1600 according to the control by the processor 1610. According to an embodiment, the memory 1690 may include a broadcast reception module, a channel control module, a volume control module, a communication control module, a speech recognition module, a motion recognition module, a light reception module, a display control module, an audio control module, an external input control module, a power control module, a power control module of an external device connected wirelessly (e.g., via Bluetooth), a voice DB, or a motion DB. According to an embodiment, the modules and DBs of the memory 1690 may be implemented in a software form to perform a broadcast reception control function, a

channel control function, a volume control function, a communication control function, a speech recognition function, a motion recognition function, a light reception control function, a display control function, an audio control function, an external input control function, a power control function, or a power control function of an external device connected wirelessly (e.g., via Bluetooth) in the image processing device. The processor 1610 may perform the respective functions by using these software stored in the memory 1690.

A machine-readable storage medium may be provided in the form of a non-transitory storage medium. Here, the term 'non-transitory storage medium' means that the storage medium is a tangible entity and does not include a signal (e.g., an electromagnetic wave), and the term does not distinguish that data is stored semi-permanently or temporarily on the storage medium. For example, the non-transitory storage medium may include a buffer in which data is temporarily stored.

According to an embodiment of the disclosure, the method according to various embodiments disclosed in the present document may be provided in a computer program product. The computer program product may be traded between a seller and a purchaser as a commodity. The computer program product may be distributed in the form of the machine-readable storage medium (e.g., CD-ROM), or may be distributed online (e.g., downloaded or uploaded) through an application store or directly between two user devices (e.g., smart phones). For online distribution, at least a part of the computer program product (e.g., a downloadable application) may be temporarily generated or be at least temporarily stored in a machine-readable storage medium such as a manufacturer's server, an application store's server, or a memory of a relay server.

## Claims

**1.** An image processing device (100) comprising:

at least one processor (101) including processing circuitry; and
memory (102) storing one or more instructions that, when executed by the at least one processor individually or collectively, cause the image processing device (100) to:

obtain a neural network model corresponding to a quality of a first image and viewing information related to the first image;
generate training data, based on the quality of the first image and the viewing information;
obtain a trained neural network model by training the neural network model based on the training data; and
obtain a second image based on the first image by performing a first image quality processing operation on the first image based on the trained neural network model.

**2.** The image processing device (100) of claim 1, or 2 wherein the viewing information comprises at least one of resolution information, bitrate information, encoding information, a content type, a content genre, an ambient environment, a viewing distance, or user information of the first image.

**3.** The image processing device (100) of claim 1 or 2, wherein the one or more instructions, when executed by the at least one processor (101) individually or collectively, further cause the image processing device (100) to:

obtain, based on the viewing information comprising at least one of the content type or the content genre of the first image, a training image corresponding to the content type or the content genre as first data; and
obtain an image quality degraded image as second data, the image quality degraded image being obtained by performing image quality degradation on the training image in the first data to have an image quality corresponding to a quality value of the first image, and
wherein the training data comprises the first data and the second data.

**4.** The image processing device (100) of any one of claims 1 to 3, wherein the one or more instructions, when executed by the at least one processor (101) individually or collectively, further cause the image processing device (100) to:

obtain one or more pieces of compression information based on one or more of the bitrate information, the resolution information, and the encoding information;
obtain one or more quality values based on one or more of a compression image quality, a blur image quality, and noise related to the first image; and
obtain the image quality degraded image by performing a second image quality processing operation on the first image, based on the one or more quality values and the one or more pieces of compression information.

**5.** The image processing device (100) of any one of claims 1 to 4, further comprising:

one or more sensors,
wherein the one or more instructions, when executed by the at least one processor (101) individually or collectively, further cause the image processing device (100) to:

obtain at least one of the ambient environment or the viewing distance corresponding to the viewing information via the one or more sensors;
determine a target image quality of an image, based on the at least one of ambient environment or the viewing distance; and
generate the training data by adjusting an image quality of the first image, based on the target image quality, and

wherein the target image quality of the image comprises one or more image qualities from among sharpness, brightness, a contrast, and a chroma.

**6.** The image processing device (100) of claim 3, wherein the one or more instructions, when executed by the at least one processor (101) individually or collectively, further cause the image processing device (100) to train the neural network model to allow a difference between an image output by inputting the image quality degraded image in the second data to the neural network model and the training image comprised in the first data to be a minimum.

**7.** The image processing device (100) of any one of claims 1 to 6, wherein

wherein the one or more instructions, when executed by the at least one processor (101) individually or collectively, further cause the image processing device (100) to obtain, via a plurality of reference models, a neural network model corresponding to the image quality of the first image and the viewing information with respect to the first image, and
at least one of the plurality of reference models comprises at least one of:

a first image quality processing model trained based on a plurality of training images having different quality values,
a second image quality processing model trained based on a plurality of training images corresponding to different types of content, or
a third image quality processing model trained based on a plurality of training images corresponding to different genres of content.

**8.** The image processing device (100) of claim 7, wherein the one or more instructions, when executed by the at least one processor (101) individually or collectively, further cause the image processing device (100) to:

identify one or more reference models from among the plurality of reference models by comparing a content type or a content genre corresponding to the plurality of reference models with the content type or the content genre of the first image; and
obtain the neural network model based on the one or more reference models.

**9.** The image processing device (100) of claim 7, wherein the one or more instructions, when executed by the at least one processor (101) individually or collectively, further cause the image processing device (100) to:

identify one or more reference models from among the plurality of reference models by comparing a quality value corresponding to the plurality of reference models with the quality value of the first image; and
obtain the neural network model based on the one or more reference models.

**10.** The image processing device (100) of any one of claims 1 to 9, wherein the one or more instructions, when executed by the at least one processor (101) individually or collectively, further cause the image processing device (100) to:

apply a weight to each of the plurality of reference models; and
obtain the neural network model by performing weighted sum on each of the plurality of reference models to which the weight is applied, and
the weight applied to each of the plurality of reference models is determined based on a difference between a

quality value corresponding to a respective reference model and the quality value of the first image.

**11.** An operating method of an image processing device, the operating method comprising:

obtaining a neural network model corresponding to a quality of a first image and viewing information related to the first image (210);
generating training data, based on the quality of the first image and the viewing information (220);
obtain a trained neural network model by training the neural network model based on the training data (230); and
obtaining a second image based on the first image by performing a first image quality processing operation on the first image based on the trained neural network model (240).

**12.** The operating method of claim 11, wherein the viewing information comprises at least one of resolution information, bitrate information, encoding information, a content type, a content genre, an ambient environment, a viewing distance, or user information of the first image.

**13.** The operating method of claim 11 or 12, wherein
the generating of the training data, based on the quality of the first image and the viewing information (220) comprises:

obtaining, based on the viewing information comprising at least one of the content type or the content genre of the first image, a training image corresponding to the content type or the content genre, as first data; and
obtaining an image quality degraded image as second data, the image quality degraded image being obtained by performing image quality degradation on the training image in the first data to have an image quality corresponding to a quality value of the first image, and
wherein the training data comprises the first data and the second data.

**14.** The operating method of any one of claims 11 to 13, wherein the generating of the training data, based on the quality of the first image and the viewing information (220) comprises:

obtaining one or more pieces of compression information based on one or more of among the bitrate information, the resolution information, and the encoding information;
obtaining one or more quality values based on one or more of compression image quality, a blur image quality, and noise related to the first image; and
obtaining the image quality degraded image by performing a second image quality processing operation on the first image, based on the one or more quality values and the one or more pieces of compression information.

**15.** The operating method of any one of claims 11 to 14, wherein
the generating of the training data, based on the quality of the first image and the viewing information (220) comprises:

obtaining the ambient environment or the viewing distance corresponding to the viewing information via the one or more sensors;
determining a target image quality of an image, based on the ambient environment or the viewing distance; and
generating the training data by adjusting an image quality of the first image, based on the target image quality, and
wherein the target image quality of the image comprises one or more image qualities from among sharpness, brightness, a contrast, and a chroma.

FIG. 1

INPUT IMAGE
100
OUTPUT IMAGE
110
120

FIG. 2

START
OBTAIN NEURAL NETWORK MODEL CORRESPONDING TO IMAGE QUALITY AND VIEWING INFORMATION OF INPUT IMAGE
210
GENERATE TRAINING DATA, BASED ON AT LEAST ONE OF QUALITY OR VIEWING INFORMATION OF INPUT IMAGE
220
TRAIN NEURAL NETWORK MODEL BY USING TRAINING DATA
230
OBTAIN IMAGE QUALITY PROCESSED OUTPUT IMAGE FROM INPUT IMAGE, BASED ON TRAINED NEURAL NETWORK MODEL
240
END

FIG. 3

100
330
INPUT IMAGE
IMAGE QUALITY PROCESSOR
OUTPUT IMAGE
UPDATED MODEL
320
340
MODEL TRAINING UNIT
VIEWING INFORMATION
VIEWING INFORMATION COLLECTOR
QUALITY
310
QUALITY ANALYSIS UNIT

FIG. 4

400

Input Data
Conv2D (3,3X3,32)
Conv2D (3,3X3,32)
Conv2D (32,3X3,64)
Conv2D (64,3X3,64)
Conv2D (64,3X3,128)
Conv2D (128,3X3,128)
AVG Pooling
Linear 256X1
Linear 256X1
Blur Sigma
Compression QF

# FIG. 5

500
QF
SIGMA
95
90
85
80
75
70
65
60
0.4
0.5
0.6
0.7
0.8
0.9
1

FIG. 6
610
IMAGE COMPRESSION INFORMATION
- RESOLUTION
- BITRATE
- ENCODING
620
CONTENT TYPE
- STREAMING
- BROADCASTING CHANNEL
- BLURAY DISC
- CONSOLE GAME
630
CONTENT GENRE
- NEWS
- SPORTS
- DOCUMENTARY
- VARIETY SHOW
- GAME
- MOVIE
- VIDEO CALL
640
AMBIENT ENVIRONMENT
- BRIGHTNESS (BRIGHT, DARK)
- VIEWING TIME (MORNING, AFTERNOON, EVENING, NIGHT)
- VIEWING AREA (HIGH-LATITUDE AREA, MIDDLE-LATITUDE AREA, LOW-LATITUDE AREA)
650
VIEWING DISTANCE
- VIEWING DISTANCE BETWEEN USER AND DEVICE
660
USER INFORMATION
- GENDER (MALE, FEMALE)
- RACE (CAUCASIAN, ASIAN, AFRICAN)
- AGE (TEENAGER, YOUTH, MIDDLE-AGED, SENIOR)

FIG. 7A

STREAMING
MOVIE
SPORTS
GAME
VIDEO CALL
RESOLUTION : FHD
BITRATE : 30Mbps
ENCODING : h.264

FIG. 7B

BROADCASTING CHANNEL
NEWS
SPORTS
DOCUMENTARY

FIG. 7C

TIME
(MORNING)
BRIGHTNESS
(BRIGHT)
VIEWING
DISTANCE
(SHORT)
MIDDLE-AGED

FIG. 8

320
TRAINING IMAGE DB
327
TRAINING DB GENERATOR
321
META MODEL OBTAINER
323
REFERENCE MODEL DB
329
TRANSFER TRAINING UNIT
325
UPDATED MODEL
INPUT IMAGE
VIEWING INFORMATION
QUALITY VALUE

FIG. 9A
910
External DB
VIEWING INFORMATION
(CONTENT TYPE,
CONTENT GENRE)
Correlating Patches
Store External
Patches
920
FIRST DATA
INPUT IMAGE
Store Self-Patches

FIG. 9B

VIEWING INFORMATION
(CONTENT TYPE,
CONTENT GENRE)
910
External DB
930
INPUT IMAGE
Classifier
Correlating Patches
Store External
Patches
925
FIRST DATA
Store Self-Patches

FIG. 10A
340
VIEWING INFORMATION COLLECTOR
BITRATE, RESOLUTION, ENCODING QUALITY
1010
SECOND DATA
310
QUALITY ANALYSIS UNIT
Kernel Sigma, Compression Quality, Noise etc.
920
FIRST DATA
Compressing
Blurring
Down sampling
Adding Noise

FIG. 10B

340
VIEWING INFORMATION COLLECTOR
SHARPNESS, BRIGHTNESS, CONTRAST, CHROMA
920
FIRST DATA
Adjusting
1020
SECOND DATA

# FIG. 11

JPEG compression
1110
Color space conversion
Subsampling
DCT
Quantization
Encoding
Raw image data
JPEG-compressed image data
Inverse color space conversion
Inverse subsampling
Inverse DCT
Dequantization
Decoding
JPEG decompression

FIG. 12

y
QUALITY FACTOR 1
Pt1
Pt2
INPUT
QUALITY
y1
y2
Pt3
Pt4
x
x1
x2
QUALITY FACTOR 2

# FIG. 13

y
QUALITY FACTOR 1
Pt1
Pt2
y1
INPUT
QUALITY
y2
Pt3
Pt4
Pt5
x
x1
x2
QUALITY FACTOR 2
z1
z2
z
VIEWING INFORMATION
(CONTENT CHARACTERISTIC)

# FIG. 14

320a
TRAINING IMAGE DB
327
TRAINING DB GENERATOR
321
META MODEL OBTAINER
323
REFERENCE MODEL DB
329
TRANSFER TRAINING UNIT
325
MODEL STABILIZER
326
UPDATED MODEL
INPUT IMAGE
VIEWING INFORMATION
QUALITY VALUE

FIG. 15

100
IMAGE PROCESSING DEVICE
102
MEMORY
101
PROCESSOR
103
COMMUNICATOR

# FIG. 16

1600
1640
TUNER UNIT
1610
VIDEO PROCESSOR
1680
1650
COMMUNICATOR
DISPLAY UNIT
1620
1630
DETECTION UNIT
AUDIO PROCESSOR
1685
1631
MICROPHONE
PROCESSOR
AUDIO OUTPUT UNIT
1660
1632
CAMERA UNIT
1633
LIGHT RECEIVER
POWER UNIT
1695
1670
INPUT/OUTPUT UNIT
MEMORY
1690
SENSOR
1675
DISTANCE SENSOR
1671
ILLUMINANCE SENSOR
1672

## INTERNATIONAL SEARCH REPORT

International application No. **PCT/KR2024/014610**

**A. CLASSIFICATION OF SUBJECT MATTER**

**G06T 3/4053**(2024.01)i; **H04N 21/45**(2011.01)i; **G06N 3/08**(2006.01)i

According to International Patent Classification (IPC) or to both national classification and IPC

**B. FIELDS SEARCHED**

Minimum documentation searched (classification system followed by classification symbols)

G06T 3/4053(2024.01); A61B 6/00(2006.01); G06N 20/00(2019.01); G06N 3/04(2006.01); G06N 3/08(2006.01); G06T 1/00(2006.01); H04N 21/422(2011.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 화질(image quality), 신경망(neural network), 학습(learning), 해상도(resolution), 비트레이트(bitrate), 장르(genre), 주변 환경(surrounding environment), 가중치(weighting), 차이(difference), 최소(minimum)

**C. DOCUMENTS CONSIDERED TO BE RELEVANT**

| Category* | Citation of document, with indication, where appropriate, of the relevant passages | Relevant to claim No. |
|---|---|---|
| X | KR 10-2072106 B1 (SK TELECOM CO., LTD.) 31 January 2020 (2020-01-31) See paragraphs [0004], [0009], [0021], [0025] and [0031]; and claims 1-2. | 1-9,11-15 |
| Y | | 10 |
| Y | KR 10-2023-0120325 A (SAMSUNG ELECTRONICS CO., LTD.) 17 August 2023 (2023-08-17) See claim 1. | 10 |
| A | JP 2020-166813 A (CANON INC.) 08 October 2020 (2020-10-08) See claims 1-11. | 1-15 |
| A | KR 10-2270818 B1 (INDUSTRY FOUNDATION OF CHONNAM NATIONAL UNIVERSITY) 29 June 2021 (2021-06-29) See claims 1, 3 and 5. | 1-15 |

☑ Further documents are listed in the continuation of Box C. ☑ See patent family annex.

* Special categories of cited documents:

- "A" document defining the general state of the art which is not considered to be of particular relevance
- "D" document cited by the applicant in the international application
- "E" earlier application or patent but published on or after the international filing date
- "L" document which may throw doubts on priority claim(s) or which is cited to establish the publication date of another citation or other special reason (as specified)
- "O" document referring to an oral disclosure, use, exhibition or other means
- "P" document published prior to the international filing date but later than the priority date claimed
- "T" later document published after the international filing date or priority date and not in conflict with the application but cited to understand the principle or theory underlying the invention
- "X" document of particular relevance; the claimed invention cannot be considered novel or cannot be considered to involve an inventive step when the document is taken alone
- "Y" document of particular relevance; the claimed invention cannot be considered to involve an inventive step when the document is combined with one or more other such documents, such combination being obvious to a person skilled in the art
- "&" document member of the same patent family

| Date of the actual completion of the international search | Date of mailing of the international search report |
|---|---|
| **06 January 2025** | **06 January 2025** |

| Name and mailing address of the ISA/KR | Authorized officer |
|---|---|
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

INTERNATIONAL SEARCH REPORT

International application No.
**PCT/KR2024/014610**

**C. DOCUMENTS CONSIDERED TO BE RELEVANT**

| Category* | Citation of document, with indication, where appropriate, of the relevant passages | Relevant to claim No. |
|---|---|---|
| A | KR 10-2023-0009806 A (SAMSUNG ELECTRONICS CO., LTD.) 17 January 2023 (2023-01-17) See claims 1-9. | 1-15 |

Form PCT/ISA/210 (second sheet) (July 2022)

**INTERNATIONAL SEARCH REPORT**
**Information on patent family members**

International application No.
**PCT/KR2024/014610**

| Patent document cited in search report | Publication date (day/month/year) | Patent family member(s) | Publication date (day/month/year) |
|---|---|---|---|
| KR 10-2072106 B1 | 31 January 2020 | None | |
| KR 10-2023-0120325 A | 17 August 2023 | US 2024-0404004 A1 | 05 December 2024 |
| | | WO 2023-153726 A1 | 17 August 2023 |
| JP 2020-166813 A | 08 October 2020 | JP 2019-216848 A | 26 December 2019 |
| | | JP 2020-058629 A | 16 April 2020 |
| | | JP 2020-163100 A | 08 October 2020 |
| | | JP 2020-166814 A | 08 October 2020 |
| | | JP 2022-145732 A | 04 October 2022 |
| | | JP 2023-017051 A | 02 February 2023 |
| | | JP 2024-025807 A | 26 February 2024 |
| | | JP 2024-045479 A | 02 April 2024 |
| | | KR 10-2507711 B1 | 10 March 2023 |
| | | US 11842470 B2 | 12 December 2023 |
| | | US 11880960 B2 | 23 January 2024 |
| | | US 11887288 B2 | 30 January 2024 |
| | | US 11922601 B2 | 05 March 2024 |
| | | US 12040079 B2 | 16 July 2024 |
| | | US 2021-0104313 A1 | 08 April 2021 |
| | | US 2021-0224957 A1 | 22 July 2021 |
| | | US 2021-0390696 A1 | 16 December 2021 |
| | | US 2021-0398259 A1 | 23 December 2021 |
| | | US 2024-0321435 A1 | 26 September 2024 |
| | | WO 2019-240257 A1 | 19 December 2019 |
| | | WO 2020-075345 A1 | 16 April 2020 |
| | | WO 2020-183791 A1 | 17 September 2020 |
| | | WO 2020-183799 A1 | 17 September 2020 |
| KR 10-2270818 B1 | 29 June 2021 | None | |
| KR 10-2023-0009806 A | 17 January 2023 | EP 4365821 A1 | 08 May 2024 |
| | | US 2024-0144455 A1 | 02 May 2024 |
| | | WO 2023-282703 A1 | 12 January 2023 |

Form PCT/ISA/210 (patent family annex) (July 2022)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Non-patent literature cited in the description


- Zero-Shot Super-Resolution using Deep Internal Learning. *ZSSR, CVPR 2018*
- *Zero-Shot Super Resolution (ZSSR)*
- Fast Adaptation to Super-Resolution Networks via Meta-Learning. *MetaSR, ECCV*, 2021